Europäisches Patentamt

European Patent Office

Office européen des brevets

(19)

(11) Publication number: **0 361 847 B1**

(12) **EUROPEAN PATENT SPECIFICATION**

(45) Date of publication of patent specification: **29.11.95**   (51) Int. Cl.[6]: **B29C 39/42**

(21) Application number: **89309762.6**

(22) Date of filing: **26.09.89**

Divisional application 95107869.0 filed on 26/09/89.

(54) **Recoating of stereolithographic layers.**

(30) Priority: **26.09.88 US 249399**
**31.10.88 US 265039**

(43) Date of publication of application:
**04.04.90 Bulletin 90/14**

(45) Publication of the grant of the patent:
**29.11.95 Bulletin 95/48**

(84) Designated Contracting States:
**AT BE CH DE ES FR GB GR IT LI LU NL SE**

(56) References cited:
**EP-A- 0 250 121**
**US-A- 4 575 330**

**PATENT ABSTRACTS OF JAPAN, vol. 10, no. 301 (M-525)[2357], 14th October 1986; & JP-A-61 114 818 (FUJITSU LTD) 02-06-1986**

**PATENT ABSTRACTS OF JAPAN, vol. 11, no. 221 (M-608)[2668], 17th July 1987; & JP-A-62 37 109 (FUJITSU LTD) 18-02-1987**

(72) Inventor: **Almquist, Thomas A.**
**9035 Duarte Road, 5**
**San Gabriel**
**California 91775 (US)**
Inventor: **Hull, Charles W.**
**28155 North Tamarack Lane**
**Santa Clarita**
**California 91350 (US)**
Inventor: **Modrek, Borzo**
**1640 Neil Armstrong, 306**
**Montebello**
**California 90640 (US)**
Inventor: **Serkuczewski, Andrzej R.**
**26174 North Rainbow Glen**
**Newhall**
**California 91321 (US)**
Inventor: **Jacobs, Paul F.**
**5347 Pineridge Drive**
**La Crescenta**
**California 91214 (US)**
Inventor: **Lewis, Charles W.**
**3930 Cody Road**
**Sherman Oaks**
**California 91403 (US)**

(73) Proprietor: **3D SYSTEMS, INC.**
**26081 Avenue Hall**
**Valencia**
**California 91355 (US)**

EP 0 361 847 B1

Rank Xerox (UK) Business Services
(3.10/3.09/3.3.3)

Inventor: **Lewis, Mark A.**
**27624 Sycamora Creek**
**Valencia**
**California 91355 (US)**
Inventor: **Liran, Abraham**
**18619 Vincennes Street**
**Northridge**
**California 91324 (US)**
Inventor: **Smalley, Dennis R.**
**14131 Los Angeles Street**
**Baldwin Park,**
**California 91766 (US)**
Inventor: **Cohen, Adam L.**
**15301 Valley Vista Boulevard,**
**Apartment No. 301**
**Sherman Oaks,**
**California 91403 (US)**

(74) Representative: **Frohwitter, Bernhard,**
**Dipl.-Ing.**
**Patent- und Rechtsanwälte**
**Bardehle . Pagenberg . Dost . Altenburg .**
**Frohwitter . Geissler & Partner**
**Galileiplatz**
**1**
**D-81679 München (DE)**

**Description**

Background of the Invention

This invention relates generally to an improved stereolithography method and system for the production of three-dimensional objects.

In recent years, "stereolithography" systems, such as those described in U.S. Patent No. 4,575,330 entitled "APPARATUS FOR PRODUCTION OF THREE-DIMENSIONAL OBJECTS BY STEREOLITHOGRAPHY" have come into use. Basically, stereolithography is a method for automatically building complex three-dimensional plastic parts by successively curing a plurality of thin layers of polymerizable liquid on top of each other until all of the thin layers are joined together to form a whole part. Each polymerized layer is in essence a thin cross section of the desired three-dimensional object. With this technology, the parts are literally grown in a vat of liquid plastic. This method of fabrication is extremely powerful for quickly reducing design ideas to physical form and for making prototypes. Moreover, complex parts can be made quickly without tooling. Because the system uses a computer to generate the cross section of patterns, the system can be readily linked to CAD/CAM systems.

Presently preferred polymers are cured by ultraviolet (UV) light and their curing is fast enough to make them practical model building materials. The liquid that is not polymerized when a part is made is still usable and remains in the vat as successive parts are made. An ultraviolet laser generates a small intense spot of UV which is moved across the liquid surface with a galvanometer mirror X-Y scanner in a predetermined pattern. The scanner is driven by computer generated vectors or the like. Precise complex patterns can be rapidly produced with this technique.

The stereolithography system includes a laser scanner, a vat or tank for containing the polymerizable liquid, and an object support platform, which is capable of being raised and lowered in the tank, and a controlling computer. The system is programmed to automatically make a plastic part by forming one thin cross section at a time and building the desired three-dimensional object up layer by layer.

In typical stereolithographic procedures, a thin layer of viscous curable plastic liquid is applied to a surface which may be a previously cured layer and, after sufficient time has elapsed for the thin layer of polymerizable liquid to smooth out by gravity, a computer controlled beam of radiation is moved across the thin liquid layer to sufficiently cure the plastic liquid so that subsequent layers can be applied thereto. The waiting period for the thin layer to level varies depending on several factors such as viscosity of the polymerizable liquid, the layer thickness, and the like.

Typically, the cured layer, which is supported on a vertically movable object support platform, is dipped below the surface of a bath of the viscous polymerizable liquid a distance equal to the desired layer thickness so that the liquid plastic can flow over the cured layer. When the surface levels, the layer is ready for curing by radiation.

For further details of stereolithography, reference is made to U.S. Patent 4,575,330 and the following pending U.S. patent applications which are incorporated herein by reference in their entirety, including appendices attached thereto or material incorporated therein by reference, as if fully set forth:

U.S. Patent Application Serial No. 339,246, filed April 17, 1989, entitled "STEREOLITHOGRAPHIC CURL REDUCTION";

U.S. Patent Application Serial No. 331,664, filed March 31, 1989, entitled "METHOD AND APPARATUS FOR PRODUCTION OF HIGH RESOLUTION THREE-DIMENSIONAL OBJECTS BY STEREOLITHOGRAPHY";

U.S. Patent Application Serial No. 183,015, filed April 18, 1988, entitled "METHOD AND APPARATUS FOR PRODUCTION OF THREE-DIMENSIONAL OBJECTS BY STEREOLITHOGRAPHY"

U.S. Patent Application Serial No. 182,801, filed April 18, 1988, entitled "METHOD AND APPARATUS FOR PRODUCTION OF THREE-DIMENSIONAL OBJECTS BY STEREOLITHOGRAPHY";

U.S. Patent Application Serial No. 268,429, filed November 8, 1988, entitled "METHOD FOR CURING PARTIALLY POLYMERIZED PARTS";

U.S. Patent Application Serial No. 268,428, filed November 8, 1988, entitled "METHOD FOR FINISHING PARTIALLY POLYMERIZED PARTS";

U.S. Patent Application Serial No. 268,408, filed November 8, 1988, entitled "METHOD FOR DRAINING PARTIALLY POLYMERIZED PARTS";

U.S. Patent Application Serial No. 268,816, filed November 8, 1988, entitled "APPARATUS AND METHOD FOR PROFILING A BEAM";

U.S. Patent Application Serial No. 268,907, filed November 8, 1988, entitled "APPARATUS AND METHOD FOR CORRECTING FOR DRIFT IN PRODUCTION OF OBJECTS BY STEREOLITHOGRAPHY";

U.S. Patent Application Serial No. 268,837, filed November 8, 1988, entitled "APPARATUS AND METHOD FOR CALIBRATING AND NORMALIZING A STEREOLITHOGRAPHIC APPARATUS";

U.S. Patent Application Serial No. 249,399, filed September 26, 1988, entitled "METHOD AND APPARATUS FOR PRODUCTION OF THREE-DIMENSIONAL OBJECTS BY STEREOLITHOGRAPHY";

U.S. Patent Application Serial No. 365,444, filed June 12, 1989, entitled "INTEGRATED STEREOLITHOGRAPHY"; and

U.S. Patent Application Serial No. 265,039, filed October 31, 1988, entitled "APPARATUS AND METHOD FOR MEASURING AND CONTROLLING THE LEVEL OF A FLUID".

From EP-A-0 250 121 a stereolithographic apparatus is known wherein a modulated and deflected beam from a light source impinges on a layer of a liquid resin lying in a particular solidification plane. The liquid resin is located in a container which is typically supported on a container positioning mechanism and associated with a resin supply apparatus and a layer fixing mechanism. Each time a layer is solidified by the deflected light beam, the container positioning mechanism is lowered such that the solidification plane, which is fixed, lies at successively higher locations with respect to the container. Through a feed line connected to the resin supply apparatus an amount of liquid resin is supplied sufficient to provide for a coating on previously solidified layers having the desired layer thickness.

From the US-A-4 247 508 a laser sinter apparatus is known in which fusible particles are employed to form layers. Each particle layer is selectively fused by a laser beam, to fuse an area which defines the respective portion of the article in the layer. After one layer is selectively fused, another layer will be added to the top thereof and selectively fused thereafter, such that the particle will be built up in layers, the fused portion of one layer fusing onto a portion of the prior layer. The apparatus used comprises a container having a bottom which is movable vertically within the walls of the container. An upper window is provided having a thickness which defines the thickness of each layer. Initially, the bottom of the container will be located at the level of the lower edge of the window. An amount of fusable particles will be located in the window on the bottom and then wiped by a wiping member to a thinner layer, level with the top of the window. After the layer has been selectively fused by the laser beam, the bottom is moved downward a distance corresponding to the thickness of the window and a second layer of particles is deposited on the first layer. This process is repeated until the solid article is formed.

From prior art document JP-A-61-114 818 (forming the preamble of claims 1 and 24, respectively) a stereolithographic apparatus is known wherein an optical thermo-setting resin is gradually supplied into a resin container and selectively hardened by a laser beam. The used system comprises a resin container in which a smoothing member is placed, the length of which is equal to either the length or width of the container. The smoothing member is horizontally moved across the surface of the liquid resin which has been supplied to the container from a separate resin supply mechanism. The smoothing member has been added in order to reduce the period of time necessary to obtain a flat resin surface. The resin is supplied from the resin supply mechanism for recoating previously cured layers. Due to the high viscosity of the resin, this recoating time is considerably long increasing the production time of the three-dimensional part to be produced.

In view of the above-discussed drawbacks of the prior art, it is the object of the present invention to reduce the cycle time for forming level layers of liquid resin in an efficient and simple fashion.

This object is solved by a method for stereolithographically forming a three-dimensional object in accordance with claim 1 and an apparatus for stereolithographically forming a three-dimensional object in accordance with claim 21.

Preferred embodiments of the present invention are:

In one preferred embodiment, an object support platform, having a surface on which the layers are applied, is provided and is adapted to be raised and lowered in a bath of the polymerizable liquid in a vat or tank. The platform is lowered into the bath so that a surface thereon, which may be the last-cured layer, is beneath the upper surface of the polymerizable liquid bath a distance generally greater than the desired thickness of the layer. The platform is then raised so that the viscous polymerizable liquid on the surface is above the upper surface of the bath. A horizontally moving doctor blade strikes off excess polymerizable liquid so that a liquid layer of polymer of the desired thickness is formed. The platform is then lowered so that the upper surface of the smoothed layer of the polymerized liquid is at essentially the same level as the bath. Curing radiation is then directed to the smoothed layer in a graphic pattern thereon to cure the thin liquid layer so that one or more subsequent layer of the polymerizable liquid can be applied thereon. The object support platform with the partially cured solid layer thereon is then lowered further away from the surface of the bath so that polymerizable liquid can flow onto the solid layer and the cycle repeated.

The process continues with the formation of a plurality of successively formed layers with these layers bonded together until the desired three-dimensional object has been formed. The final product of the stereolithography must have sufficient strength for subsequent handling. Usually, the object is given a final cure after forming.

Care should be exercised during the procedures to ensure that the level of polymerizable liquid in the bath is maintained at a constant level, particularly when the leveled layer of polymerizable liquid is lowered into the bath and cured by radiation, because the liquid in the bath in essence forms the boundaries of leveled layers of liquid. In a presently preferred embodiment, the bath level is sensed in a suitable manner, one level compared to the desired level, and in response to any differences therein a piston or plunger in the bath is raised or lowered in the bath to control the level at the desired set point.

The three-dimensional object is formed one horizontal layer at a time by moving a radiation beam such as ultraviolet light from a helium-cadmium laser across the surface of the photon-curable resin, solidifying the liquid where it strikes. Absorption in the resin prevents the laser light from penetrating deeply and allows a thin layer to be formed.

The present invention also provides a new and improved apparatus for measuring the level of a fluid, comprising a means for generating a beam of electromagnetic radiation and a sensor that varies an electrical signal in response to changes in the position of the electromagnetic beam impinging on the sensor. The beam sensor is mounted at a distance perpendicular to the level of the fluid. The beam is directed along a first optical path (the term "optical path" is used although the beam need not be of visible light) toward the surface of the fluid, at an angle with respect to the surface of the fluid, so that a detectable portion of the beam is reflected from the surface of the fluid along a second optical path to the sensor. Changes in the level of the fluid will change the point at which the beam impinges on the sensor and will thus cause variations in the electrical signal from the sensor. This signal may be used to control devices which in turn control the level of the fluid, such as pumps, diaphragms, or plungers.

The surface of the fluid is presumed to be flat or to remain at the same angle with respect to the beam even though the height of the surface of the fluid may vary. Accordingly, the angle at which the beam is reflected from the surface of the fluid will not vary. If the surface is not flat, the beam may not be reflected or may reflect at unpredictable angles. If waves or turbulence are expected, then a mirrored float which is weighted to prevent yawing, pitching, and rolling may be placed on the surface of the fluid to reflect the beam.

In a preferred embodiment, the means for generating a beam of electromagnetic radiation is a laser and the sensor is a plurality of linked photocells displaced from the surface of the fluid along a direction perpendicular to the surface of the fluid. The radiation from the laser preferably should not alter the state of the fluid. Electronic circuits are provided to compare the electrical output of each of the photocells and thus detect movements in the position of the beam as it impinges upon the photocells. When the level of the fluid changes, the beam will no longer impinge on the photocells at the same place. One photocell will receive more of the beam than before and another less than before. This will change the electrical output from each of the photocells affected. A comparison circuit will detect this difference and drive either an instrument displaying the level of the fluid or a device for changing the level of the fluid (such as a plunger) or both.

The apparatus for measuring the level of the fluid of the present invention is swift, reliable, and very sensitive. It is capable of very precisely determining the level of the fluid and consequently maintaining that level very precisely. At the present, apparatus for measuring the level of a fluid made according to the invention can measure (and maintain) the level of a fluid to at least within plus or minus 0.0127 mm (0.5 mil (plus or minus .0005 inches)).

In sum, the stereolithography method and system of the present invention provides for a considerable reduction in cycle time for each layer formed, improvements in dimensional accuracy, and increases in green strength and final cured strength. Moreover, the level measuring and controlling apparatus of the present invention satisfies a long existing need for a system capable of rapidly, reliably, and accurately measuring the level of a fluid.

The above and other objects and advantages of this invention will be apparent from the following more detailed description when taken in conjunction with the accompanying drawings of illustrative embodiments.

Brief Description of the Drawings

FIG. 1 is a cross-sectional view of a stereolithography system embodying features of the invention;

FIG. 2 is a perspective view of the system shown in FIG. 1 further illustrating the embodiment shown in FIG. 1;

FIGS. 3-6 are simplified cross-sectional views of the tank shown in FIG. 1 at various stages of the stereolithography procedure;

FIG. 7 is a perspective view of a three-dimensional object which has been made in accordance with the present invention;

FIG. 8 is a perspective view of a portion of a stereolithographic apparatus with a preferred embodiment of the fluid level measuring apparatus of the present invention mounted thereon;

FIG. 9 is a side elevational view of the preferred embodiment of the invention;

FIG. 10 is a side elevational view of the optical paths taken by the laser beam of the preferred embodiment of the invention under conditions of changing fluid level and angle of incidence;

FIG. 11 is a front elevational view of a bi-cell photo sensor used in the preferred embodiment of the invention;

FIG. 12 is a block diagram of the electronics associated with the bi-cell photosensor of the preferred embodiment of the invention;

FIG. 13 illustrates the trapped volume problem;

FIG. 14 illustrates threaded, retractable pins for setting the blade gap;

FIG. 15 provides a close-up view of the pin mounted in the blade;

FIG. 16 illustrates a cross-section of a blade having an angle of attack in the direction of blade movement;

FIGS. 17-19 illustrate alternative cross-sectional shapes for the blade of FIG. 16;

FIG. 20 illustrates an alternative shape for a level-detecting float;

FIG. 21 illustrates a level detecting apparatus including a float;

FIG. 22 is a diagram of the optical detector of the apparatus of FIG. 21; and

FIG. 23 is a flowchart of the recoating software used in the SLA-250.

Detailed Description of the Invention

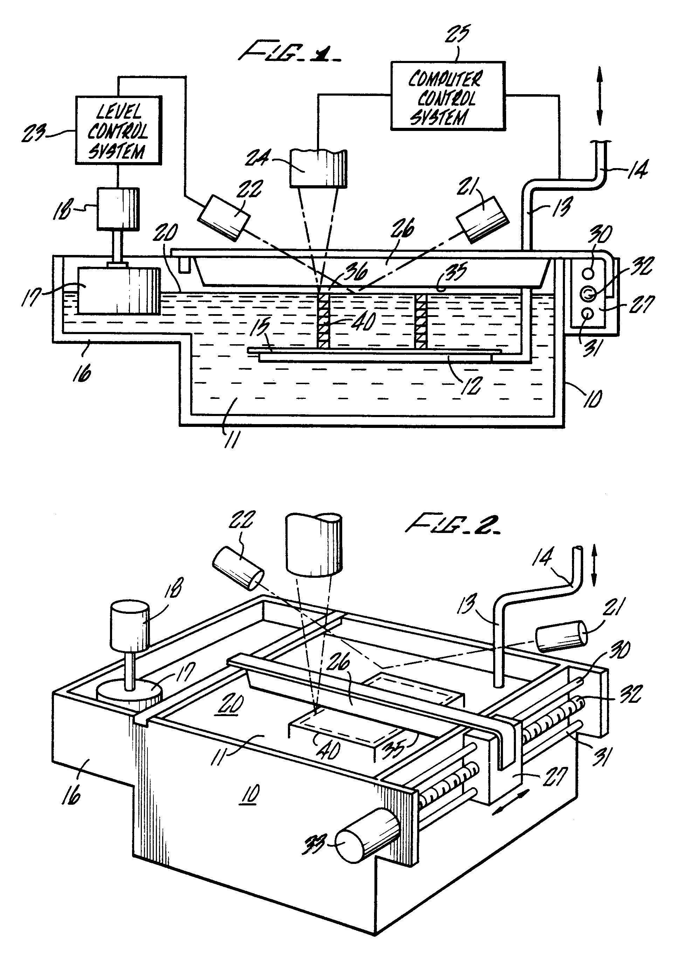

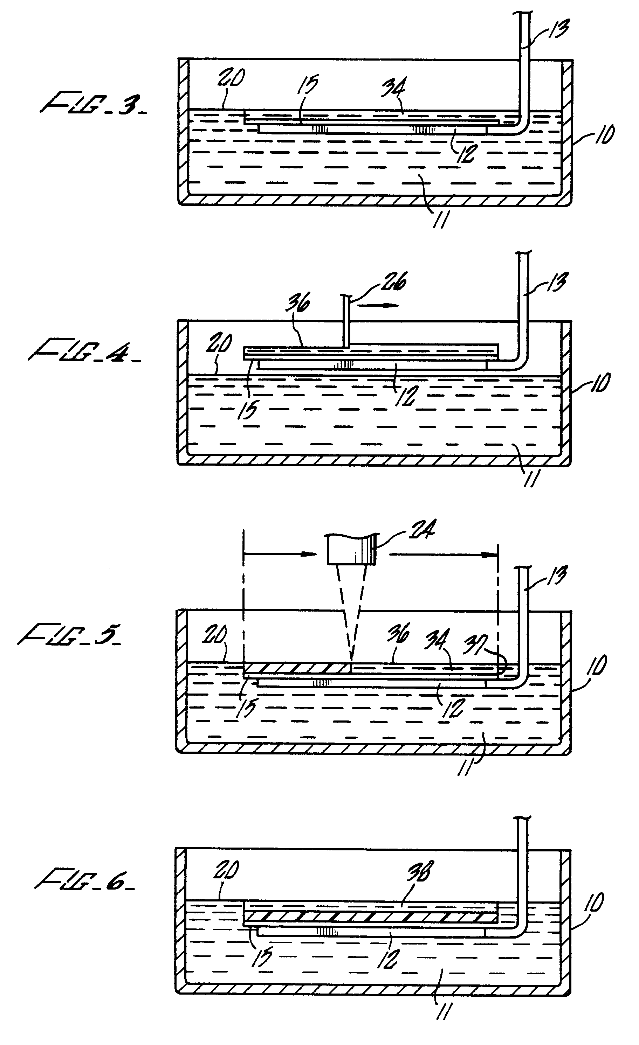

FIGS. 1 and 2 schematically illustrate the stereolithography system for forming three-dimensional objects which embodies features of the invention. As shown in these drawings, tank or vat 10 is provided to contain a bath 11 of polymerizable fluid. An object support platform 12 is disposed within the tank 10 and is adapted by frame elements 13 and 14 to be raised and lowered within the tank by a motor (not shown). The platform 12 has a horizontal surface 15 on which the three-dimensional objects are formed in accordance with the invention. The tank 10 has a trough 16 in the upper portion of one sidewall of tank 10 and a plunger or piston 17 is disposed within the trough to be raised and lowered by motor 18 to control the level of the upper surface 20 of polymerizable liquid within the tank 10.

The level of the upper surface 20 of the bath 11 is detected by means of a radiation source 21 such as an HeNe laser, which is directed toward the upper surface 20 at an angle and radiation sensor 22 which may be a bi-celled detector. The position of the sensor 22 is adjusted to be at a complementary angle with respect to the upper surface 20 so as to receive the radiation from the HeNe laser. A control system 23 is provided to control the movement of the plunger 17 by motor 18.

A computer controlled radiation source 24 is disposed above the bath 11 to direct curing media, such as ultraviolet radiation or other types of curing radiation, in a predetermined pattern across the upper surface 20 of the bath 11 in order to cure the polymerizable liquid in the layer above the platform where such radiation impacts thereon. The movement and operation of the radiation source 24 and raising and lowering of the object support platform 12 are integral parts of the computer control 25 of the system as will be further described hereinafter.

A doctor blade 26 is mounted on the top of the tank 10 and is adapted to move horizontally across the top of the tank. A blade support 27 is slidably mounted on rails 30 and 31 disposed along one side of the tank 10. A threaded drive shaft 32 passes through a threaded passageway (not shown) in the blade support 27 and rotation thereof by motor 33 moves the blade support 27 and thus the blade 26 horizontally across the top of the tank 10.

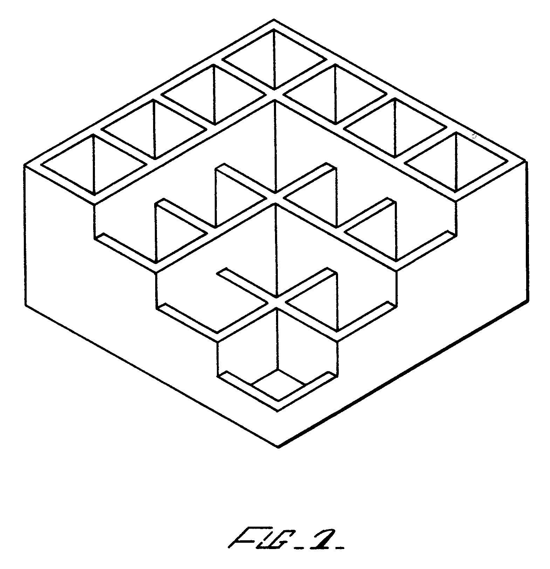

The operation of the stereolithography system shown in FIGS. 1 and 2 is best shown in the sequence of FIGS. 3-6. Starting with FIG. 3 the stereolithography procedure is initiated with the object support platform 12 being positioned within the bath 11 of polymerizable liquid so that the horizontal surface 15 thereon is located a short distance from the upper surface 20 of the bath. This distance is greater than the desired thickness of the layer of polymerizable liquid to be cured. The layer of polymerizable liquid immediately above the surface 15 will form the first solid layer of the three-dimensional object when cured.

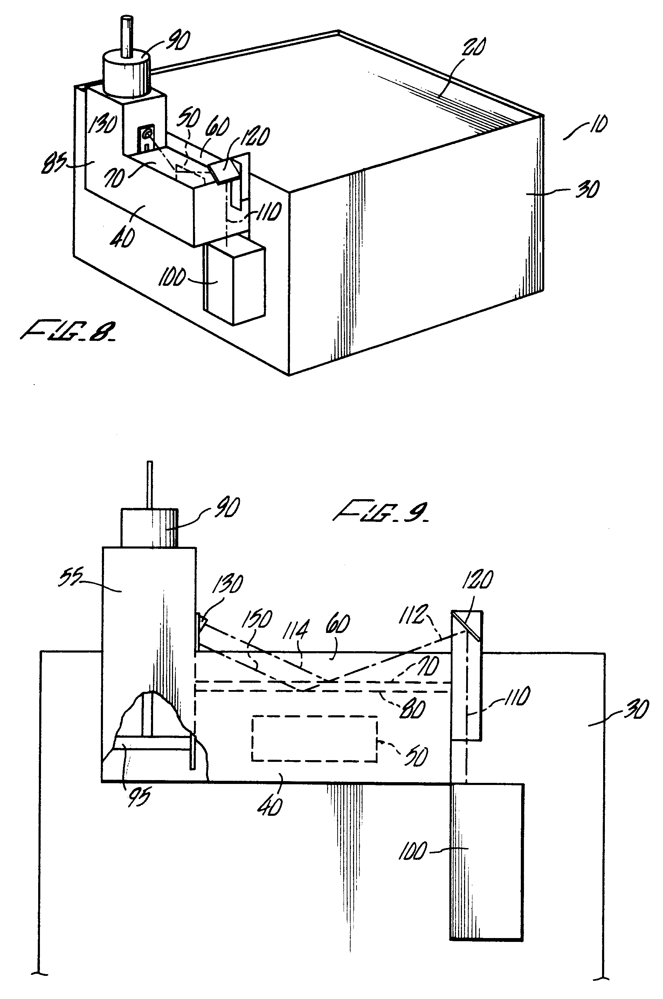

The next step in the process is shown in FIG. 4. The object support platform 12 is raised so that the layer 34 of polymerizable liquid on the surface 15 is held above the upper surface 20 of the bath 11. The polymerizable liquid is relatively viscous fluid so the liquid does not immediately run off the edges of the surface 15 on platform 12 when the layer is raised out of the bath. Doctor blade 26 is moved horizontally so that the lower edge 35 thereof strikes off excess polymerizable liquid from the layer 34 and thereby smooths the upper or working surface 36. Suitable blade speeds are empirically determined to provide a desired level to the working surface 36. Moreover, one or more passes by the doctor blade 26 may be needed at a particular speed to provide a smooth level surface 34. Typical blade speeds may range from about one to ten inches per second. When low viscosity polymerizable liquids are used, peripheral dams may be employed to contain the liquid until it is polymerized.

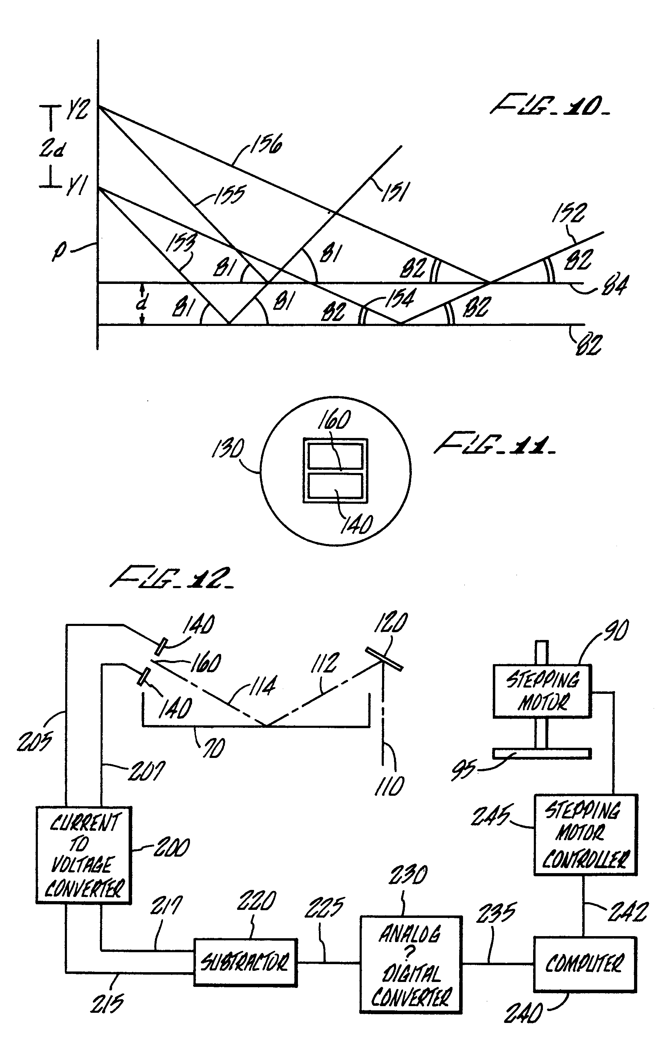

After the working surface 36 of layer 34 is leveled by the doctor blade 26, the object support platform 12 is lowered into the bath 11 as shown in FIG. 5 so that the smoothed working surface 36 of the layer 34 is level with or in the same horizontal plane as the upper surface 20 of the bath 11. The polymerizable fluid of the bath 11 which surrounds the layer 34 forms an interface 37 which is in essence a wall which supports the outer periphery of layer 36. Any disruptions of the working surface 36 or the upper surface 20 of the bath 11 caused by the submersion of object support platform 12 and the layer 34 into the bath 11 are relatively minor and quickly subside.

The computer controlled radiation source 24 is actuated after a short delay to eliminate any disruptions in the upper surface to direct curing media, preferably UV radiation or other suitable radiation, over the working surface 36 of the layer 34 in a predetermined pattern to cure the polymerizable liquid onto which the radiation impacts. The layer 34 is sufficiently cured so that it has the necessary green strength to support additional layers which are subsequently applied in a similar manner and to facilitate handling of the formed object after stereolithography but before final cure.

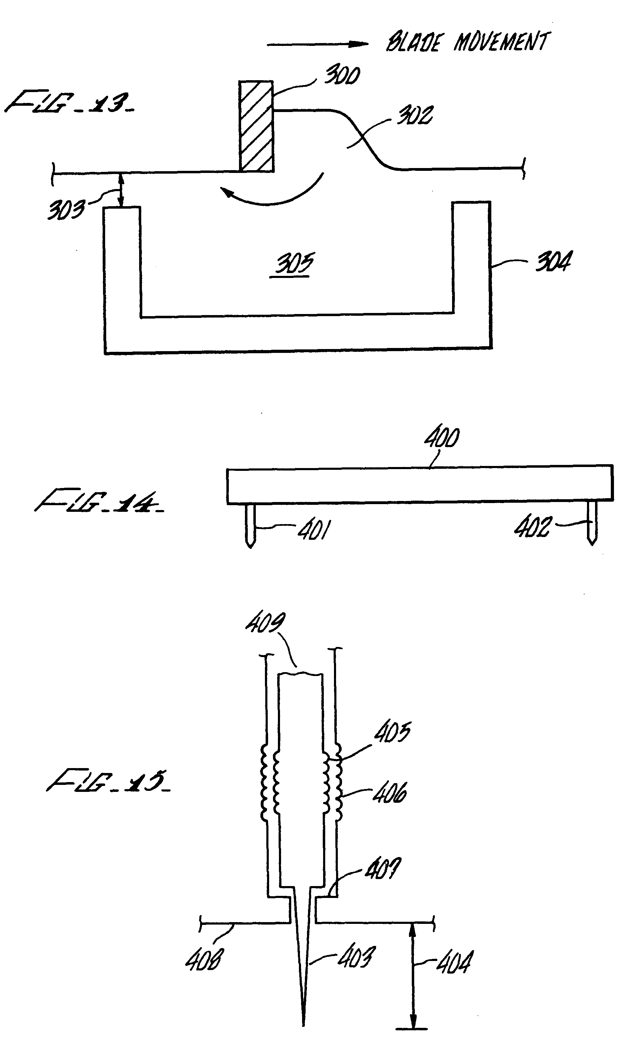

After irradiation of layer 34, the object support platform 12 is further lowered as shown in FIG. 6 so that the polymerizable liquid from the bath 11 flows over the previously cured layer 34 to form a new layer 38 to thereby initiate another cycle of the process.

A series of polymerized layers are built up in the aforesaid manner, as shown in FIG. 1, with each layer being in effect a thin cross section of the desired three-dimensional object 40. The thickness of the individual layers can vary depending upon the composition and viscosity of the polymerizable liquid and the nature and intensity of the curing radiation media. However, typical thicknesses range from about 0.127 mm to about 0.254 mm (about 0.005 to about 0.01 inch). The final three-dimensional object 40 which is formed by the afore-described stereolithography system is removed from the tank 10 and then subjected to further treatment to complete the curing of uncured material which remains within the bound surfaces of the three-dimensional object. Surface finishing, such as sanding and the like, may also be applied as needed.

A wide variety of polymerizable liquids can be utilized with the present invention as well as a wide range of curing media. However, photon polymerizable liquids, such as acrylics, are presently preferred along with UV radiation to cure them. Preferably, the viscosity of the polymerizable liquid should exceed 100 centipoise and preferably range from about 1000 to about 6000 centipoise.

Example

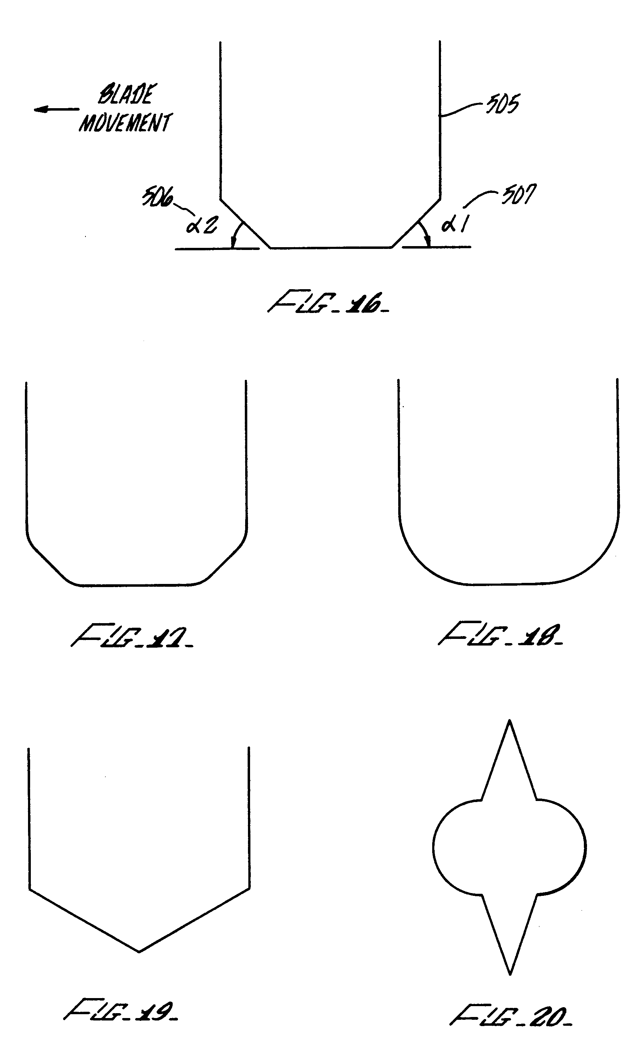

An example of a preferred embodiment of the present invention, a computer controlled stereolithography system developed by the present assignee and schematically shown in FIGS. 1 and 2 was utilized to form the three-dimensional object shown in FIG. 7. The base of the object was 21 x 21 cm (8.25 X 8.25 inches), the maximum height was approximately 10 cm (4 inches) and the minimum height was about 25.4 mm (1 inch). The wall thicknesses were approximately 6.35 mm (0.25 inch). The polymerizable resin employed was a relatively viscous resin from Desoto Chemical Company identified as 4112-65 resin. The temperature of the bath thereof was maintained at approximately 30°C. The thickness of each layer applied was approximately 0.508 mm (0.02 inch). The following procedures embodying the features of the present invention were followed for each layer applied. The object support platform of the stereolithography system was lowered into the bath of 4112-65 resin to allow the liquid resin to flow onto the surface thereon to form an initial layer of polymerizable liquid which was thicker than desired. The platform was then raised so that the initial layer thereon was raised above the bath. A blade traveling at approximately 25.4 mm (1 inch) per second struck off approximately 2.54 mm (0.1 inch) of polymerizable liquid in one pass, leaving about 0.508 mm (0.02 inch) of polymerizable liquid on the support surface on the platform. The platform was then lowered so that the smoothed working surface of the layer was level with the upper surface of the bath. The layer was subjected to ultraviolet radiation from an HeCd laser providing radiation at a wavelength of about 325 nanometers at about 15 milliwatts of power. The total time for each layer cycle was approximately 35 seconds. The time to make such a part with prior methods would have been approximately 165 seconds per layer cycle. The total time saved by utilizing the embodiments of the present invention in this example was approximately 7.5 hours.

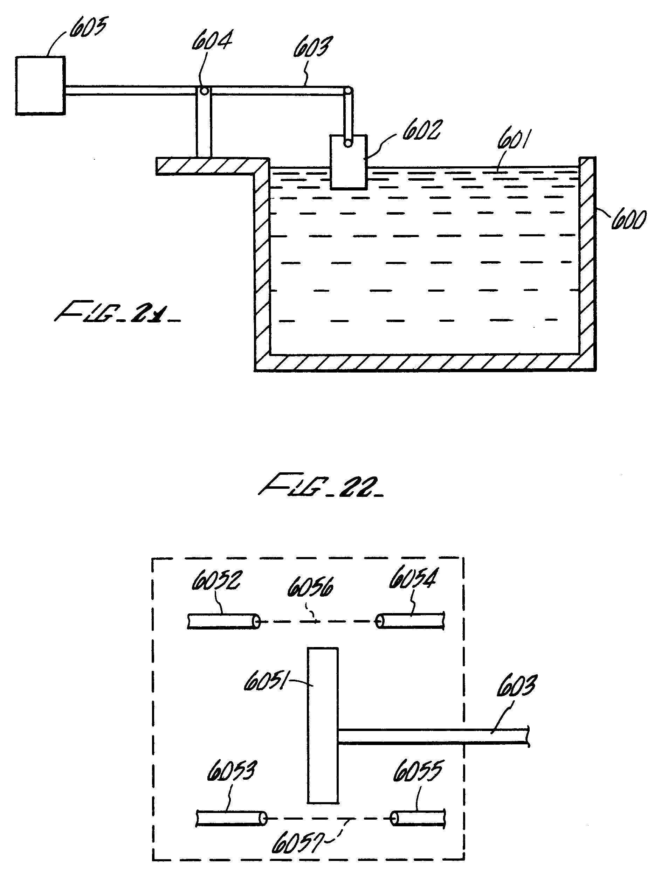

Referring now to Figure 8 in the drawings, an advantageous embodiment of the leveling aspect of the present invention is shown attached to a stereolithographic apparatus 10 in order to measure the level of the working fluid 20 (a U.V. curable photopolymer such as DeSoto #65) in resin vat 30. The stereolithographic apparatus depicted in Figure 8, apart from the addition of the preferred embodiment of the invention and related equipment, has the basic format shown in U.S. Patent No. 4,575,330 (earlier incorporated by reference) and found in the commercial stereolithographic apparatus sold by 3D Systems, Inc. under the acronym "SLA-1."

The stereolithographic apparatus 10 has a side tank 40 added to it which communicates with resin vat 30 by means of a passage 50 in wall 60 of the resin vat 30. The dimensions of the side tank are 17.78 cm (7 inches) by 10.16 cm (4 inches) in the preferred embodiment of the invention. The working fluid 20 fills the resin vat 30 and the side tank 40. The working fluid is free to flow from the side tank to the resin vat and vice versa. The level of the working fluid in the resin vat (and thus in the side tank) must be precisely controlled to a preset level in order to carry out stereolithographic production of parts (objects made by stereolithography are called "parts"). The apparatus of the present invention, in the form of the preferred embodiment shown, accomplishes this purpose.

A helium neon laser 100 is mounted on resin vat 30 below and to the side of the side tank 40. The laser is aligned so that its output beam is emitted straight up along the side tank. A Uniphase 1508 laser has been found to be successful in the preferred embodiment of the present invention. The Uniphase 1508 laser was chosen because of its low cost, compactness, and low power requirements. The light emitted from this laser will not polymerize the working fluid.

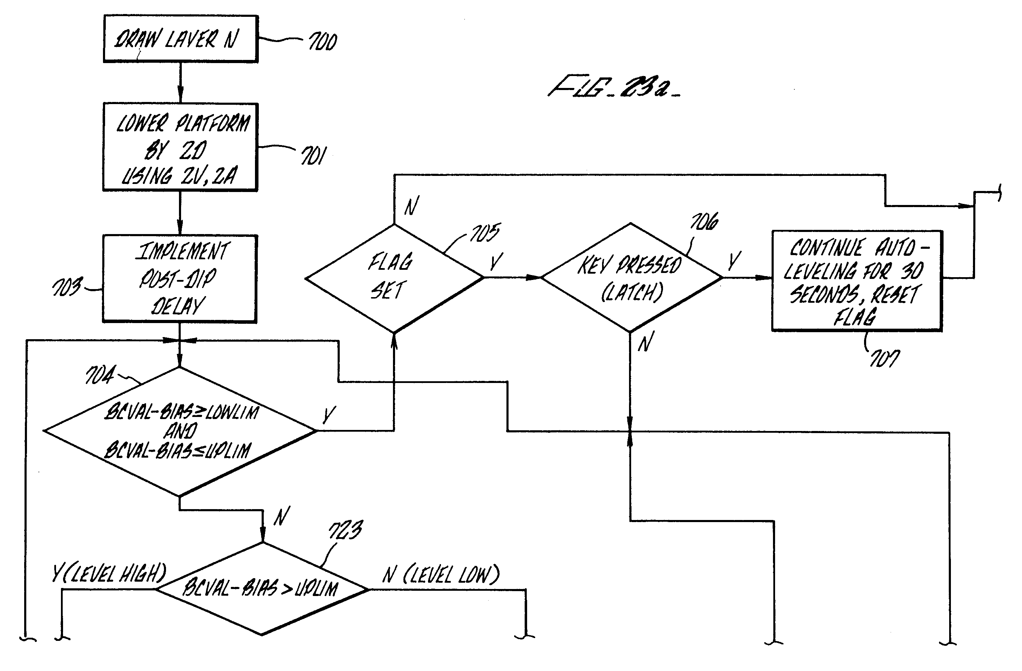

The output beam 110 of the helium neon laser is directed upwards to a mirror 120 (a Rolyn Optics #60.21) mounted on a bracket above the side tank. This deflects the beam along first optical path 112 onto the surface 70 of the working fluid in the side tank 40, as may be best seen in Figure 9. The beam strikes the surface of the working fluid at angle $\beta$ with respect to the surface 70 (the angle of incidence equals 90° minus $\beta$). Angle $\beta$ has a value at which a detectable component of the beam will be reflected along a second optical path 114. A varying range of angles will meet this latter requirement, depending upon the character of the fluid and the laser light, and the dimensions of the tank. In the preferred embodiment described here, this angle is 15°.

The apparatus described herein measures the level of the resin in the side tank as opposed to the vat. This is advantageous, since bubbles or other surface disruptions may form in the main vat as the part or support passes through the resin surface at each cycle of part building. These bubbles or other surface disruptions, if struck by the beam, could cause the beam to reflect from the resin surface at an erroneous angle. Other surface disruptions may form over the top of an immersed part that could cause an erroneous beam deflection, which disruptions could take a long time to level out. These include resin bulges, or areas where too much resin has been pushed off by the blade during recoating because of blade drag. These problems may be particularly acute in the case of certain part geometries having trapped volumes, or large, flat, horizontal surfaces, which geometries will be discussed in more detail farther on. By measuring the level of resin in a side tank, the above problems are minimized or eliminated.

After reflection from the surface 70 of the working fluid, the beam returns up along second optical path 114 at the same angle with respect to the surface of the fluid at which the beam impinged on the surface 70 of the fluid. The beam then shines on the bi-cell photo detector 130 mounted on plunger housing 85 on the other side of the side tank 40 from the mirror 120. The mirror is adjusted so that the beam impinges on the bi-cell detector 130 when the level of the working fluid is at the desired height. The mirror is not moved or turned once it has been adjusted to reflect the beam off the surface of the working fluid to the bi-cell photodetector when the level of the working fluid is at the desired height.

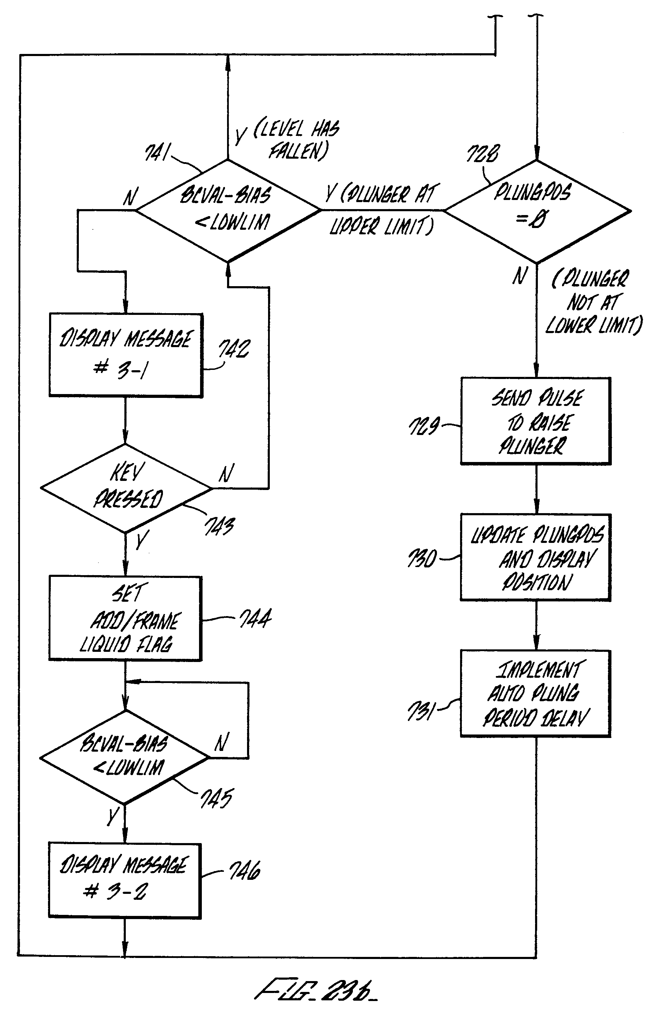

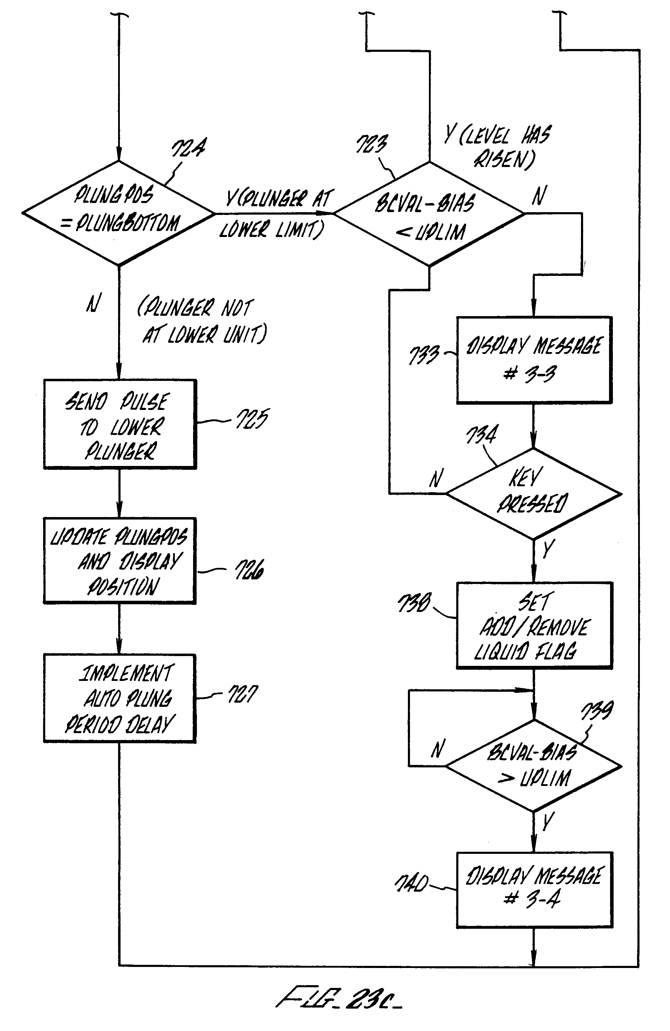

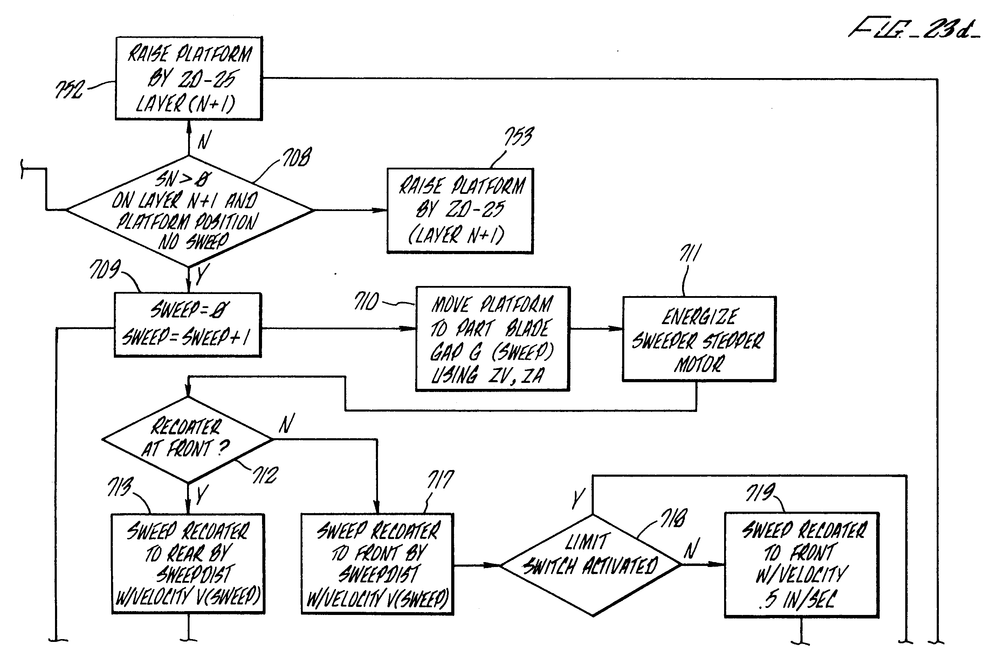

A satisfactory bi-cell photodetector, shown in Figure 11, is made by Silicon Detector Corporation and is known by their number SD113-24-21-021. Other brands and sizes of bi-cell photodetectors would be satisfactory. Linear position sensitive detectors ("PSD"), such as the Hamamatsu two-dimensional PSD (S1544) or two-dimensional lateral cell (S1B52) would be acceptable and might be preferable when the apparatus is intended to measure and display a quantity of output in terms of units of length. The bi-cell photodetector comprises two side-by-side photocells 140. The bi-cell photodetector 130 is mounted on the plunger housing 85 so that the photocells 140 are one above the other and both photocells are above the level of the working fluid. The photodetector may be inclined so that it intercepts second optical path 114 at a right angle, as is best seen in Figures 9 and 12. This ensures that the profile of the beam at the photodetector is a circle, not an oval, if the beam originally had a circular profile.

When the level of the fluid rises or falls due to shrinkage from curing, heating, and the like, the beam will strike the surface 70 at a different point. Accordingly, the beam will strike the bi-cell photodetector at a different point. This effect on the beam is shown in phantom in Figure 9, where a lower level 80 of the working fluid reflects the beam along second optical path 150 to impinge at a lower point with respect to the bi-cell photodetectors. The working fluid level change is exaggerated to illustrate this effect; the preferred embodiment of the invention measures the level of the working fluid in order to maintain that level at a predetermined height. Level changes are small because such level changes are quickly corrected as described below.

A given change in the level of the working fluid will cause the same displacement in the point at which the beam impinges on the bi-cell photodetector, regardless of the value of $\beta$. Figure 10 illustrates the result of a change in the working fluid level from level 82 to higher level 84. The difference between levels 82 and 84 is the vertical distance d. Two different beams are shown arriving along first optical paths 151 and 152, and meeting the surface of the fluid at angles $\beta_1$ and $\beta_2$, respectively. The second optical paths 153 and 154 (for the first level 82) are set to impinge on perpendicular P at the same point $Y_1$. When the level of the working fluid rises to level 84, the beams follow second optical paths 155 and 156, respectively. Simple trigonometric calculations reveal that both second optical paths 155 and 156 will meet perpendicular P at the same point $Y_2$ and that the vertical distance between $Y_1$ and $Y_2$ is twice the value of d, the vertical change in level of the working fluid. Accordingly, varying $\beta$ will not affect the accuracy of the method of measuring the level of a fluid according to the invention. The value of $\beta$ to be chosen depends mainly on which angle will obtain satisfactory reflection of the beam within the constraints of the apparatus.

The working fluid level change will result in a change in the electrical signal emitted by the bi-cell photodetector. The photocells 140 in the bi-cell photodetector are separated by slit 160 (see Figure 11) which is narrow, less than a mil thick. The output of both of the photocells will be equal when the bi-cell photodetector is not illuminated by the laser or when the laser beam is exactly centered on the slit 160 between the photocells 140. The outputs become unequal when the beam moves so that it impinges on one of the cells more than the other. Comparison of unequal outputs by a comparison circuit, as described below, will result in a signal being sent to the stepper motor 90 in order to drive plunger 95. The plunger 95 (see Figure 9) will go up or down as needed to maintain the level of the working fluid.

The plunger maintains the working fluid level at a substantially constant level in space. This is advantageous for it keeps the laser beam in focus. If the level were allowed to change, as would be the case for certain resin dispensing systems which dispose fresh resin into the vat at each cycle of part building, the laser would have to be refocused for the new level.

Referring now to Figure 12, the current outputs 205 and 207 of the photocells 140 are delivered to current to voltage converter 200 which converts the output of each photocell to a voltage between 0 and -2.5 volts. The two voltage outputs 215 and 217 of the current to voltage converter 200 (each photocell 140 has its own output) are supplied to subtractor 220, where the voltage outputs are subtracted. With the addition of a reference voltage (not shown) the difference between voltage outputs 215 and 217 is a signal 225 which ranges between 0 and +5 volts. When the fluid is at its desired level, signal 225 is at +2.5 volts.

Signal 225 is sent to analog/digital converter 230 where the signal is converted to digital signal 235, which then goes to computer 240. Computer 240 compares signal 235 to the predetermined digital signal for the desired fluid level and activates stepper motor controller 245. Stepper motor controller 245 in turn activates stepping motor 90 (a Minarik Electric Co. LAS 3802-001 stepper motor in the preferred embodiment) which moves plunger 95 up and down to displace fluid in order to return the fluid level to the desired value.

The computer is programmed to measure fluid level shortly after a first dipping operation, in which the part is dipped by moving the elevator deeper into the fluid, and before the elevator is raised back up to "draw" the next layer onto the part. The level of the working fluid is measured and controlled only at this specific time in the building process. The computer compares the signal 233 to the reference value at this specific time only and generates the signal 242 to the stepper motor controller 245 that determines how long and in which direction stepper motor controller 245 will activate stepper motor 90.

In an additional embodiment of the recoating apparatus of the subject invention, the ability to vary several parameters associated with the blade recoating process is provided, which parameters include the blade gap, which is the distance between the doctor blade and the surface of the resin bath in the vat, and the blade clearance, which is the distance between the blade and the top of the part. Typically, the blade clearance will be but may not be the same as the layer thickness of the next layer to be formed.

The optimal size of the blade gap depends on a balancing of several considerations. A large blade gap is problematic since it may lead to creases in the surface of the resin bath which will take time to level out. This is so because the blade gap determines the extent to which the top of the part must be raised above the resin surface for sweeping, and also determines the extent to which the top of the part must thereafter be lowered before curing of the next layer can begin. For a 3.175 mm (125 mil) blade gap, for example, and a desired blade clearance of 0.508 mm (20 mils), the top of the part must be raised 2.667 mm (105 mils) above the resin surface before sweeping can begin, and then must be lowered 3.175 mm (125 mils) before curing can begin so the top of the part will be 0.508 mm (20 mils) below the resin surface. The greater the movement of the top of the part, the more disruption that will be caused at the resin surface by the movement of the platform and supports, and the rest of the part, into and out of the liquid resin. This disruption is what is referred to above as a crease. These creases will typically form at the interface between the resin and the part.

A small blade gap is also problematic since the smaller the blade gap, the more resin the doctor blade typically must push out on a given sweep. For a 0 mm blade gap, for example, where the doctor blade is kept right at the surface of the bath, although the crease problem referred to above may be reduced, the doctor blade may be required to sweep resin off the entire vat surface. This may create a small tidal wave of resin, which may spill over the side of the vat, and which may "crash" and form bubbles on the resin surface.

It has been found that a blade gap of 0.635 mm (25 mils) provides a good compromise between the two problems referred to above. Typically, the blade gap will be set once before a part is built, and thereafter remain constant throughout part building.

Another parameter which is advantageous to vary is the blade clearance. Unlike the blade gap, however, it is desirable to be able to vary the blade clearance throughout part building instead of just once before part building.

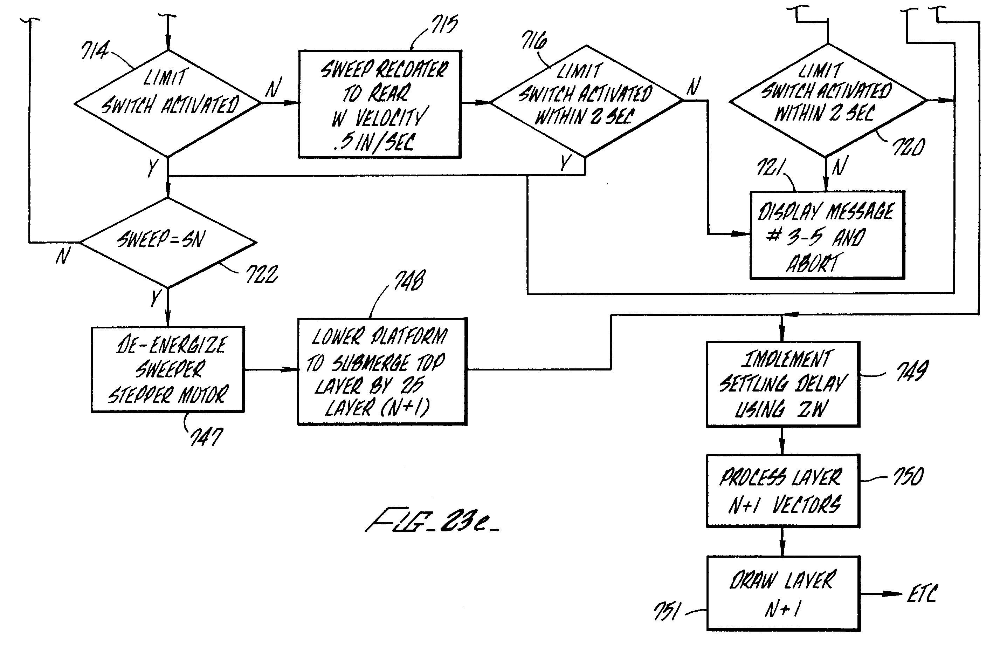

A variable blade clearance is advantageous, because it makes staged recoating possible. Staged recoating is where multiple sweeps of the blade are used for recoating a given layer, with a different blade clearance and possibly blade velocity at each sweep. Assuming a layer thickness of 0.508 mm (20 mils) for the next layer, for example, in a staged recoating process, the blade clearance for the first sweep might be 1.524 mm (60 mils), for the second 1.016 mm (40 mils), and for the third, 0.508 mm (20 mils). As a result, at each sweep, a smaller amount of resin will be swept away than if a single sweep were used to recoat, and a smaller bulge of resin will build up in front of the blade than if a single sweep were used to recoat. A large bulge building up in front of the blade is problematic when a trapped volume of resin is encountered by the blade. When a trapped volume is encountered, because of the force of gravity, a large bulge of resin may flow underneath the blade, and disrupt the desired layer thickness of the smooth layer forming in the wake of the blade. If the bulge were not allowed to build up in the first instance, then this problem could be made less severe. This problem can be illustrated with FIG. 13, which shows blade 300 in the middle of a sweep. Part 304 is lowered beneath the blade by distance 303, which is the blade clearance. Smooth resin surface 301 is formed in the wake of the blade, while a bulge of excess resin, identified by reference numeral 302, is formed in front of the blade. When the blade encounters a trapped volume of resin, identified with reference numeral 305, if bulge 302 is large enough, resin from the bulge may flow underneath the blade as indicated to disrupt the formation of smooth surface 301. This effect is less pronounced where the blade is travelling over a flat, horizontal surface of a part, since there is less room for the resin to flow underneath the blade.

Another parameter which can be varied is the speed of the blade, especially during staged sweeping, where a different speed can be specified for each sweep. It is advantageous to be able to tailor the blade speed to part geometry. When the blade is passing over a large, horizontal flat area of a part, if the blade is travelling too fast, too much resin may be swept away because of drag, which will induce resin below the blade to move at a particular velocity. If the blade is moving at 12.7 cm/sec (5 in/sec), for example, resin 0.025 mm (1 mil) below the blade may be induced to move at 10.16 cm/sec (4 in/sec), and resin below that may be induced to move at 7.62 cm/sec (3 in/sec). In some instances, drag may be so severe over flat areas, that all liquid resin is swept away by the blade. Therefore, over large flat areas, it may be desirable to slow the blade speed down so that the above problem does not occur.

On the other hand, over trapped volumes, if the blade is moved too slow, this may give the resin in the bulge more time to flow underneath the blade. Therefore, over trapped volumes, it may be desirable to increase the speed of the blade so that resin does not have time to flow underneath. The speed cannot be increased too much, however, since if it is increased too much, a wave of resin may be formed in front of the blade, which could crash and form bubbles.

Unfortunately, it is difficult to vary the speed of the blade dynamically depending on part geometry throughout part building. However, when a variable speed is provided for each sweep of staged recoating, the speed of the blade at each sweep and the number of sweeps can be chosen to minimize the above problems for a typical part. For example, it may be desirable for certain parts, where large flat areas and trapped volumes will be encountered, to use a large number of sweeps per layer, in the range of 5-10, with a relatively slow blade speed at each sweep. Because of the large number of sweeps, only a small amount of resin will be pushed away at each sweep, so that a bulge will not be able to build up and flow underneath the blade when a trapped volume is encountered. On the other hand, because of the slow blade speed, the problem of pushing away too much resin off of a large, flat, horizontal part surface will be minimized. This is because the blade will not be able to generate enough drag to sweep away all the resin. Moreover, the slow blade speed will not be a problem over trapped volumes since a large bulge will not be allowed to build up, so there will be little or no problem of resin flowing underneath the blade even with the slow blade speed.

It is also advantageous to be able to vary the extent to which the part is overdipped into the resin before sweeping begins. As described earlier, the part is typically immersed beneath the surface of the resin by more than the desired layer thickness of the next layer. For example, in a commercial embodiment of a SLA known as the SLA-250 manufactured by 3D Systems, the assignee of the subject invention, preferred layer thicknesses are $\frac{1}{2}$ mm. or lower. In the SLA-250, the part is typically overdipped into the resin by 8 mm, which is many times a typical layer thickness. Therefore, it is desirable to be able to vary this parameter depending on layer thickness.

A typical recoating cycle comprises the following steps: 1) deep over-dipping of the part; 2) detecting and adjusting resin surface level; 3) up dipping; 4) sweeping; and 5) delaying so surface settles out. Overdipping by more than a layer thickness not only ensures that a bulge of resin will form on top of the part which can be smoothed out during sweeping, but it also ensures that surface disruptions which could interfere with resin level detection in step 2) level out faster. If the part were immersed close to the surface, any surface disruption which could form above the part would take longer to level out. This is because the "channel" between the top of the part and the resin surface would be smaller, and would restrict the movement of resin needed to smooth out disruptions. Therefore, because of overdipping by more than a layer thickness, level detection is correspondingly made more accurate. Moreover, if overdipping were limited to one layer thickness, then thin layer thicknesses of $\frac{1}{2}$ mm (approximately 20 mils) or less would be less desirable. But, these layer thicknesses may be necessary to build certain parts with high resolution. Therefore, deep over-dipping also makes thin layers in this range easier to use.

In sum, in this embodiment, the ability to vary the blade gap, blade clearance, depth of overdipping, and blade speed, and the ability to use staged recoating, provide means to better tailor blade recoating to specific part geometries, so that specific problems associated with these geometries can be overcome.

In an additional embodiment, the blade design can be varied to make it even more efficient. In the SLA-250, the cross-section of the doctor blade is a square having a width of 3.17 mm (1/8 inch). In addition, the blade is supported at only one end with a support rail, which guides the movement of the blade so that the blade and its support resemble a cantilever. This may cause a problem known as flutter and twist, whereby the unsupported end of the blade twists and flutters, thereby leading to errors in the recoating process, such as nonuniform layer thickness. The extent to which the unsupported end will twist and flutter is proportional to the square of the blade length. An additional problem that may occur is the setting of the blade gap with this blade. This process involves many steps, each prone to error, and is also time-consuming. Moreover, it requires turning screws which can exert torque on, and therefore deflect the blade.

In a more recent commercial embodiment of a stereolithographic system known as the SLA-500, also developed by the 3D Systems, the blade has been redesigned from that used in the SLA-250.

First, to enable blade gap setting to be more easily accomplished, micrometer screws are provided at each end of the blade, which allow the height of each end of the blade above the resin surface to be independently adjusted to the known value within a tolerance of $\frac{1}{2}$ mil without exerting torque on the blade.

In addition, threaded, retractable needles are provided, one at each end of the blade, each of which extends a known distance from the bottom of the blade, which distance is equal to the expected blade gap. At present, the needles extend 0.635 mm (25 mils) beyond the bottom of the blade. If a different blade gap were desired, needles which extended a different amount could be used.

The needles are illustrated in FIGs. 14 and 15. FIG. 14 shows blade 400 with needles 401 and 402 provided on either end. FIG. 15 shows a closeup of one of the needles which is mounted in the blade. As shown, the needle has an extended portion 403, which extends a distance 404 beyond the bottom 408 of the blade. In the SLA-500, the distance is 0.635 mm (25 mils) ± 0.0127 mm (0.5 mils). As shown, the needle has a threaded portion 405, which is preferably a micrometer thread, having 23.62 turns/cm (60 turns/inch).

The needle mount in the blade is identified with reference numeral 409. As shown, the mount has a threaded portion 406, into which the threaded portion of the needle can be threaded, and stops 407, for controlling the extent to which the needle can protrude beyond the bottom of the blade.

To set the blade gap, the needles are mounted by screwing them into the blade until they protrude the appropriate amount, and then the micrometer screw at one end of the blade is turned until the needle at that end touches the resin surface. This can easily be determined visually since the tip of the needle will form a large easily-observable meniscus with the resin surface when it comes within 0.00635 - 0.0127 mm (1/4-1/2 mil) of it. Thus, the needle can be placed at the surface within a tolerance of 0.00635 - 0.0127 mm (1/4-1/2 mil). Then, the micrometer screw at the other end of the blade is adjusted until the needle at that end touches the resin surface. Then, the blade is raised, and then lowered to see if both the needles touch the surface at the same time. If not, further iterations of the above cycle are made until they do. When they do, the blade gap is deemed set, and then the needles are unscrewed so they no longer protrude. They will remain in the mounts, however, so that the blade mass stays the same.

Other means for attaching the needles to the blade are possible, including the use of detent pins and release buttons similar to those used with a ratchet set.

To reduce twist and flutter of the blade, a second rail support is added so that each end of the rail is supported by such a rail. This will reduce or eliminate twist and flutter at the unsupported end of the blade.

Because of the double rail support, the blade can be made thicker for increased strength, and also to reduce flutter in the middle of the blade. A thicker blade may not be possible with just one support since the blade would sag more. At present, SLA-500 blades are available at widths of 0.00317 mm (1/8 in), 0.0048 mm (3/16 in), and 0.00635 mm (1/4 in).

Finally, as shown in FIG. 16, the blade cross section can be changed so it is no longer rectangular. First, the bottom of the blade can be constructed so that the non-horizontal edges of the blade near the bottom form angles, identified with reference numerals 506 and 507, known as the angles of attack and separation, respectively, with the resin surface. The angle of attack is the angle in the direction of blade movement while the angle of separation is the angle at the other end. These angles are added to better improve resin flow underneath the blade. Without these angles, turbulence could be generated underneath the blade, which could create bubbles. These bubbles are problematic since they may travel along with the blade underneath it and be left at the surface of the part after the blade has travelled over it. As a result, they may turn up as an imperfection in the part. By angling the edges of the blade, the pressure gradients are reduced underneath the blade, leading to less fluid separation and therefore less turbulence and less bubble formation. It has been found that, depending on part geometry, these angles can range between about 5 and 8 degrees, and in addition, the angle of attack can differ from the angle of separation. For the SLA-500, an angle of attack of 6 degrees is used.

The blade in FIG. 16 is shown as bisymmetric so that it can sweep in either direction. Alternatively, two asymmetric blades could be used alternatively to sweep in either direction with angles of attack in the direction of movement. Other blade configurations are possible.

FIG. 17 shows the blade of FIG. 16 where each vertex point is rounded. This may further reduce turbulence. FIG. 18 shows a version where the entire bottom is rounded. FIG. 19 shows a version where the bottom is a sharp vertex.

The levelling apparatus of the SLA-500 will now be described. This apparatus overcomes a problem which may occur with the bi-cell detector apparatus described earlier. As discussed earlier, the bi-cell apparatus may be sensitive to bubbles. To overcome this problem in that apparatus, a side tank is added in which bubbles are not formed, and the resin level is detected in the side vat. However, when a layer of resin is supported on a heavy immiscible fluid as described in U.S. Patent Application No. 365,444, the resin level in the side tank may not be an accurate determinate of the resin level in the main vat, as is assumed. This is because during part building, resin in the main vat may be used up disproportionally compared with the side tank. Because of this disproportionality, the liquid in the side tank, when viewed as a whole, may not be as dense as that in the main vat. This may cause the resin level in the side tank to falsely read too high.

To overcome this problem, an apparatus including a float is employed in the SLA-500 to detect the resin level in the main vat instead of the bi-cell apparatus described earlier. The float has the advantage that it is relatively insensitive to bubbles, and so can be used to detect the level of the resin in the main vat as opposed to a side tank. This is because a bubble which attaches to the side of the float will not change its mass, and hence the level at which it floats. Therefore, a side tank is not needed, and the float will accurately detect the resin level even if a layer of resin were floated on a heavy, immiscible fluid.

The float can take many shapes. For the SLA-500, the float is presently in the shape of a small can, having a volume of about 50 cc or more. In addition, the float is advantageously teflon coated, so that any resin that gets on the top, or wets the sides of the float, will rapidly drip or slide off, and not substantially change the mass of the float for an appreciable period of time.

If a bubble were able to lodge itself underneath the float, this could cause an erroneous level measurement since it could change the extent to which the float is submerged. In this instance, to combat this problem, other float designs are possible, as shown in FIG. 20, which would not enable bubbles to lodge underneath the float.

The float apparatus presently used in the SLA-500 is illustrated in FIG. 21. As illustrated, the apparatus comprises float 602, supporting beam 603, bearing 604, and optical detection circuitry 605. As shown, the supporting beam is coupled to the float, which floats on resin surface 601 placed in vat 600. The beam is also vertically rotatable around bearing 604. In the SLA-500, bearing 604 is advantageously a class 9 bearing.

The optical detection circuitry 605 is shown in detail in FIG. 22. As illustrated, the circuitry comprises member 6051 which is coupled to beam 603, light-emitting diodes ("LEDs") 6052 and 6053, which emit light beams 6056 and 6057, respectively, and optical detectors 6054 and 6055, which detect the uninterrupted presence of light beams 6056 and 6057, respectively. The optical detectors are electronically coupled to a plunger or other means (not shown) described earlier for raising or lowering the resin level in response to electrical signals from the optical detectors.

Any change in the level of the fluid will cause a corresponding vertical displacement of the float. This, in turn, will cause beam 603 to rotate around bearing 604, which will cause member 6051 to displace vertically by a distance which is a magnification of the fluid displacement.

As long as the member 6051, as shown, is situated between and does not block either of the two light beams, 6056 and 6057, the uninterrupted presence of which is detected by optical detectors 6054 and 6055, respectively, the resin level is assumed to be at the correct height. Only when member 6051 is deflected sufficiently to block the passage of one of the light beams to its corresponding optical detector, which will be detected by the failure of the optical detector to pick up any light from its corresponding LED, will it be assumed that the resin it at an incorrect level. In this instance, a plunger or other means electrically coupled to the optical detectors will be either raised or lowered in order to position the resin level, and hence float, at the correct height. If beam 6056 is blocked by the member, which will be detected by optical detector 6054, it will be assumed that the resin level is too low, in which case a plunger or the like could be lowered until the resin level is raised to the correct height. If beam 6057 is blocked by the member, which will be detected by optical detector 6055, it will be assumed that the resin level is too high, in which case a plunger or the like could be raised until the resin level is lowered to the correct height. Note that both of beams 6056 and 6057 cannot simultaneously be blocked by member 6051. Therefore, there will rarely, if ever, be an ambiguity with this apparatus, in the instance where the resin level is at an incorrect height, regarding whether the proper response thereto is to raise or lower the resin level.

The recoating software used in the SLA-250 will now be described. A specification for the software in the form of a flowchart is illustrated in FIG. 23. Before utilizing the software, a user must first specify certain parameters that will be used to control the movement of the platform. These parameters are ZA, ZV, ZW, and ZD. As described in more detail in U.S. Patent Application S.N. 331,644, the platform is under the control of a computer known as the PROCESS computer. ZA is the amount the PROCESS computer will allow the platform to accelerate or deaccelerate, ZV is the maximum velocity the platform will be allowed to achieve, and ZD is the depth the platform is caused to overdip into the liquid resin before sweeping. As discussed earlier, ZD is typically much greater than a layer thickness. ZW is the settling delay, which is the amount of time the PROCESS computer is directed to wait after the platform has been lowered after sweeping to place the upper surface of the resin layer on top of the part at the same level as the resin in the vat. The PROCESS computer will wait the amount of time specified by ZW before curing the resin on top of the part.

Besides these parameters, the user may specify other variables for each layer or range of layers including SN, which is the number of sweeps per layer, and GV, which stands for global velocity, and indicates that all sweeps are to be made at the specified velocity. The user also may specify V1-V7, which are individual velocities associated with sweeps 1-7, respectively. By setting these values, the user indicates he or she wishes velocity to vary by sweep.

The process begins in step 700, when layer N is drawn. Next, in step 701, the platform is lowered beneath the resin surface by ZD at a speed determined by ZA and ZV. In step 703, a post-dip delay is implemented to allow settling of the resin since the platform has just been moved.

In step 704, a reading from the bi-cell detector is taken and corrected for a bias introduced by the circuitry (identified as BCVAL-BIAS). The reading is then compared with an upper limit, identified as UPLIM, and a lower limit, identified as LOWLIM. If between these two values, the resin level is assumed to be at the correct height.

Assuming the level is at the correct height, in step 705, a flag is checked to see if set. The flag is set in response to a key pushed by the user, which indicates that the user manually has added or taken away resin from the vat. Assuming the flag is not set, in step 708, a check is made to determine that SN, the number of sweeps for layer N + 1, is greater than 0, and that the platform is still in a safe position so that the blade will not strike it while sweeping. The upper bound for the platform position is identified by the mnemonic NOSWEEP.

Assuming these conditions are met, in step 709, an internal counter, SWEEP, is first initialized to 0, and then incremented. In step 712, a check is made to determine whether the blade is at the front or back of the vat. Assuming the front for the moment, in step 713, the blade is swept to the back of the vat (which is a distance specified by SWEEPDIST) at a velocity which may depend on the current value of SWEEP.

When the blade has reached the rear of the vat, it will in the usual instance trigger a switch identified with the mnemonic LIMIT SWITCH. Assuming the limit switch has been activated, in step 727, a check is made to determine whether all the sweeps specified by SN have been performed for the layer. Assuming they have not, a jump is made back to step 709, and the above cycle repeated.

Turning back to step 714, in the case where the limit switch has not been activated, the blade is slowly moved towards the rear at the velocity of 12.7 mm/sec (0.5 in/sec)., and assuming the limit switch is activated within 2 seconds, a jump is made to step 722. Assuming it is not so activated, the process is aborted in step 721.

Turning back to step 712, assuming the blade is at the back of the vat, in step 717, the blade is swept towards the front at a velocity which may be a function of the current sweep number, and in step 718, a check is made to see if the limit switch has been activated. Assuming it has, a jump is made to step 722. If it has not, in step 719, the blade is slowly moved towards the front at a velocity of 12.7 mm/sec (0.5 in/sec.), and if the limit switch is activated within 2 sec., a jump is made to step 722. If it is not, the process is aborted in step 721.

Turning back to step 704, which is right after the platform (and part) have been overdipped below the resin surface, if the resin level is not at the appropriate height, a check is made in step 723 to see if it is too high or too low. If BCVAL-BIAS is greater than UPLIM, the resin level is too low, and the plunger must then be lowered. In step 724, a check is made to see if the plunger is already at the bottom of the vat, and assuming it is not, in steps 725 and 726, the plunger is lowered, and the plunger position, identified with the mnemonic PLUNGPOS, is updated. In step 727, a delay is instituted to allow the resin to settle, and a jump is made to step 704 to check the resin level again. The above cycle then repeats.

Turning back to step 724, assuming the plunger is at the bottom of the vat, the only way to raise the level is to add resin to the vat. In step 732, the level is checked again, and assuming it is still too low, in steps 733-734, the user is asked to press a key indicating he or she will manually add resin. Until the key is pressed, the process will loop. When the key is pressed, a flag is set (the same flag which is checked in step 705). While the user presumably adds resin to the vat, in step 739, the process will loop until the resin level is at the current level. When it is, in step 740, a message is sent to the user indicating that enough resin has been added, and a jump is made to step 704.

Turning back to step 705, after the resin has been added so that the resin level is at the correct height, the flag must be reset. This condition is detected in steps 705 and 706, and in step 707, the flag is reset.

Turning back to step 723, in the case where BCVAL-BIAS is less than LOWLIM, indicating that the resin level is too high, the plunger must be raised. A check is made in step 728 to see if the plunger is already at its highest possible position, indicated by 0. Assuming it is not, in steps 729-730, the plunger is raised, and the plunger position, identified as PLUNGPOS, is updated. Then, in step 731, a settling delay is instituted, and a jump is made back to step 704.

Turning back to step 728, assuming the plunger is at its highest position already, and cannot be raised anymore, the user must be notified to remove some resin in the vat. In step 741, a check is made to determine that the resin level is still too high, and in steps 742-743, the user is sent a message, asking him or her to remove resin, and is asked to press a key acknowledging the message. Until the key is pressed, the process will loop. When the key is pressed, in step 744, a flag is set, and in step 745, while the user is removing resin, the resin level is checked until it is at the appropriate height. Until it is, the process will loop. When the level is at the correct height, in step 746, the user is notified to stop removing resin, and a jump made back to step 704. In steps 705-707, as discussed earlier, the flag is reset.

Note that levelling need not be performed at each layer, but only when the level may have changed because of any of the following: 1) thermal expansion; 2) shrinkage; and 3) changing displacement caused by platform supports. If neither of these are present, levelling need not be conducted for a layer.

Turning to step 749, when all the sweeps for layer N + 1 have been performed, a settling delay equal to ZW will be instituted, and in steps 750-751, the vectors for layer N + 1 are computed, and the layer drawn using these vectors in step 751. More detail on computing vectors and drawing layers is provided in U.S. Patent Application S.N. 331,644.

The above cycle is then repeated for all the rest of the layers of the part.

A listing of recoating software, version 3.60, used in the SLA-250, will now be provided. The software comprises the following modules, written in TURBO PASCAL, each of which is listed in turn:

| Module | Description |
|---|---|
| UTLSWEEP.PAS | Controls sweeping during part building; used in conjunction with BUILD |
| SINSTEP.PAS | Allows sine wave stepping of the platform during recoating |
| MACHINE.PRM | includes sweeping input/default parameters |
| AUTOLEVEL.PAS | performs leveling in between the drawing of layers |
| UTLADJUST.PAS | used to set resin level before building a part |
| RECOATER.PAS | uses above programs to perform recoating action external to BUILD |

As described in more detail in U.S. Patent Application S.N. 331,644, BUILD is the program which orchestrates the building of a part. As indicated above, the programs will, in the usual instance, be used in conjunction with BUILD. Together, these programs will provide functionabilty substantially similar to that described above with respect to FIG. 23. RECOATER.PAS, however, provides a means to perform recoating independent of BUILD. The software listings follow:

```
{ ==================================================================

    3D Systems Stereolithography System Software

  ==================================================================


    UTLSWEEP.INC
    SLA Recoater blade and plunger utility include file.


    11/15/88 GOF File created.
    11/28/88 GOF Updated for production SLA250 board.
    11/30/88 GOF Add BldSweep.inc, solidify interfaces with
Richard.  Its his fault!
    01/03/89 GOF Comment out all if keypressed from sweeper
code.
    01/13/89 GOF Put MonitorLaserBeamDrift as a part of PD,
postdipdelay.
    01/18/89 GOF Integrate with Jon's SLA 500 version.
```

01/24/89 JFT If requested speed is > MaxSafeSineSpeed then we use the old square-wave steps to move the recoater, but if it's <= it then we use sine-wave stepping from SINSTEP.PAS unit, which we now USE here. Both methods changed to correct speed parameters to correct velocity.

01/31/89 JFT Pass ZAccel & ZVeloc as parameters to ZFreeMove & ZMoveGivenDistance.

01/27/89 GOF Add PD2, the second post dip delay for set plunger proc.

01/31/89 GOF Add routine to read and write Machine.prm (MaxBladeMoves)

02/01/89 GOF Add PD2, DrainAccel, and DrainVeloc to sweep.prm.

02/07/89 GOF Add XP support. (extra Platform) Also change Veloc to Floatt.

02/24/89 GOF Add exit to SetPlunger if its OK the first ReadBiCell.

02/27/89 GOF Minor cleanup and comments.

03/07/89 JFT On PlungerUp full stroke, add better assurance of getting to top. Echo stall message if we don't reach it.

03/17/89 JFT It's only fitting that I'm writing this on a green display. To accomodate the SLA-500, MaxPlungeMoves has become greater than maxInt. So, variables in this unit that take assignment from MaxPlungeMoves are transformed to longint.

04/10/89 JFT Change Velocity to Period.

05/22/89 JFT Change blade malfunction alert to allow user to reposition blade.

07/05/89 JFT Single Coil Holding Torque.

09/20/89 JFT/RAG Added Sweeper Calibration procedure and support for NCR.

```
------------------------------------------------------------}
{***********************************************************}
interface
uses CRT,DOS,UTILITY1,UTLZSTAGE,SINSTEP,BUILDVAR;
```

```
{ *****************************************************}
{ math coprocessor support }

  {$IFOPT N+}
    {$DEFINE COP}
  {$ELSE}
    {$UNDEF COP}
  {$ENDIF}
type
  {$IFDEF COP}
  FloatType = Single;
  {$ELSE}
  FloatType = Real;
  {$ENDIF}


{$I product.inc}


const
  { MaxPlungeMoves  = 3000; }{ for the silver screw } { Now
in product.inc. }
  { MaxPlungeMoves  = 2800;   for the gold screw      }

    defaultPeriod          = 3; { seconds per sweep }
    minplungemoves          = 1;

    minPeriod              = 0.1;
    maxPeriod              = 10;


    Bits: array[0..3] of Byte = ($09,$0A,$06,$05);


var
{ global variables}
NoSweep          : boolean;


PlungerPos                      : longint;   ( Made longint
from integer for 500. )
```

```
MachineType                 : string;
MaxBladeMoves               : integer;
DefaultPlungerStepsPerMil   : real;


( file contents )
NumSweeps        : integer;
Period           : array[1..7] of FloatType;
BladeGap         : array[1..7] of integer;
Bias             : integer;
PlungeMotorDelay : integer;
PlungStart       : FloatType; ( not used )
UpLim            : integer;
LowLim           : integer;
BladeGapL0       : FloatType;
PostDipDelay     : integer;
NumChecks        : integer;
PD2              : integer;
XP               : FloatType;
SHOWSWEEP        : boolean;
ProcessSpeedM    : Real ;


(**************************************************)
procedure ReadSWEEPxPRMfile;
procedure ReadMACHINExPRMfile;
procedure WriteMACHINExPRMfile;
procedure SweeperBack(period : real; StopCode : integer);
procedure   SweeperForward(period:   real;   StopCode   :
integer);
procedure MoveBlade(period: real; StopCode:integer);
procedure  PlungerHoldingTorque; (Use after any plunger
move of 1}
procedure PlungerDown(numMoves : longint; var StopCode :
integer);
procedure  PlungerUp(numMoves : longint; var StopCode :
integer);
```

18

```
procedure       InitSweeperandPlunger(option:integer;var
StopCode : integer);
procedure    InitSweeper(option:integer;var    StopCode   :
integer);
procedure ReadBiCell(recurs:char;var FinalLevel:integer);
procedure WhichBladeLimit(var LimitSwitch: integer);
 { procedure AddRemoveResin(var FinalLevel: integer); }
procedure    SetPlunger(numSetPlungers:integer;var
FinalLevel:integer );
procedure    DoSweep(DipDepth,LayerDepth:real;
RelaxationTime:integer);
procedure expSweeperBack(speed:real);
procedure expSweeperForward(speed:real);
procedure expMoveBlade(period:real);
procedure SweepCal;


{*****************************************************}
implementation

const
     LnSteps:    array[1..60]    of    Integer    =
(400,200,100,060,50,45,40,35,30,25,20,18,16,14,12,10,10,
8,8,8,8,6,6,6,5,5,5,4,4,4,4,4,3,3,3,2,2,2,2,2,1,1,1,1,1,
1,1,1,1,1,1,1,0,0,0,0,0,0,0,0);


     SwepCoil = $309;
     SweepLim = $308;


     defaultBladeGap          = 100;  ( percent )
     defaultBias              = 0;
     defaultPlungeMotorDelay  = 8;
     defaultPlungStart         = 3.5; ( inches - not used
now )
     defaultUpLim             =  5;
     defaultLowLim            = -5;
     defaultBladeGapL0         = 0.125;  ( inches between
liquid and blade )
```

```
      defaultPostDipDelay      =  3;      { seconds }
      defaultNumChecks         = -1;      { automatic mode }
      defaultPD2               =  2;
      defaultDA                =  '0.8';
      defaultDV                =  '0.8';
      defaultXP                =  '0.0';

      SweepDist                = 12.1;

   var
      StepIter : integer;
      SweepStep : integer;
      PlungeStep : integer;
      delaytime   : integer;
      junk1,junksc : integer;
      junkKey        : char;


   {*****************************************************}
   procedure SweepDefaults;
   var
      i, code : integer;
   begin
      NumSweeps        := 1;
      for i := 1 to 7 do begin
         Period[i]    := defaultPeriod;
         BladeGap[i]   := defaultBladeGap;
      end;
      Bias             := defaultBias;
      PlungeMotorDelay := defaultPlungeMotorDelay;
      PlungStart       := defaultPlungStart;
      UpLim            := Bias + defaultUpLim;
      LowLim           := Bias + defaultLowLim;
      BladeGapL0       := defaultBladeGapL0 * 25.4; { convert
to mm }
      PostDipDelay     := defaultPostDipDelay;
      NumChecks        := defaultNumChecks;  { automatic mode
   }
```

```
        PD2                 := defaultPD2;
        DrainAccel          := defaultDA;
        DrainVeloc          := defaultDV;
        XP                  := RealVal(defaultXP,code);
        ShowSweep           := false;
    end;
    {*******************************************************}
    procedure ReadSWEEPxPRMfile;
    const
        anyfile         = $3F;
    var
        SweepFile : Text;
        Line   : String;
        i,jj,kk,index   : integer;
        DirInfo         : searchRec;


    begin
        If ShowSweep then writeln ('    Reading machine.prm
    file. ');
        FindFirst('\3dsys\Machine.PRM',anyfile,DirInfo);
        if DosError <> 0 then begin
                window(1,1,80,25);
                ClrScr;
                gotoxy(1,21);
                writeln;
                writeln('    ERROR: Machine.PRM  not  found.
    ');
                UserWait;
                Halt(1);
            end;
    {-------------------------------------------------------}
        assign(SweepFile,'\3dsys\Machine.prm');
        reset(SweepFile);
        i := 0;
        repeat
            readln(sweepFile,line)
        until line = 'SWEEP.PRM';
```

```
while (Not Eof(SweepFile)) and (i <= 27) do begin
   readln(SweepFile,line);
   if line[1] <> '!' then inc(i);
   if i = 1 then begin
                  N u m S w e e p s    : =
IntVal(copy(line,1,pos('!',line)-1),jj);
   end;
   if (i >= 2) and (i <= 15) then begin
      if (i mod 2) = 0
                  then  P e r i o d [ i   d i v
2]:=RealVal(copy(line,1,pos('!',line)-1),jj)
                  e l s e  B l a d e G a p [ i   d i v
2]:=round(RealVal(copy(line,1,pos('!',line)-1),jj));
         () { BladeGap[i div 2]:=(1/1000) * (25.4) *
BladeGap[i div 2]; }
               { covert mils to mm }
      if (BladeGap[i div 2] <= 0)
      then BladeGap[i div 2] := 0;
      if (BladeGap[i div 2] > 999)
      then BladeGap[i div 2] := 999;
   end;
   case i of
                  1 6   :         B i a s    : =
IntVal(copy(line,1,pos('!',line)-1),jj);
            17   :        P l u n g e M o t o r D e l a y   : =
IntVal(copy(line,1,pos('!',line)-1),jj);
               1 8   :         P l u n g S t a r t   : =
RealVal(copy(line,1,pos('!',line)-1),jj);
                  1 9   :         U p L i m   : =
IntVal(copy(line,1,pos('!',line)-1),jj);
                  2 0   :         L o w L i m   : =
IntVal(copy(line,1,pos('!',line)-1),jj);
               2 1   :         B l a d e G a p L 0   : =
(25.4)*RealVal(copy(line,1,pos('!',line)-1),jj);
                        { convert inches to mm }
{}{                     22   :        postDipDelay   :=
IntVal(copy(line,1,pos('!',line)-1),jj); }
```

```
                          2 2    :          N u m C h e c k s    : =
IntVal(copy(line,1,pos('!',line)-1),jj);
{){                       24    :       PD2                      :=
IntVal(copy(line,1,pos('!',line)-1),jj); }
        23 :  DrainAccel:= copy(line,1,pos(' ',line)-1);
        24 :  DrainVeloc:= copy(line,1,pos(' ',line)-1);
        25    :          XP                                      :=
RealVal(copy(line,1,pos('!',line)-1),jj);
        26 :  ShowSweep := ( upcase(line[1]) = 'S' );
      end;
    end;
    Close(SweepFile);
    for i := 1 to 7 do begin
        if (Period[i] > maxSweepPeriod) then Period[i] :=
maxSweepPeriod;
        if (Period[i] < minSweepPeriod) then Period[i] :=
minSweepPeriod;
    end;
    UpLim            := Bias + UpLim;
    LowLim           := Bias + LowLim;
    if showsweep then begin
        writeln('Here are the gap percentages--');
        for  i  :=  1  to  7  do  writeln('Gap',i,'  is
',BladeGap[i]);
    end;
    ZSafeSweep := ZBladeLevel + 0.060 (warp tolerance + 10
mils) + XP;
end;


{********************************************************}
procedure ReadMACHINExPRMfile;
const
    anyfile         = $3F;
var
    SweepFile : Text;
    Line   : String;
    i,jj,kk,index  : integer;
```

```
     DirInfo          : searchRec;


begin
     If ShowSweep then writeln ('    Reading MACHINE.PRM
file. ');
     FindFirst('\3dsys\Machine.PRM',anyfile,DirInfo);
     if DosError <> 0 then begin
          window(1,1,80,25);
          ClrScr;
          gotoxy(1,21);
          writeln;
          writeln('    ERROR: Machine.prm  not  found.
');
          UserWait;
          Halt(1);
     end;
{-------------------------------------------------}
   assign(SweepFile,'\3dsys\Machine.prm');
   reset(SweepFile);
   i := 0;
   repeat
      readln(SweepFile,line)
   until line = 'MACHINE.PRM';
   while (Not Eof(SweepFile)) and (i < 3) do begin
     readln(SweepFile,line);
     if line[1] <> '!' then inc(i);
     case i of
       1 :  begin
                MachineType   := copy(line,1,7);
                ProcessSpeedM := RealVal(copy(line, 8, 8),
jj) ;
             end ;
             2    :        M a x B l a d e M o v e s    : =
IntVal(copy(line,1,pos('!',line)-1),jj);
         3    :        DefaultPlungerStepsPerMil    :=
RealVal(copy(line,1,pos('!',line)-1),jj);
         end;
```

```
      end;
      close(sweepFile);
   end;


   {*****************************************************}
   procedure WriteMACHINExPRMfile;
   const
      ParamFileName = '\3DSYS\MACHINE.XYZ';
      NewName       = '\3DSYS\MACHINE.PRM';


   var
      IOerr,i,m,n,valcode : integer;
      j : longint;
      r : real;
      ParamFileLine, AppendText : str80;

      ParamFile,NewFile: text;
      DirInfo           : SearchRec;
      InputLine         : string;


   begin
      OpenParamFile := ParamFileName;

      assign(ParamFile,OpenParamFile);
      rewrite(ParamFile);
      assign(NewFile,NewName);
      reset(NewFile);
      while not eof(NewFile) do begin
         readln(NewFile,InputLine);
         writeln(ParamFile,InputLine);
      end;
      rewrite(NewFile);


      IOerr := IOresult;
      if IOerr <> 0 then begin
         OpenParamFile := ParamFileName;
         assign(ParamFile,OpenParamFile);
```

25

```
        reset(ParamFile);
        IOerr := IOresult;
        if IOerr <> 0 then OpenParamFile := ' '
    end; {IO error}
    if IOerr = 0 then begin
        i := 0;
        reset(ParamFile);
        repeat
            readln(paramFile,paramFileLine);
            writeln(newFile,paramFileLine);
        until paramFileLine = 'MACHINE.PRM';
        readln(paramFile,paramFileLine);
        while (paramFileLine[1] = ' ') or (paramFileLine[1]
= '!') do
        begin
            writeln(newFile,paramFileLine);
            readln(paramFile,paramFileLine);
        end;
        writeln(newFile,paramFileLine);    ( This  is  the
machine model #. )
        Str(MaxBladeMoves,paramFileLine);
        writeln(newFile,paramFileLine+'    ! Maximum blade
steps to cross vat');
        readln(paramFile);   ( We just wrote a new val here
so throw old away. )
        while not eof(paramFile) do
        begin
            readln(paramFile,paramFileLine);
            writeln(newFile,paramFileLine);
        end;
    end;
    close(NewFile);
    close(ParamFile);
end;


{*************************************************************}
```

26

```
procedure    RotateStep(DirStep:    Integer;var    InputByte:
Integer);
begin
 StepIter  := ((StepIter + DirStep) + 4) mod 4;
 InputByte := Bits[StepIter];
end;


(*********************************************************)
procedure BenDelay(del:integer);
var
   x :integer;
   i :integer;
   j :integer;
begin
X := 0;
j := 0;
   repeat
     INC(X);
     for i := 1 to 10 do inc(j); { 100 us }
   until X>= del;
end;


(*****************************************************)
function SweeperParameter(period : real): real;
{ Feed this the desired period and it will return the
appropriate parameter }
{ to sweep at that period.  You then feed that # to the
appropriate            }
{ sweeper moving procedure.
                         }
var
   RoundPeriod : integer;
   sweeperParam : real;
begin
   RoundPeriod := round(period);
   if RoundPeriod < minSweepPeriod then RoundPeriod :=
minSweepPeriod;
```

```
    if RoundPeriod > maxSweepPeriod then RoundPeriod :=
maxSweepPeriod;

    (* check for the machine type so the appropiate *)
    (* Parameter Value for the blade sweep is assigned *)
    if ((ProcessSpeedM * 10) < 1) then
        (* WYSE 286 values *)
        case RoundPeriod of
            1  :  sweeperParam  :=  period1Param;           {
SquareMoves start here. }
                2 : sweeperParam := period2Param;
                3 : sweeperParam := period3Param;
                4 : sweeperParam := period4Param;
                5 : sweeperParam := period5Param;
                6 : sweeperParam := period6Param;
                7 : sweeperParam := period7Param;       { SineMoves
start here. }
                8 : sweeperParam := period8Param;
                9 : sweeperParam := period9Param;
               10 : sweeperParam := period10Param;
               11 : sweeperParam := period11Param;
               12 : sweeperParam := period12Param;
               13 : sweeperParam := period13Param;
               14 : sweeperParam := period14Param;
               15 : sweeperParam := period15Param;
               16 : sweeperParam := period16Param;
            else
            begin
                if (RoundPeriod > 16) and (RoundPeriod < 21)
                then    sweeperParam    :=    period16Param    -
((RoundPeriod - 16) * ((period16Param-period21Param)/4));
                if (RoundPeriod > 20) and (RoundPeriod < 31)
                then    sweeperParam    :=    period21Param    -
((RoundPeriod - 20) * ((period21Param-period30Param)/10));

            end;
        end
```

```
    else (* NCR 386 VALUES *)
        (* all NCR 386 values are sine moves *)
        case RoundPeriod of
            1 : sweeperParam := 1.2 ;      2 : sweeperParam :=
        1.2 ;

            3 : sweeperParam := 1.2 ;      4 : sweeperParam :=
        0.8 ;

            5 : sweeperParam := 0.6 ;      6 : sweeperParam :=
        0.5 ;

            7 : sweeperParam := 0.4 ;      8 : sweeperParam :=
        0.35 ;

            9 : sweeperParam := 0.31 ;    10 : sweeperParam :=
        0.26 ;

           11 : sweeperParam := 0.245 ;  12 : sweeperParam :=
        0.22 ;

           13 : sweeperParam := 0.205 ;  14 : sweeperParam :=
        0.19 ;

           15 : sweeperParam := 0.18 ;   16 : sweeperParam :=
        0.16 ;

           17 : sweeperParam := 0.152 ;   18 : sweeperParam
        :=0.1375;

           19 : sweeperParam := 0.135 ;  20 : sweeperParam :=
        0.13 ;

           21 : sweeperParam := 0.12 ;    22 : sweeperParam
        :=0.115 ;

           23 : sweeperParam := 0.11 ;    24 : sweeperParam
        :=0.105 ;

           25 : sweeperParam := 0.1 ;     26 : sweeperParam
        :=0.097 ;

           27 : sweeperParam := 0.0935 ; 28 : sweeperParam :=
        0.09 ;

           29 : sweeperParam := 0.087 ;   30 : sweeperParam
        :=0.085 ;
        end (* case NCR 386 *) ;


    SweeperParameter := sweeperParam;
end;
```

```
{ *************************************************** }
function SweeperSqrVelocity(vel:real):real;          .
{ Converts a velocity in inches per second to the sweepers
private units.   Smaller trueVels correspond to  greater
velocities.                                            }
{ This function is no longer used.                      }

var
   trueVel : real;
begin
     if vel <= 1 then trueVel := 76
     else if vel <= 2  then trueVel := (vel - 1) * (36-76)
+ 76
     else if vel <= 3  then trueVel := (vel - 2) * (23-36)
+ 36
     else if vel <= 4  then trueVel := (vel - 3) * (17-23)
+ 23
     else if vel <= 5  then trueVel := (vel - 4) * (12-17)
+ 17
     else if vel <= 6  then trueVel := (vel - 5) * (10-12)
+ 12
     else if vel <= 7  then trueVel := (vel - 6) * (9-10)
+ 10
     else if vel <= 8  then trueVel := (vel - 7) * (7-9)
 +  9
     else if vel <= 9  then trueVel := (vel - 8) * (6-7)
 +  7
     else if vel <= 10 then trueVel := (vel - 9) * (6-7)
 +  7
     else trueVel := 5;
     SweeperSqrVelocity := truevel;
end;


{ *************************************************** }
procedure SweeperBack(period : real; StopCode : integer);
{ StopCode 0 = normal return ( could be the limit )
```

```
                    1 = abnormal - limit hit before completed move
( ZStage )
                    2 = abnormal - keypressed
                    3 = stall }
var
  i : integer;
  key : char;
  speed : real;
begin
 speed := SweeperParameter(period); {speed holds a raw
parameter now}
 if period < MinSafeSinePeriod then begin
    delaytime  := trunc(speed);
    if (ZStagePos < ZSafeSweep) then exit;
    port[Sweeplim] := $FF;
    i := 0;
    if ShowSweep then writeln('   SWEEPER BACK   ');
    repeat
        if (port[SweepLim] and $40) <> $40 then begin
           port[SwepCoil] := $00;
           BladePos := MaxBladeMoves;
           StopCode   := 0;
           exit; { hit limit switch }
        end;
        inc(BladePos);
        if i <= 59 then inc(i)                         { ramp up
  }
        else if BladePos > (MaxBladeMoves - 60)    { ramp
down }
               then i := MaxBladeMoves - BladePos + 1;

        rotatestep(1,Sweepstep);
        port[Swepcoil] := ((port[Swepcoil] and $F3) or)
(sweepstep and $0F);
        BenDelay(delaytime + LnSteps[i]);
    until ((keypressed) or } (BladePos >= MaxBladeMoves);
    port[SwepCoil] := $00;
```

31

EP 0 361 847 B1

```
{    if keypressed then begin
        key := Readkey;
        StopCode := 2;
     end; }
     if BladePos >= MaxBladeMoves then begin
        if ShowSweep then writeln(' *** ERROR : STALL in
Sweeper Back ');
        delay(1000);
        beep;
        BladePos := MaxBladeMoves;
        StopCode := 3;
     end;
   end
   else sinemove(MaxBladeMoves,speed,'r','r',stopcode);
  end;


{*****************************************************}
procedure  SweeperForward(period  :  real;  StopCode  :
integer);
var
   i : integer;
   key : char;
   speed : real;
begin
 speed := SweeperParameter(period); {speed holds a raw
parameter now)
 if period < MinSafeSinePeriod then begin
   delaytime  := trunc(speed);
   if (ZStagePos < ZSafeSweep) then exit;
   port[Sweeplim] := $FF;
   i := 0;
   if ShowSweep then writeln('   SWEEPER FORWARD   ');
   repeat
     if (port[SweepLim] and $20) <> $20 then begin
        port[SwepCoil] := $00;
        BladePos := 0;
        StopCode   := 0;
```

```
            exit;   { home limit switch }
        end;
        dec(BladePos);
        if i <= 59 then inc(i)                    ( ramp up
  }
        else if BladePos < 60   { ramp down }
             then i := BladePos + 1;
        rotatestep(-1,sweepstep);
        port[Swepcoil]  :=  ((port[Swepcoil]  and  $F3)  or
}(sweepstep and $0F);
        BenDelay(delaytime + LnSteps[i]);
     until ((keypressed) or } (BladePos <= 0);
     port[SwepCoil] := $00;
{   if keypressed then begin
        key := Readkey;
        StopCode := 2;
     end; }
     if BladePos <= 0  then begin
        if ShowSweep then writeln(' *** ERROR : STALL in
Sweeper Forward ');
        BladePos := 0;
        StopCode := 3;
        beep;
        delay(1000);
     end;

  end
  else sinemove(MaxBladeMoves,speed,'r','l',stopcode); { We
should never reach }
                                        ( this point.

  }
  end;


{***************************************************)
procedure MoveBlade(period : real; StopCode:integer);
var
    RoundPeriod : integer;
```

```
    sweeperParam : real;
begin
    ( Determine machine type. )
    if ( ProcessSpeedM * 10 ) >= 1 then
    ( NCR 920 ) {Too cool! JFT}
    begin
        if BladePos <> 0 then expsinemove( MaxBladeMoves ,
SweeperParameter( period ) , 'r' )
                        else expsinemove( MaxBladeMoves ,
SweeperParameter( period ) , 'l' );
    end else begin
    ( Wyse 286 )
        if period >= MinSafeSinePeriod
            then if BladePos <> 0 then
expsinemove(MaxBladeMoves,SweeperParameter(period),'r')
                                        e l s e
expsinemove(MaxBladeMoves,SweeperParameter(period),'l')
            else if BladePos <> 0 then
sweeperforward(period,StopCode)
                        else sweeperback(period,StopCode);
    end;
end;


(**************************************************)
procedure PlungerHoldingTorque;
begin
    if StepIter >= $09
    then port[SwepCoil] := ( $08 * 16 and $F0 )
    else port[SwepCoil] := ( $04 * 16 and $F0 );
end;
(**************************************************)
procedure PlungerDown(numMoves : longint; var StopCode :
integer);
(*** numMoves of 0 means go to Plunger limit ***)
var
    i,j,k : integer;
```

34

```
    m : longint;    {} ( Changed from integer to accomodate
SLA-500. )
begin
    if PlungerPos >= MaxPlungeMoves then exit;
        if   numMoves   <>   1   then
Read3DStateFile(ZStagePos,PlungerPos,JunkSC);
    if ShowSweep then writeln('   MOVING PLUNGER DOWN -
setting level.');
    if numMoves = 0 then m := MaxPlungeMoves else m :=
numMoves;
    k := 1;
    port[SwepCoil] := ( plungeStep * 16 and $F0 );
    repeat
        inc(k);
        for j := 1 to minplungemoves do begin
            rotatestep(1,plungestep);
            port[Swepcoil] := {(port[Swepcoil] and $F0) or}
(plungestep*16 and $F0);
            delay(PlungeMotorDelay);
        end;
        inc(PlungerPos);
    until (k >= m) or (PlungerPos >= MaxPlungeMoves);
    if numMoves <> 1 then PlungerHoldingTorque;
{            if   numMoves   <>   1   then   }
Update3DStateFile(ZStagePos,PlungerPos,JunkSC);
end;


(*****************************************************)
procedure PlungerUp(numMoves : longint; var StopCode :
integer);
(*** numMoves of 0 means go to Plunger limit ***)
var
  i,j,k : integer;
  m : longint;
  HitLimit : boolean;
begin
    HitLimit := false;
```

```
    PlungerStalled := false;
    ( If moving up full stroke, set the plunger position to
twice
        MaxPlungeMoves give greater assurance that the
plunger reaches the top. )
    StopCode := 1;  ( Default to stall, set to 0 when we
hit switch. )
    if PlungerPos <= 0 then exit;
        i f    n u m M o v e s    < > 1    t h e n
Read3DStateFile(ZStagePos,PlungerPos,JunkSC);
    if numMoves = 0 then PlungerPos := 2 * MaxPlungeMoves;
    if ShowSweep then writeln('   MOVING PLUNGER UP   -
setting level.');
    if numMoves = 0 then m := 2 * MaxPlungeMoves else m :=
numMoves;
    k := 1;
    port[SwepCoil] := ( plungeStep * 16 and $F0 );
    repeat
        inc(k);
        for j := 1 to minplungemoves do begin
                rotatestep(-1,plungestep);
                port[Swepcoil] := ((port[Swepcoil] and $F0)
or )(plungestep*16 and $F0);
                delay(PlungeMotorDelay);
        end;
        dec(PlungerPos);
        if (port[SweepLim] and $80) <> $80 then begin
            port[SwepCoil] := $00;
            PlungerPos := 0;
            StopCode   := 0;
            HitLimit := true;
            ( Update3DStateFile OK for numMoves = 1 )
            Update3DStateFile(ZStagePos,PlungerPos,JunkSC);
            exit;  ( plunger top limit switch )
        end;
    until (k >= m) or ( PlungerPos <= 0);
    if numMoves <> 1 then PlungerHoldingTorque;
```

```
{ If this was a full-stroke move, check to see if we
hit the limit switch.  If we didn't, then display that
situation according to OpMode. }
    if numMoves = 0 then begin
        if not HitLimit then PlungerStalled := true;
    end;
{             if   numMoves   <>   1   then   }
Update3DStateFile(ZStagePos,PlungerPos,JunkSC);
end;


{ **************************************************** }


procedure ReadBiCell(recurs:char;var FinalLevel:integer);
{***   recurs = R = recursive readings to check validity
                 N = non-recursive reading
                 S = average of 5 simple straight bi-cell
values with no validity checks ***}
const
  LevelReading = 128;
var
  b,i,j,count,k,newlevel,sum,stopcode : integer;
  junkstr,sign : string;
begin
    count := 1;
    if Recurs = 'S' then count := 5;
    sum   := 0;
  for k := 1 to count do begin
    port[780] := 12;        { addr ADC port = 780 has 16
channels, use 5 }
    for i := 1 to 100 do inc(j); { 10 us }
    i := 0;
    repeat
        inc(i);
        b := port[$310];
        newLevel := port[$30C];
    until (b<128) or (i>2000); {re-repeat this loop}
    NewLevel := NewLevel - LevelReading;
```

```
        FinalLevel := NewLevel;
        sum := sum + FinalLevel;
        if ShowSweep then begin
{}          {writeln('          NewLevel =',NewLevel,'
      ');}
          clrscr;
          if NewLevel > 0 then sign := '-' else sign := '+';
            junkstr   :=   concat('New    level   =
      ',sign,intstr(abs(NewLevel)));
          centertext(junkstr,1);
          delay(100);
        end;
     end; { for 1 to count }
        if (ShowSweep) and ( count > 1) then begin
          if  sum  >  0  then  FinalLevel  :=  trunc((sum  /
count)+0.5)
                    else   FinalLevel   :=   trunc((sum   /
count)-0.5);
{}    { writeln('   AveLevel =',FinalLevel,'        ');}
          if NewLevel > 0 then sign := '-' else sign := '+';
            junkstr   :=   concat('New    level   =
      ',sign,intstr(abs(NewLevel)));
          centertext(junkstr,1);
          delay(200);
        end;
        if (Recurs = 'S') then exit;
        if (NewLevel = BIAS) and (Recurs = 'R') then begin
          { test for laser blocked or off bi-cell }
          PlungerUp(20,StopCode);
          ReadBiCell('N',NewLevel);
          if NewLevel = BIAS then begin
            PlungerDown(40,StopCode);
            ReadBiCell('N',NewLevel);
            if NewLevel = BIAS then begin
              centertext('ERROR : Laser Beam is blocked or
off Bi-Cell.',1);
                UserWait;
```

```
              Halt(1);
          end;
          PlungerUp(40,StopCode);
      end;
      PlungerDown(20,StopCode);
  end; { NewLevel = BIAS }
end;    { ReadBiCell      }


{ ************************************************** }


procedure WhichBladeLimit(var LimitSwitch: integer);
{ 1 = front, 2 = back, 3 = neither }
begin
   if (port[SweepLim] and $20) <> $20 then begin
          port[SwepCoil] := $00;
          LimitSwitch:= 1;
          BladePos   := 0;
          exit;  { home limit switch }
   end;
   if (port[SweepLim] and $40) <> $40 then begin
          port[SwepCoil] := $00;
          LimitSwitch:= 2;
          BladePos   := MaxBladeMoves;
          exit;   { back limit switch }
   end;
   LimitSwitch := 3;
end;
{ ************************************************ }
procedure InitSweeperandPlunger(option:integer;
                                var StopCode : integer);
var
   wastekey : char;
   kk : integer;
begin

   port[$30B] := $98;   { init 8255 }
   port[$30B] := $98;   (control port)
```

```
      port[Swepcoil] := 0;        {8255 port C}
      port[Sweeplim] := 0;        {8255 port B}
      delay(1);


      WhichBladeLimit(kk); { this sets BladePos }
      if kk = 3 then begin
         beep;
         writeln;
         Centerln(' CAUTION:    Sweeper blade not in home
position.');
         Centerln(' You may manually reposition the blade at
front of vat. ');
         userwait;
         delay(1);
         {}{}kk:=-1234;
         WhichBladeLimit(kk);
         {}{}Window(1,1,80,25);
         {}{}Writeln(kk);
         if kk = 3 then begin
            gotoxy(1,1);
            DrawBox(3,7,73,14,2);
            repeat delay(100) until keypressed;
            junkkey := readkey;
            CursorOn;
            Halt(1);
         end;
      end;
      PlungerPos := MaxPlungeMoves +150;     { Pad it so we
KNOW it goes to limit }
      PlungerUp(0,StopCode);
      PlungerDown((MaxPlungeMoves div 2),StopCode);
      PlungerPos := MaxPlungeMoves div 2;
      if ShowSweep then begin
         writeln('  SWEEPER, PLUNGER, AND ZSTAGE INITIALIZED
');
         delay(800);
      end;
```

```
      if keypressed then wastekey := ReadKey;
  end;


  (***************************************************)


  procedure InitSweeper(option:integer;
                                var StopCode : integer);
  var
     wastekey : char;
     kk : integer;
  begin


     port[$30B] := $98;    ( init 8255 )
     port[$30B] := $98;    (control port)
     port[Swepcoil] := 0;     (8255 port C)
     port[Sweeplim] := 0;     (8255 port B)
     delay(1);


     WhichBladeLimit(kk); ( this sets BladePos )
     if kk = 3 then begin
        beep;
        writeln;
        Centerln(' Sweeper blade not in home position,
program aborting.  ');
        Centerln(' You may manually reposition the blade at
front of vat. ');
        userwait;
        if (port[SweepLim] and $20) <> $20 then begin
           port[Sweeplim] := $00;
        end else begin
           gotoxy(1,1);
           DrawBox(3,7,73,14,2);
           repeat delay(100) until keypressed;
           junkkey := readkey;
           CursorOn;
           Halt(1);
        end;
```

```
      end;
   end;
   (*****************************************************)
   procedure LiquidStableDelay;
   ( Take  bicell  readings  until  the  difference  between
   readings is within epsilon a specified number of times in
   a row.  )
   const
      NumOf0DeltaReadsNeeded          = 5;
      deltaEpsilon                    = 3;
   var
     level,oldlevel          : integer;
     numOf0DeltaReads        : integer;
   begin
      numOf0DeltaReads := 0;
      ReadBiCell('S',level);
      ReadBiCell('S',oldlevel);
      while  (abs(level  -  oldlevel)  >  deltaEpsilon)  and
   (NumOf0DeltaReads < NumOf0DeltaReadsNeeded) do
      begin
         ReadBiCell('S',level);
         ReadBiCell('S',oldlevel);
         if  abs(level  -  oldLevel)  <=  deltaEpsilon  then
   inc(NumOf0DeltaReads);
      end;
   end;
   (*****************************************************)

   procedure   SetPlunger(numSetPlungers:integer;var
   FinalLevel:integer );
   var
     level,oldlevel, timesthru,stopcode : integer;
     OKfirstTry         : boolean;
     zPos               : real;
     pPos               : longint;
     junksc             : integer;
   begin ( SetPlunger )
```

```
(*  {*****************}
    if PMWriteFlag then begin
        Read3DStateFile(zPos,pPos,junksc);
        ReadBiCell('N',level);
        Append(PMWriteFile);
        Writeln(PMWriteFile,zPos:2:6,' : ', pPos:1,' : ',
level:1, '  SetPlunger commences...');
        Close(PMWriteFile);
    end;
    {*****************}  *)
        OKfirstTry := false;
        TimesThru := 0;
        if ShowSweep then begin
            if NumSetPlungers = -1 then writeln('AUTOMATIC
MODE')
                else  writeln('Number   of   Level
Checks=',numSetPlungers);
        end;
{}      ReadBiCell('N',level);
{}      if (level < Uplim) and (level > lowlim) then begin
            if ShowSweep then writeln('Bi-cell level OK first
time through SetPlunger.');
(*      {*****************}
        if PMWriteFlag then begin
            Read3DStateFile(zPos,pPos,junksc);
            ReadBiCell('N',level);
            Append(PMWriteFile);
            Writeln(PMWriteFile,zPos:2:6,' : ', pPos:1,' : ',
level:1, '  SetPlunger completed.');
            Close(PMWriteFile);
        end;
        {*****************}  *)
            exit;
        end;
        if NumSetPlungers = -1 then NumSetPlungers := 25;
    repeat
        if ShowSweep then writeln('READING BI-CELL');
```

43

```
      ReadBiCell('N',level);
      if (NumSetPlungers = 25) and (TimesThru>=1) and
          (Level<=UpLim)    and    (Level>=LowLim)    then
OKfirstTry:= true;


(*    if TimesThru = 0 then begin
      { do a validity test here -- }
      oldlevel := level;
      PlungerUp(20,StopCode);
      ReadBiCell('N',level);
      if level = oldlevel then begin
          PlungerDown(40,StopCode);
          ReadBiCell('N',level);
          if ( level = oldlevel ) and ( level = bias ) then
begin
              writeln;
              writeln('ERROR : Laser Beam is not within a
usable bi-cell range.');
              writeln;
              UserWait;
            (   AddRemoveResin(level); ) Halt(1);
          end;
      end else PlungerDown(20,StopCode);
    end;  { TimesThru = 0 } *)


      if level > UpLim then begin
          repeat
              PlungerDown(1,StopCode);
              ReadBiCell('N',level);
          until level < UpLim;
      end;
      if level < LowLim then begin
          repeat
              PlungerUp(1,StopCode);
              ReadBiCell('N',level);
          until level > LowLim;
      end;
```

```
                        { the state file is not updated in Plunger moves of
              1 case... }
                    Update3DStateFile(ZStagePos,PlungerPos,StopCode);
                    inc(TimesThru);
                    LiquidStableDelay;
              {}(*   {}  delay(PD2 * 1000); *)
                 {   if not((TimesThru > NumSetPlungers) or OKfirstTry)
                    then delay(PD2*1000); }
                 until (TimesThru > NumSetPlungers) or OKfirstTry;
                 if  ShowSweep  then  writeln  ('         FINAL   LEVEL
              =',FinalLevel);
              (* {****************}
                 if PMWriteFlag then begin
                    Read3DStateFile(zPos,pPos,junksc);
                    ReadBiCell('N',level);
                    Append(PMWriteFile);
                    Writeln(PMWriteFile,zPos:2:6,' : ', pPos:1,' : ',
              level:1, '  SetPlunger completed.');
                    Close(PMWriteFile);
                 end;
                 (****************)  *)
                 PlungerHoldingTorque;
              end;  { SetPlunger }


              {*************************************************}
              p     r     o     c     e     d     u     r     e
              OneSweep(index:integer;DipDepth,LayerDepth:real);
              var
                 stopcode : integer;
                 currentZPos : real;
                 junkPlungerPos : longint;
              begin
                 Read3DStateFile(currentZPos, junkPlungerPos, stopcode);

                 (*if currentZPos > 0 then DipDepth := 8 else DipDepth
              := 6;*)
                 if index = 1
```

```pascal
    then begin
      if ShowSweep then writeln('   ZMove =',(-(-DipDepth
- BladeGapL0
                + (LayerDepth  *  BladeGap[index]/100))
/25.4):7:3);
      ZMoveGivenDistance(ZAccel,ZVeloc,-(-DipDepth    -
BladeGapL0 +
            (LayerDepth   *   BladeGap[index]/100))/25.4
(conv. to inches))
    end else begin
      if   ShowSweep   then   writeln('          ZMove
=',(-((LayerDepth * BladeGap[index]/100)-
                          (L a y e r D e p t h    *
BladeGap[index-1]/100))/25.4):7:3);
      ZMoveGivenDistance(ZAccel,ZVeloc,-((LayerDepth    *
BladeGap[index]/100)-
                          (L a y e r D e p t h    *
BladeGap[index-1]/100))/25.4);
    end;
    MoveBlade(Period[index],StopCode);
end;


(******************************************************)
procedure   DoSweep(DipDepth,LayerDepth:real;
RelaxationTime:integer);
var
    level,oldlevel,isweep,StopCode : integer;
    currentZPos : real;
    junkPlungerPos : longint;
begin
    Read3DStateFile(currentZPos,junkPlungerPos,stopcode);

    (*if currentZPos > 0 then DipDepth := 8 else DipDepth
:= 6;*)
{ ZW=RelaxationTime in seconds // ZD=DipDepth in mm
  ZV=ZtableVeloc // ZA := ZtableAccel //   Next Layer
Thickness = LayerDepth  }
```

```
if ShowSweep then begin
    writeln('   Layer Thickness(mm)=',LayerDepth:5:3,

                                                     '
(mils)=',(LayerDepth*1000/25.4):5:3);
    writeln('    ZMove =',(-DipDepth/25.4):7:3,' inches
');
    writeln('            =',-DipDepth:7:3,' mm ');
end;
{ Move down ZD, DipDepth. }
ZMoveGivenDistance(ZAccel,ZVeloc,-DipDepth/25.4);
{ wait PD }
Delay(3500);
LiquidStableDelay;
(*  delay(postDipDelay*1000); *)
if  (numchecks  <>  0)  and  (not  demoFlag)  then
SetPlunger(numChecks,level);

if showsweep then begin
    writeln('ZstagePos=',ZstagePos:7:2);
    writeln('BladeGapL0/25.4=',(BladeGapL0/25.4):7:2);
    writeln('DipDepth (mils)=',(DipDepth/25.4):7:3);
    writeln('LayerDepth  (mils)=',(LayerDepth/25.4):7:3);

    writeln('1-2-3+4=',( ZStagePos - (BladeGapL0/25.4)
- (DipDepth/25.4)
    + (LayerDepth/25.4) ):7:3);
    writeln('ZSafeSweep=',ZSafeSweep:7:3);
    userwait;
end;

{ no sweep case }
{ Note this critera does not involve BladeGap[i]. }
if (numSweeps <= 0) or (( ZStagePos - (BladeGapL0/25.4)
- (DipDepth/25.4)
    + (LayerDepth/25.4) ) < ZSafeSweep) then begin
    if ShowSweep then writeln('*** Unsafe to sweep.');
```

```
    { Move elevator up to the 'draw next layer' position.
  }
      if    ShowSweep    then    writeln('            ZMove
=',(-(LayerDepth-DipDepth)/25.4):7:3);

ZMoveGivenDistance(ZAccel,ZVeloc,-(LayerDepth-DipDepth)/
25.4);
      delay(5);
      Delay(RelaxationTime(ZW));
      exit;
   end;


   for isweep := 1 to numSweeps do begin
      OneSweep(isweep,DipDepth,LayerDepth);
   end;
   {Now  bring  the  system  to  pre-sweep  plus  part  layer
thickness.}
   if    ShowSweep    then    writeln('            ZMove
=',(-(BladeGapL0-(LayerDepth * BladeGap[numSweeps]/100)+
LayerDepth)/25.4):7:3);
   if not HopNguyen then begin
               i f    d e m o F l a g    t h e n
ZMoveGivenDistance(ZAccel,ZVeloc,-(BladeGapL0-
               (LayerDepth * BladeGap[numSweeps]/100)
)/25.4)
                             e    l    s    e
ZMoveGivenDistance(ZAccel,ZVeloc,-(BladeGapL0-(LayerDepth
*
                             BladeGap[numSweeps]/100)
+LayerDepth)/25.4);
   end;
   delay(10);
end;


{****************************************************}


{****************************************************}
```

```
function expSweeperSqrVelocity(vel:real):real;
( Converts a velocity in inches per second to the sweepers
private units.  Smaller trueVels correspond to greater
velocities.                       )

var
    trueVel : real;
begin
    if vel <= 1 then trueVel := 76
    else if vel <= 2  then trueVel := (vel - 1) * (36-76)
+ 76
    else if vel <= 3  then trueVel := (vel - 2) * (23-36)
+ 36
    else if vel <= 4  then trueVel := (vel - 3) * (17-23)
+ 23
    else if vel <= 5  then trueVel := (vel - 4) * (12-17)
+ 17
    else if vel <= 6  then trueVel := (vel - 5) * (10-12)
+ 12
    else if vel <= 7  then trueVel := (vel - 6) * (9-10)
+ 10
    else if vel <= 8  then trueVel := (vel - 7) * (7-9)
 + 11
    else if vel <= 9  then trueVel := (vel - 8) * (6-7)
 +  9
    else if vel <= 10 then trueVel := (vel - 9) * (6-7)
 +  9
    else trueVel := 5;
    expSweeperSqrVelocity := truevel;
end;


procedure expSweeperBack;
( StopCode 0 = normal return ( could be the limit )
           1 = abnormal - limit hit before completed move
( ZStage )
           2 = abnormal - keypressed
           3 = stall )
```

```
var
  i : integer;
  key : char;
{}{  speed : real; }
begin
    delaytime  := trunc(speed);
    if (ZStagePos < ZSafeSweep) then exit;
    port[Sweeplim] := $FF;
    i := 0;
    if ShowSweep then writeln('   SWEEPER BACK   ');
    repeat
        if (port[SweepLim] and $40) <> $40 then begin
            port[SwepCoil] := $00;
            BladePos := MaxBladeMoves;
            exit; { hit limit switch }
        end;
        inc(BladePos);
        if i <= 59 then inc(i)                      { ramp up
  }
        else if BladePos > (MaxBladeMoves - 60)     { ramp
down }
            then i := MaxBladeMoves - BladePos + 1;

        rotatestep(1,Sweepstep);
        port[Swepcoil]  := {(port[Swepcoil]  and  $F3)  or}
(sweepstep and $0F);
        BenDelay(delaytime + LnSteps[i]);
    until {(keypressed) or } (BladePos >= MaxBladeMoves);
    port[SwepCoil] := $00;
{   if keypressed then begin
        key := Readkey;
    end; )
    if BladePos >= MaxBladeMoves then begin
        if ShowSweep then writeln(' *** ERROR : STALL in
Sweeper Back ');
        delay(1000);
        beep;
```

50

```
      BladePos := MaxBladeMoves;
    end;
  end;


  {****************************************************}
  procedure expSweeperForward;
  var
     i : integer;
     key : char;
  {}{   speed : real; }
  begin
     delaytime  := trunc(speed);
     if (ZStagePos < ZSafeSweep) then exit;
     port[Sweeplim] := $FF;
     i := 0;
     if ShowSweep then writeln('   SWEEPER FORWARD    ');
     repeat
        if (port[SweepLim] and $20) <> $20 then begin
           port[SwepCoil] := $00;
           BladePos := 0;
           exit;  { home limit switch }
        end;
        dec(BladePos);
        if i <= 59 then inc(i)             { ramp up   }
        else if BladePos < 60   { ramp down }
             then i := BladePos + 1;

        rotatestep(-1,sweepstep);
        port[Swepcoil]  :=  ((port[Swepcoil]  and  $F3)  or
  }(sweepstep and $0F);
        BenDelay(delaytime + LnSteps[i]);
     until ((keypressed) or } (BladePos <= 0);
     port[SwepCoil] := $00;
  {   if keypressed then begin
        key := Readkey;
     end; }
     if BladePos <= 0  then begin
```

51

```
      if ShowSweep then writeln(' *** ERROR : STALL in
Sweeper Forward ');
      BladePos := 0;
      beep;
      delay(1000);
   end;
end;
procedure expMoveBlade(period:real);
var
   SineMoveParam : real;
begin
{}{  if period < 2 then begin
      if BladePos <> 0 then expsweeperforward
                     else expsweeperback;
   end else begin
      case period of
      2 : SineMoveParam := 10.5;
      3 : SineMoveParam := 6.8;
      4 : SineMoveParam := 6.2;
      5 : SineMoveParam := 6.1;
      6 : SineMoveParam := 4;
      7 : SineMoveParam := 3;
      8 : SineMoveParam := 2.98;
      9 : SineMoveParam := 2.97;
      10: SineMoveParam := 2.95;
      end;
           i f    B l a d e P o s    < >    0    t h e n
expsinemove(MaxBladeMoves,SineMoveParam,'r')
                                             e l s e
expsinemove(MaxBladeMoves,SineMoveParam,'l');
  end; }
      sinemoveparam := period;
{}{                    if   BladePos    <>    0    then
expsinemove(MaxBladeMoves,SineMoveParam,'r')
                                             e l s e
expsinemove(MaxBladeMoves,SineMoveParam,'l');}
      if BladePos <> 0 then expsweeperforward(period)
```

```
                              else expsweeperback(period);

end;


{*********************************************************}
procedure SweepCal;
var
    resp : integer;
    theDelay : integer;
    realDelay : real;

    hour1, hour2,
    min1, min2,
    sec1, sec2,
    sec1100, sec2100 : WORD ;

begin
    repeat
        write( '1) for square, 2) for sine ?' );
        readln( resp );
        if resp = 1 then begin
            write( 'Raw delay ? ' );
            readln( theDelay );
            GetTime(hour1, min1, sec1, sec1100) ;
                    if   B l a d e P o s   < >   0   t h e n
sweeperforward(theDelay,StopCode)
                                                      e l s e
sweeperback(theDelay,StopCode);
        end else if resp = 2 then begin
            write( 'Raw delay ? ' );
            readln( realDelay );
            GetTime(hour1, min1, sec1, sec1100) ;
                    if   B l a d e P o s   < >   0   t h e n
expsinemove(MaxBladeMoves,realDelay,'r')
                                                      e l s e
expsinemove(MaxBladeMoves,realDelay,'l')
```

53

```
        end;
        GetTime(hour2, min2, sec2, sec2100) ;
        writeln('Start: ', hour1, ':', min1, ':', sec1, ':',
sec1100:2) ;
        writeln('Start: ', hour2, ':', min2, ':', sec2, ':',
sec2100:2) ;
    until false; {forever}
end;
(************************************************)
begin
    { blade  must  be  at  the  front,  already  checked  in
utlzstage init }
    SweepDefaults;
    ReadSWEEPxPRMfile;
    ReadMACHINExPRMfile;
    BladePos := 0;
    StepIter := 0;
    NoSweep  := false;
    ZClearBuffer;
    Read3DStateFile(ZStagePos,PlungerPos,junkSC) ;
end.
unit SINSTEP;
{=============================================================

    3D Systems Stereolithography System Software

    =============================================================


    01/24/89 JFT Creation.



    ----------------------------------------------------------}
(**************************************************************)
interface
uses CRT,DOS,UTLZSTAGE,UTILITY1;

const
    MaxSafeSineSpeed = 1;
var
```

```
    BladePos               : integer;

    procedure  sinemove(steps:  integer;  SweepPeriod:  real;
    device,dir : char; stopcode:integer);
    procedure expsinemove(steps:integer; rawParam: real; dir
    : char);
    {******************************************************}
    implementation


const
    JB                 = $300;  {plunger, recoater address}
    JBC                = $308;  {8255: 4 MSB: plunger}
    CoilDataPort   = $309;  {        4 LSB: recoater}
    MaxBladeMoves = 1255; { pre - microstepping }
    SwepCoil = $309;
    SweepLim = $308;



function SweeperVelocity(InchesPerSec:real):real;
{ No longer used--JFT, 4/3/89 }
{ Used by SineMove to correct the velocity parameter to
correct speed. }
var
    vel : real;
begin
    if InchesPerSec < 0.1 then vel := (InchesPerSec /
0.1) * 0.11
    else  if  InchesPerSec  <=  0.2  then  vel  :=
((InchesPerSec - 0.1) / 0.1) * (0.2375-0.11) + 0.11
    else  if  InchesPerSec  <=  0.5  then  vel  :=
((InchesPerSec - 0.2) / 0.1) * (0.68-0.2375) + 0.2375
    else  if  InchesPerSec  <=  1.0  then  vel  :=
((InchesPerSec - 0.5) / 0.3) * (1.55-0.68) + 0.68;
    SweeperVelocity := vel;
end;
```

```
{} {sinemove: microstepping of recoater and plunger:  see
description of parameter at begin of file.   Last test
results: better performance with CoProc N+, Ramp seemed to
be to slow for higher velocities (>10), so AccelRampMax :=
2 without further tests ! Test for this procedure:
MICRO1.PAS (see conditional defines)}

{ No longer used.   Expsinemove is used instead--JFT,
4/3/89 }
procedure sinemove(steps: integer; SweepPeriod: real;
device,dir : char; stopcode:integer);

const
    DAngleArray                 : array[0..7] of integer =

(10,10,10,15,15,15,30,30);
    AccelRampMax                : integer = 2;
    RampLength                  : integer = 4;

type
    LookUpTable = array [0..45] of real;

var

    stepcount                   : integer;
    X1,X2                       : real;
    Fld,AccelValue              : integer;
    DIndex, DAngle              : integer;
    SinOfAngle,CosOfAngle       : integer;
    QuarterPi,PeriodPoint       : integer;
    FldTimes                    : LookUpTable;
    BitFactor                   : integer;
    X0Bit,X1Bit,X2Bit           : integer;
    CoilABit1,CoilABit2         : integer;
    CoilBBit1,CoilBBit2         : integer;
    SingleBit,FLdCount          : integer;
    j,double,accelcount         : integer;
```

```
    single,null              : integer;
    output                   : integer;
    rep                      : integer;
    whichLim                 : integer;
    veloc                    : real;


begin
    if (ZStagePos < ZSafeSweep) then exit;
    port[Sweeplim] := $FF;
    veloc := SweeperVelocity(12.1/SweepPeriod);

    if device = 'p' then BitFactor := 1
    else BitFactor := 16;
    CoilABit1 := 32 div BitFactor;
{20H, 2}
    CoilABit2 := 16 div BitFactor;
{10H, 1}
    CoilBBit1 := 128 div BitFactor;
{80H, 8}
    CoilBBit2 := 64 div BitFactor;
{40H, 4}


    {Fld}
    Fld := round(100/veloc+0.5);


    {Dangle}
    DIndex := round(veloc+0.5)-1;
    if DIndex < 0 then DIndex := 0;
    if DIndex > 7 then DIndex := 7;
    for j := 0 to DIndex do Dangle := DAngleArray[j];


    ( Set QuarterPi to one-fourth period. )
    QuarterPi := 90 div DAngle;


    ( Build a table of values for the five-fourths period
interval. )
    ( The extra quarter lets us look up cosines easily.  )
```

```
    for j:= 0 to (5 * QuarterPi) do
        FldTimes[j]:=sin(pi / 180 * DAngle * j) * Fld;


    for stepcount := 1 to steps do begin

     if (port[SweepLim] and $20) <> $20 then
      begin
        if upcase(dir)='R' then
         begin
           port[SwepCoil] := $00;
           bladePos:=0;
           StopCode   := 0;
           exit;
         end;
      end else if (port[SweepLim] and $40) <> $40 then
       begin
         if upcase(dir)='L' then
          begin
            port[SwepCoil] := $00;
            bladePos:=MaxBladeMoves;
            StopCode    := 0;
            exit;
          end;
       end;

     if (stepcount <= RampLength) then begin
                      A  c  c  e  l  V  a  l  u  e       :  =
AccelRampMax*round(veloc/3)*(RampLength-stepcount+1)
         div RampLength;                    {accel}
         if AccelValue < 1 then AccelValue := 1;
       end;

     if ((steps-stepcount+1) <= RampLength) then begin
                      A  c  c  e  l  V  a  l  u  e     :  =
AccelRampMax*round(veloc/3)*(RampLength-(steps-stepcount))
```

```
      div RampLength;
      if AccelValue < 1 then AccelValue := 1;
    end else if (stepcount > RampLength) then
    AccelValue := 1;


    { Point SinOfAngle at lo or hi end of table,
depending on step }
    { direction.  CosOfAngle is one-quarter pi ahead of
this. }
    if upcase(dir) = 'L'
    then SinOfAngle := 0
    else SinOfAngle := 360 div DAngle;
    CosOfAngle := SinOfAngle + QuarterPi;


    for PeriodPoint := 0 to (4 * QuarterPi) do begin

     X1 := FldTimes[SinOfAngle];
     if X1 > 0 then X1bit := CoilABit1         (32   20H)
     else if X1 < 0 then X1bit := CoilABit2    (16   10H)
     else X1bit := 0;


     X2 := FldTimes[CosOfAngle];
     if X2 > 0 then X2bit := CoilBBit1         (128  80H)
     else if X2 < 0 then X2bit := CoilBBit2    (64   40H)
     else X2bit := 0;
     X0Bit := 0;

     if abs(X1) < abs(X2) then begin
       double := abs(round(X1 +0.5));
       SingleBit := X2bit;
     end;
     if abs(X2) <= abs(X1) then begin
       double := abs(round(X2 +0.5));
       SingleBit := X1bit;
     end;
     single := abs(round(abs(X1)-abs(X2)+0.5));
     null   := Fld-double-single;
```

```
    for accelcount := 1 to AccelValue do begin

        if upcase(dir) = 'L' then begin          {left}

          if double > 0 then begin
            for j := 0 to double do port[CoilDataPort] :=
X1bit+X2bit;
            end;
          if single > 0 then begin
            for j := 0 to single do port[CoilDataPort] :=
SingleBit;
            end;
          if null > 0 then begin
             for j := 0 to null do port[CoilDataPort] :=
X0Bit;
            end;
                    {end dir ="l"}


        end else begin {dir "r")
{right}


          if null > 0 then begin
             for j := 0 to null do port[CoilDataPort] :=
X0Bit;
            end;
          if single > 0 then begin
            for j := 0 to single do port[CoilDataPort] :=
SingleBit;
             end;
          if double > 0 then begin             .
             for j := 0 to double do port[CoilDataPort] :=
X1bit+X2bit;
              end;
          end;               {dir "r"}


        end;                          {accelcount}
```

```
      ( Update lookup table pointers. )
      if upcase(dir) = 'R' then begin
        SinOfAngle := SinOfAngle-1;
      end else begin
        SinOfAngle := SinOfAngle+1;
      end;
      CosOfAngle := SinOfAngle + QuarterPi;


      end;                          (for SinOfAngle...)


    end;                          (steps)


    port[CoilDataPort] := $FF;
    if BladePos <= 0  then begin
{}      ( if ShowSweep then writeln(' *** ERROR : STALL in
Sweeper SineMove Forward ');)
      BladePos := 0;
      StopCode := 3;
      beep;
      delay(1000);
    end;
end;


{********************************************************}

procedure expsinemove(steps:integer; rawParam: real; dir
: char);

const
    DAngleArray                  : array[0..7] of integer =

(10,10,10,15,15,15,30,30);
    AccelRampMax                 : integer = 2;
    RampLength                   : integer = 4;
type
    LookUpTable = array [0..45] of real;
```

```
var

        stepcount                       : integer;
        X1,X2                           : real;
        Fld,AccelValue                  : integer;
        DIndex, DAngle                  : integer;
        SinOfAngle,CosOfAngle           : integer;
        QuarterPi,PeriodPoint           : integer;
        FldTimes                        : LookUpTable;
        BitFactor                       : integer;
        X0Bit,X1Bit,X2Bit               : integer;
        CoilABit1,CoilABit2             : integer;
        CoilBBit1,CoilBBit2             : integer;
        SingleBit,FLdCount              : integer;
        j,double,accelcount             : integer;
        single,null                     : integer;
        output                          : integer;
        rep                             : integer;
        whichLim                        : integer;
        veloc                           : real;

begin
    if (ZStagePos < ZSafeSweep) then exit;
    port[Sweeplim] := $FF;
    veloc := rawParam;

    BitFactor := 16;
    CoilABit1 := 32 div BitFactor;          {20H, 2}
    CoilABit2 := 16 div BitFactor;          {10H, 1}
    CoilBBit1 := 128 div BitFactor;         {80H, 8}
    CoilBBit2 := 64 div BitFactor;          {40H, 4}

    {Fld}
    Fld := round(100/veloc+0.5);

    {Dangle}
```

```
DIndex := round(veloc+0.5)-1;
if DIndex < 0 then DIndex := 0;
if DIndex > 7 then DIndex := 7;
for j := 0 to DIndex do Dangle := DAngleArray[j];


{ Set QuarterPi to one-fourth period. }
QuarterPi := 90 div DAngle;


{ Build a table of values for the five-fourths period
interval. }
{ The extra quarter lets us look up cosines easily.
 }
for j:= 0 to (5 * QuarterPi) do
    FldTimes[j]:=sin(pi / 180 * DAngle * j) * Fld;



for stepcount := 1 to steps do begin

 if (port[SweepLim] and $20) <> $20 then
  begin
    if upcase(dir)='R' then
     begin
       port[SwepCoil] := $00;
       bladePos:=0;
       exit;
     end;
   end else if (port[SweepLim] and $40) <> $40 then
    begin
      if upcase(dir)='L' then
       begin
         port[SwepCoil] := $00;
         bladePos:=MaxBladeMoves;
         exit;
       end;
     end;

    if (stepcount <= RampLength) then begin
```

```
                AccelValue        :  =
AccelRampMax*round(veloc/3)*(RampLength-stepcount+1)
        div RampLength;                    {accel}
        if AccelValue < 1 then AccelValue := 1;
      end;


      if ((steps-stepcount+1) <= RampLength) then begin
                AccelValue        :  =
AccelRampMax*round(veloc/3)*(RampLength-(steps-stepcount))

        div RampLength;
        if AccelValue < 1 then AccelValue := 1;
      end else if (stepcount > RampLength) then
      AccelValue := 1;


      { Point SinOfAngle at lo or hi end of table,
depending on step }
      { direction.  CosOfAngle is one-quarter pi ahead of
this.      }
      if upcase(dir) = 'L'
      then SinOfAngle := 0
      else SinOfAngle := 360 div DAngle;
      CosOfAngle := SinOfAngle + QuarterPi;


      for PeriodPoint := 0 to (4 * QuarterPi) do begin

       X1 := FldTimes[SinOfAngle];
       if X1 > 0 then X1bit := CoilABit1        (32   20H)
       else if X1 < 0 then X1bit := CoilABit2   (16   10H)
       else X1bit := 0;

       X2 := FldTimes[CosOfAngle];
       if X2 > 0 then X2bit := CoilBBit1        (128 80H)
       else if X2 < 0 then X2bit := CoilBBit2   (64   40H)
       else X2bit := 0;
       X0Bit := 0;
```

```
if abs(X1) < abs(X2) then begin
  double := abs(round(X1 +0.5));
  SingleBit := X2bit;
end;
if abs(X2) <= abs(X1) then begin
  double := abs(round(X2 +0.5));
  SingleBit := X1bit;
end;
single := abs(round(abs(X1)-abs(X2)+0.5));
null   := Fld-double-single;

for accelcount := 1 to AccelValue do begin

    if upcase(dir) = 'L' then begin          {left}

      if double > 0 then begin
        for j := 0 to double do port[CoilDataPort] :=
XIbit+X2bit;
      end;
      if single > 0 then begin
        for j := 0 to single do port[CoilDataPort] :=
SingleBit;
      end;
      if null > 0 then begin
         for j := 0 to null do port[CoilDataPort] :=
XOBit;
      end;
              (end dir ="l")

      end else begin (dir "r")
{right}

      if null > 0 then begin
         for j := 0 to null do port[CoilDataPort] :=
XOBit;
      end;
      if single > 0 then begin
```

```
              for j := 0 to single do port[CoilDataPort] :=
SingleBit;
              end;
            if double > 0 then begin
              for j := 0 to double do port[CoilDataPort] :=
X1bit+X2bit;
            end;
          end;              (dir "r")


      end;                        (accelcount)


      ( Update lookup table pointers. )
      if upcase(dir) = 'R' then begin
        SinOfAngle := SinOfAngle-1;
      end else begin
        SinOfAngle := SinOfAngle+1;
      end;
      CosOfAngle := SinOfAngle + QuarterPi;


    end;                        (for SinOfAngle...)


  end;                        (steps)


  port[CoilDataPort] := $FF;
  if BladePos <= 0  then begin
{}      { if ShowSweep then writeln(' *** ERROR : STALL in
Sweeper SineMove Forward ');}
    BladePos := 0;
    beep;
    delay(1000);
  end;
end;


{ ****************************************************** }


end.^Z
```

```
!*******************************************************
!
!  Build Parameter File
!  Version 3.60
!
!  **********************************************
!  Part Name:                    Date:
!  Important Data:
!  last altered:
!  **********************************************
!  place options together inside of quotes;   use "" if no
options
!
""
!
!  General Parameters
!
800               Elevator board base address
100               elevator pitch
3.556             XY-only scale factor; Use 3.556 for Inches
and Slize res=1000
!!1, 0.0
!!A0, 0.0
17000             X-coordinate offsets
17000             Y-coordinate offsets
5000              Max number of bytes per block in Laser Queue
26000,26000   Minimum X and Y of vat area (for graphics
viewport)
39000,39000   Maximum X and Y of vat area
!
#TOP,"DC+"        ! Drift Correction on
!
!
#BTM,"ZW 30;                          ! Z-axis wait time in
seconds
        ZD 8;                         ! Z-axis dip depth in mm
```

```
        ZV 0.2;                           ! Z-axis velocity
parameter
        ZA 0.2"                       ! Z-axis acceleration
parameter
!********************************************************
MACHINE.PRM
!   MACHINE.PRM machine parameter file 05/18/89
!
SLA-250    !  machine type
620        !  maximum blade steps to cross vat
0.03       !  plunger steps per mil of elevator movement


BEAM.PRM
!  PROFILE Parameters Table
!  Version 3.60
!
5000,32767     beam rest position
!
!  Beam Profile Data
!
3                  number of profile sensors
3                  second sensor channel #
63104,55452    sensor #1 changed 3-24-89 MJH
0.045          1/2 mil hole multiplier to get mW
0.0116         1 mil
0.00592        2 mils changed 3-24-89 MJH
0.00072        4 mils
1              first sensor channel #
4752,6543      sensor #2 changed 3-24-89 MJH
0.040          1/2 mil hole multiplier to get mW
0.0102         1 mil
0.00776        2 mils changed 3-24-89 MJH
0.00063        4 mils
5
32767,32767    position of 2 mil hole (#3)
0.040          1/2 mil hole multiplier to get mW
0.0010         1 mil
```

```
0.00605          2 mils
0.00063          4 mils
!
!  Temperature Data
!
4                thermometer channel #
13               # points in thermistor calibration table
19900,10         temperature calibration table...
15720,15           format is resistance (Ohms), temperature
(C)
12490,20
10000,25
8057,30
6531,35
5327,40
4370,45
3604,50
2986,55
2486,60
2081,65
1749,70
!
!  Fast, Medium & Slow Calibration Delay Values
!
!  line format is Spiral time (ms), between points (secs,
1/10 sec res),
!  between rows (secs)
!
20,0,0           Fast: 20 ms, turnaround as quickly as
possible
50,0.5,5         Medium: 50 ms, 1/2 sec, 5 secs
100,20,120       Slow: 100 ms, 20 secs, 2 minutes
!
!  Slew Rate Limit Parameters
!
1000             maximum step in either axis
2                delay between step points in milliseconds
```

```
!**********************************************************
POWER.PRM
!   POWER V3.60 Parameters File
!
LASERPOWERTYPE=TOGGLE     LEVEL or UNKNOWN
!**********************************************************
SWEEP.PRM
!           SWEEP.PRM 05/18/89
!
1          !  NS numsweeps
10         !  P1  sweep velocity
100         !  G1  blade gap as a percent of next layer
thickness (ignore if NS=1)
10         !  P2
100        !  G2
10         !  P3
100        !  G3
10         !  P4
100        !  G4
10         !  P5
100        !  G5
10         !  P6
100        !  G6
10         !  P7
100        !  G7
0          !  BI bias when He laser is blocked
9          !  MD plunge Motor Delay : delay between plunger
motor pulses (ms)
3.0        !  PS PlungStart : inches plunger moves down to
its start position
4          !  UL UPLIM : bi-cell activate level
-4         !  LL LOWLIM: bi-cell activate level
0.125      !  BG BladeGapL0 - distance between liquid and
recoater blade (inches)
-1         !  NC Number of checks for leveling ( 0 -> 5 or
-1 for auto mode *** )
0.3        !  DA Draining elevator acceleration
```

```
0.5       !  DV Draining elevator velocity
0                            !      XP    eXtra    Platform
height(mils).ZSafeSweep=ZBladeLevel+60mil+XP
noshow    !  Show or No-Show sweep info ( S or N in the
first column )
!*********************************************************
ZSTAGE.PRM
!  ZSTAGE Parameters File
!  Version 3.60
!
""        command line options: /NEGZ, /S, /M
800         elevator control board I/O address
.5          acceleration parameter
1           velocity parameter
2000000     big distance (max movement for up or down)
100000      # of microsteps per inch
2000        timeout value
10000       ZBladeLevel
10000       ZLiquidLevel
10000       ZUnloadLevel
^Z
```

```
program AutoLevel;
uses crt,utility1,utlsweep,windows;
var
    junksc                  : integer;
    DisplayWind             : wind;
    ExitSave                : pointer;
    Done                    : boolean;
    HoldKey                 : char;
    theLevel                : integer;


{$F+}procedure ExitAutoLevel;{$F-}
begin
    CursorOn;
    DefaultWindow;
    ClrScr;
    ExitProc := ExitSave;
end;


procedure DrawMainScreen;
begin
    clrscr;
    centertext('This is the Surface Position Repeatability
POD',1);
    centertext('Auto-Levelling Program V1.1',2);
    centertext('Press L to Level, X to exit.',4);
end;


procedure DoAutoLevel;
begin
        centertext('Auto-Levelling in progress...',6);
        SetPlunger(-1,theLevel);
        centertext('Levelled at ',6);
        write(PlungerPos);
        writeln('           ');
        userwait;
        DrawMainScreen;
end;
```

```
begin
    { Initialize program. }
    ExitSave := ExitProc;
    ExitProc := @ExitAutoLevel;
    CursorOff;
    Done := false;

    { Initialize screen. }
    clrscr;
    DefineWindow(DisplayWind,5,5,75,20,2);
    FrameWindow(DisplayWind);
    ActivateWindow(DisplayWind);
    DrawMainScreen;

    { Read keys. }
    { "X" key exits. }
    { "L" key autolevels. }
    repeat
        repeat
            delay(100);
        until keypressed;
        HoldKey := upcase(ReadKey);
        if HoldKey = 'X' then Done := true;
        if HoldKey = 'L' then DoAutoLevel;
    until Done;
end.^Z
```

```
{ 02/01/89 JFT Made into a unit from Wayne Vinson's code.
  02/27/89 JFT Modified "Too High" or "Too Low" sections
to read until a peak is reached, then read until the
abs(level) is less than a threshold value.  The user is
adding or removing resin during this time.
  03/01/89 JFT Above fix only works well for resin
removal.  Go to modified older method with epsilon of 5.
Change user messages.
  05/04/89 JFT Fixed (?) the bug that caused repeated
adjustments when the bicell was bullseyed.  Changed user
messages and sounds.   Removed need to press key when
adjustment complete.
  05/25/89 JFT Use procedure HandleKeyboardRequest in
adjust resin level loops so that the user may abort
w/ctrl-c or break.
  06/16/89 JFT Lengthen move done by plunger from 40 to 60
when checking to see if we're on the bicell.  Also use
upLim and lowLim instead of twice upLim and twice lowLim.
  08/03/89 JFT In CheckLevel, if 2nd or 3rd readings are
0 then call it off the bicell.                 }
{ ****************************************************** }
unit UtlAdjust;
{ $ M 16384,0,0}
{$D+;I+}
{ ****************************************************** }
interface
uses Crt,Dos,Utility1,UtlSweep,UtlZStage,Windows;


procedure AddRemoveResin(var FinalLevel: integer);
p     r     o     c     e     d     u     r     e
procReadBiCell(displaydelay:integer;echo:boolean);
procedure LongReadBiCell(displaydelay:integer);
procedure procPlungerUp(echo:boolean);
procedure procPlungerDown(echo:boolean);


{ ****************************************************** }
implementation
```

```
const
   epsilon = 2;   { +/- bias variation used in add/remove
resin }

var
   opt,stopc : integer;
   velocity2 : real;
   key, junkkey : char;
   level     : integer;
   delaytime  : integer;
   onbicell,leveladjusted : boolean;
   tempstring : string;
   AlertWind,DataWind : wind;
{*******************************************************}
p      r      o      c      e      d      u      r      e
procReadBiCell(displaydelay:integer;echo:boolean);
           {If echo is true then write levels to screen}
var
   junkStr:string;
   sign    :string;
begin
   ReadBiCell('N',level);
   if echo then begin
     if level < 0 then sign := '+' else sign := '-';
{Reverse signs for display}
     if level = 0 then sign := '';              {0 gets no
sign}
     junkStr    :=    concat('The    liquid    level    is
',sign,IntStr(abs(level)));
     centerText(junkStr,1);
   end;
   delay(displaydelay);
end;
{*******************************************************}
procedure LongReadBiCell(displaydelay:integer);
begin
```

```
      repeat
          procReadBiCell(displaydelay,false);   (don't echo to
      levels to screen)
          until keypressed;
          key := Readkey;
      end;
      (******************************************************)
      procedure procPlungerUp(echo:boolean);
      begin
          leveladjusted := false;
          repeat
              PlungerUp(10,stopc);
              procReadBiCell(1,echo);
          until keypressed;
          junkkey := upcase(Readkey);
      end;
      (******************************************************)
      procedure procPlungerDown(echo:boolean);
      begin
          leveladjusted := false;
          repeat
              PlungerDown(10,stopc);
              procReadBiCell(1,echo);
          until keypressed;
          junkkey := upcase(Readkey);
      end;
      (******************************************************)
      procedure DoBeep(freq,time : integer);
        begin
              sound(freq);
              delay(time);
              nosound;
        end;
      (******************************************************)
      procedure DoFinalAdjustment;
        var
            i,level,tempint,returncode : integer;
```

76

```
        wasteKey                      : char;
    begin
      ActivateWindow(AlertWind);
      clrscr;
      if onbicell then begin { otherwise setplunger gets
pissed }
          centertext('Performing automated fine adjustment
of resin level.',2);
          centertext('Please stand by.',5);
          ActivateWindow(DataWind);
          clrscr;
          ReadBicell('N',level);
{}{          tempint := 8;}  { do course adjustment first
}
          tempint := 32;  { do course adjustment first }
          repeat
            HandleKeyboardRequest( wasteKey );
            if (level > uplim) then begin
                repeat
                    for i := 1 to tempint do begin
                        PlungerDown(1,ReturnCode);
                        delay(400 div tempint);
                    end; { of i }
                    ReadBiCell('N',level);
                until level < UpLim;
            end;
            if (level < lowlim) then begin
                repeat
                    for i := 1 to tempint do begin
                        PlungerUp(1,returnCode);
                        delay(400 div tempint);
                    end; { i }
                    ReadBiCell('N',level);
                until level > LowLim;
            end;
            clrscr;
```

```
            centertext('Pausing   to   allow   resin   to
settle.',1);
            delay(5000);    ( allow settling time )
            ClrScr;         ( Pause completed )
            tempint := 1; ( now do finer adjustment )
            ReadBicell('S',level);
         until (level < uplim) and (level > lowlim);
         ActivateWindow(AlertWind);
         clrscr;
         centertext('Resin level now adjusted for part
building.',4);
         leveladjusted := true;
         delay(2500);
         beep;
      end; ( if onbicell )
   end; ( of dofinaldjustment )
(*****************************************************)
procedure CheckLevel;
   ( reads and evaluates if on or off bicell
     and sets boolean bicell accordingly )
   var
      returncode,firstlevel,secondlevel,thirdlevel,tempint
: integer;
   begin
      ActivateWindow(AlertWind);
      ClrScr;
      onbicell := false;
      Centertext('Checking resin level.',1);
      Centertext('Please stand by.',5);
      firstlevel  := 0;
      secondlevel := 0;
      thirdlevel  := 0;
      ActivateWindow(DataWind);
      clrscr;
      ReadBicell('S',firstlevel);
      if (firstlevel > 2*uplim) or (firstlevel < 2*lowlim)
then onbicell := true
```

```
        else begin { first gave bias type reading .. could
still be dead on }
            PlungerUp(60,returncode);
            { This delay added to thwart the recurrent
adjustment bug. }
            Delay(3000);
            ReadBicell('S',secondlevel);
            PlungerDown(120,returncode);
            { This delay added to thwart the recurrent
adjustment bug. }
            Delay(3000);
            ReadBicell('S',thirdlevel);
            PlungerUp(60,returncode);
            { both 2nd and 3rd must not give bias reading
to be on bicell }
            (*
                if   not   (secondlevel
in[bias-epsilon..bias+epsilon]) and
            not (thirdlevel in[bias-epsilon..bias+epsilon])
then OnBicell := true;
            *)
            (*
            if ((secondlevel > uplim) or (secondlevel <
lowlim)) and
                ((thirdlevel > uplim) or (thirdlevel <
lowlim)) then
                OnBicell := true;
            *)
            if ( ( secondLevel > bias + epsilon ) or (
thirdLevel < bias - epsilon ) )
            then OnBicell := true;
            { The following was added to accomodate SLAs with
biases outside of the range -1..+1.  When off the bicell,
those SLAs showed as on the bicell.   This should catch
that case. --JFT }
            if ( secondLevel = bias ) or ( thirdLevel = bias
) then OnBicell := false;
```

```
      ActivateWindow(AlertWind);
    end; { else }
  end; { of checklevel }
{ ***************************************************** }
procedure CenterPlunger;
  var
    returncode,midplunge,plungemove : integer;
  begin
    midplunge := maxplungemoves div 2;
    plungemove := abs(midplunge - plungerpos);
        { always put plunger in mid position before
starting part }
        { for now always go all the way to top }
    plungerup(0,returncode);
    plungerdown(maxplungemoves div 2,stopc);
    update3dstatefile(zstagepos,plungerpos,returncode);
        { if tracking shows no problem then activate
following instead }
      {       if  plungerpos  <  midplunge  then
plungerdown(plungemove,stopc);
        if  p l u n g e r p o s  >  m i d p l u n g e  then
plungerup(plungemove,stopc);}
    FrameWindow(DataWind);
    ActivateWindow(DataWind);
    clrscr;
    centertext('Pausing to allow resin to settle.',1);
    delay(10000);  { wait 10 sec for level to stabilize
after
                        fast plunge move }
    ActivateWindow(AlertWind);
  end; { centerplunger }
{ ***************************************************** }
procedure AddRemoveResin(var FinalLevel: integer);
  const
    CoarseAdjustLim = 10;
  var
```

```
        tempint,oldlevel,plungemove,option,returncode     :
integer;
        key,wastekey : char;
        tempreal : real;
        PeakReached : boolean;
        MaxReading : integer;
begin
        DefineWindow(AlertWind,10,7,70,18,2);
        DefineWindow(DataWind,10,23,70,25,1);
        DefaultWindow;
        ClrScr;
        writeln;
        centerln(Product+' Resin Level Adjustment Utility');

        writeln;
        centerln('Copyright (C) 1989 by 3D Systems, Inc.');
        centerln('3D Systems StereoLithography System');
        FrameWindow(AlertWind);
        ( FrameWindow(DataWind);        )
        ( DataWind is framed in CenterPlunger )
        ActivateWindow(AlertWind);

        ( first see if already did level check )
        (   showsweep := true; )
        if not leveladjusted then begin
            centertext('Initializing     resin     adjustment
apparatus.',2);
            centertext('Please stand by.',5);
            CenterPlunger;
            CheckLevel;
            Delay(300);
            if OnBicell then begin
                ActivateWindow(AlertWind);
                ClrScr;
                centertext('The   resin   level   is   currently
in',2);
```

```
            centertext('an  acceptable  range  for  part
building.',3);
            centertext('Manual    adjustment    will    be
unnecessary.',5);
            DoFinalAdjustment;
            Update3DStateFile(ZStagePos,PlungerPos,stopc);

            exit;
        end; { if OnBicell }
        ActivateWindow(AlertWind);
        ClrScr;
        for tempint := 1 to 3 do begin
            beep;
            delay(100);
        end; { of tempint }
        centertext('The   resin   level   is   not   in   an
acceptable',2);
        centertext('range for part building.',3);
        centertext('A    MANUAL    adjustment    will    be
necessary:',5);
        centertext('Look at the white leveling pointer at
the',7);
        centertext('rear of the vat.',8);
        centertext('Is resin touching the pointer?',9);
        While keypressed do wastekey := readkey;  { catch
all previous keys }
        Wastekey := Readkey;   { get new key }

        { LEVEL TOO HIGH }

        If Upcase(Wastekey) = 'Y' then begin  { level too
high }
            ClrScr;
            centertext('The resin level is too high.',1);
            centertext('Please remove resin until the beep
sounds.',5);
```

```
              centertext('Stop removing resin when you hear
the beep.',6);
              PeakReached := false;
              MaxReading := 0;
              Repeat
                 HandleKeyboardRequest( wasteKey );
                 ActivateWindow(DataWind);
                 readbicell('N',level); { need quick read
here }
                 { delay(10);}
                 ActivateWindow(AlertWind);
                 if abs(level) > MaxReading then MaxReading
:= abs(level);
                 if   (abs(level)   <   MaxReading)   and
(MaxReading > 50)
                 then PeakReached := true;
{}{           Until (level < bias-epsilon) or (level >
bias+epsilon);}
{}{               Until PeakReached and (abs(level) <
CoarseAdjustLim); }
              Until  abs(level)  >  uplim+1{( bias )  +
epsilon};
              { bicell values negative at bicell top }
              centertext('Press any key to continue...',8);
              Repeat
                 DoBeep(100,1000);
                 { delay(50); }
              Until keypressed;
              wastekey := readkey;
              clrscr;
              centertext('User finished removing resin.',5);

              CheckLevel; { to check for too much liquid
removed }
              if not onbicell then begin
                 ClrScr;
```

EP 0 361 847 B1

```
                centertext('Resin level not in acceptable
range.',5);
                DoBeep(100,1000);
                delay(2000);
                addremoveresin(stopc);
            end; { if not onbicell }
            DoFinalAdjustment;
            Update3DStateFile(ZStagePos,PlungerPos,stopc);

            exit;
        end; { if level too high }


        { LEVEL TOO LOW }


        ClrScr;
        centertext('The resin level is too low.',1);
        centertext('Please add resin SLOWLY until the
beep sounds.',5);
        centertext('Stop adding resin when you hear the
beep.',6);
                PeakReached := false;
                MaxReading := 0;
                Repeat
                   HandleKeyboardRequest( wasteKey );
                   ActivateWindow(DataWind);
                   readbicell('N',level); { need quick read
here }
                   { delay(10);}
                   ActivateWindow(AlertWind);
                   if abs(level) > MaxReading then MaxReading
:= abs(level);
                   if   (abs(level)   <   MaxReading)   and
(MaxReading > 50)
                   then PeakReached := true;
{}{            Until (level < bias-epsilon) or (level >
bias+epsilon);}
```

84

```
{}{                    Until PeakReached and (abs(level) <
CoarseAdjustLim); }
              Until  abs(level)  >  uplim+1{(  bias  )  +
epsilon);
          centertext('Press any key to continue...',8);
          repeat
             DoBeep(100,1000);
             delay(50);
          until keypressed;
          wastekey := readkey;
          clrscr;
          centertext('User finished adding resin.',5);
          CheckLevel;  {  to  be  sure  before  attempting
finaladjustment }
          if not onbicell then begin
             CenterText('Resin  level  not  in  acceptable
range.',5);
             DoBeep(100,1000);
             delay(2000);
             addremoveresin(stopc);
          end; { if not onbicell }
          DoFinalAdjustment;
          Update3DStateFile(ZStagePos,PlungerPos,stopc);
          exit;
       end; { if not leveladjusted }
       clrscr;
       centertext('Resin level is now adjusted for part
building.',4);
       delay(2500);
       beep;
end; { addremoveresin }
(*******************************************************)
begin
     leveladjusted := false;
end.
^Z
```

```
{ ================================================================
     3D Systems StereoLithography System Software
  ================================================================


     RECOATER.PAS
     SLA-250 Recoater wiper and plunger Control Program


     ----------------------------------------------------------------


     Recent History:
       9/12/88    Ver 3.30    first released for breadboard
     testing
       10/17/88        Ver    3.301    modified    to    be
     utility/initialization for final SLA250
       11/15/88  Ver 3.31   copied from Recoat1 - use common
     utl*.inc files
       01/11/89 Ver 3.32  remove sweeper forward back --> use
     move move sweeper
       01/25/89    Ver 3.33    JFT removed sweeper velocity
     biasing --> pass desired velocity in in/sec to MoveBlade,
     SweeperForward or SweeperBack.  Checks constant SIMULATION
     to see if we want to run this as a simulation (no
     communication   with   SLA)   (useful   for   running   on
     workstations not attached to SLAs).
       01/30/89 JFT merged with Wayne's updated AddRemoveResin
     procedures.
       02/01/89 USES Windows.   Move AddRemoveResin to unit
     UtlAdjus.  USES UtlAdjus.
       02/16/89 Adjust Start Position sets new ZPlungeSetPos
     and sends the elevator to that position.
       03/07/89  JFT       Added exit proc to forward sweeper.


       03/09/89    JFT        Recalibrated sweep periods to
     account for final compiler options.
       03/10/89  JFT        Fixed UtlAdjust so that it may be
     broken out of.
```

```
    03/28/89    JFT  V3.42  Change  sweep  period  now
bullet-proofed to input.
    03/30/89  JFT V3.43 Write parameters to machine.prm
instead of zstage.prm.
    05/25/89  JFT V3.61 Allow user to break out of adjust
resin level loops.
    06/07/89 JFT V3.61B Make stirring easier to break out
of.
    06/15/89  JFT  V3.61C  Better  stirring  utility
(multi-speed).
    06/16/89  JFT  V3.61D  Better  bicell  check  (see
UtlAdjust.pas).
    06/16/89 JFT V3.61E Fix stir utility by using the
indexer's MA (Mode Alternate) command.
    07/05/89 JFT V3.61F Single Coil Holding Torque.
    07/21/89 JFT V3.62  Changed version #.
    07/24/89 JFT V3.63  Fixed adjust resin level (?).
-------------------------------------------------------}
{ $ M 16384,0,0}
{ $ D-;I+}
{R+}
uses    Crt,Dos,Utility1,UtlSweep,
UtlZStage,windows,UtlAdjust,Indexer;
{$I product.inc}


const
    VersionId = '3.63';
    Indent    = 19;
    epsilon = 1;  { +/- bias variation used in add/remove
resin }
    Simulation = false;   { Is this a simulation (no SLA)?
}


var
    opt,stopc : integer;
    SweepPeriod : real;
    key, junkkey : char;
```

```
      level       : integer;
      delaytime   : integer;
      onbicell,leveladjusted : boolean;
      tempstring : string;
      TopWind,BottomWind,IntroWind : wind;
      SaveExit : pointer;


  (********************************************************)
  (
  Procedure   CenterText(tempstring   :   string;RowNumber   :
  integer);
    begin
       gotoxy(1,rownumber);
       ClrEol;
       if length(tempString) >= (lo(WindMax)-lo(WindMin))
       then gotoxy(1,rownumber)
                                    e    l    s    e
  gotoxy(((lo(WindMax)-lo(WindMin)-length(tempstring))  div
  2),rownumber);
       write(tempstring);
    end;   }


  (********************************************************)
  procedure ExitRecoater;
  begin
     SweeperForward(3,stopc);
     CursorOn;
     ExitProc := SaveExit;
     Halt(0);
  end;
  (********************************************************)
  procedure DisplayLevel;
  var
     junkStr : string;
     sign : string[1];
  begin
     procReadBiCell(500,true);
```

88

```
end;

procedure DefaultWindow2;
begin
   DefaultWindow;
   window(1,1,80,22);
end;

procedure ShowPowerMenu;
  var
     i : integer;
     junkStr : string;
begin
   DefaultWindow2;
   ClrScr;
   FrameWindow(BottomWind);
{  ActivateWindow(BottomWind);
   DisplayLevel;}
   DefaultWindow2;
   centertext(Product+'   Recoater   Utility   Control
Program',1);
   writeln;
   centertext('Version   '+VersionId+'   Software   Release
'+Rel_3D,2);
   centertext('Copyright (C) 1989 by 3D Systems, Inc.',3);
   centertext('3D   Systems   Laser   StereoLithography
System',4);
   if   Simulation   then   centertext('SIMULATION   IN
PROGRESS',5);
   for i:=1 to 5 do writeln;
   FrameWindow(TopWind);
   ActivateWindow(TopWind);
   ClrScr;
   writeln('    1. Adjust Resin Level Utility ');
   writeln('    2. Sweep ');
   writeln('    3. Change Sweep Period');
   writeln('    4. Lower Liquid');
```

```
writeln('    5. Raise Liquid');
writeln('    6. Adjust Building Start Position');
writeln('    7. Stir Liquid');
write  ('    X. Exit');
DefaultWindow2;
centertext('Please make a selection.',18);
writeln;
end;


procedure WriteZStartLevel(NewStartZLevel:real);
const
    ParamFileName = '\3DSYS\MACHINE.XYZ';
    NewName       = '\3DSYS\MACHINE.PRM';


var
    IOerr,i,m,n,valcode : integer;
    j : longint;
    r : real;
    ParamFileLine, AppendText : str80;

    ParamFile,NewFile: text;
    InchDistanceStr  : str80;
    DirInfo          : SearchRec;
    InputLine        : string;
begin
    OpenParamFile := ParamFileName;

    assign(ParamFile,OpenParamFile);
    rewrite(ParamFile);
    assign(NewFile,NewName);
    reset(NewFile);
    while not eof(NewFile) do begin
        readln(NewFile,InputLine);
        writeln(ParamFile,InputLine);
    end;
    rewrite(NewFile);
```

```
     IOerr := IOresult;
     if IOerr <> 0 then begin
        OpenParamFile := ParamFileName;
        assign(ParamFile,OpenParamFile);
        reset(ParamFile);
        IOerr := IOresult;
        if IOerr <> 0 then OpenParamFile := ' '
     end; {IO error}
     if IOerr = 0 then begin
        i := 0;
        reset(ParamFile);
        repeat
           readln(paramFile,paramFileLine);
           writeln(newFile,paramFileLine);
        until paramFileLine = 'ZSTAGE.PRM';
        while (not eof(ParamFile)) and (i <= 9) do begin
           for j:=1 to 255 do ParamFileLine[i]:=' ';
           readln(ParamFile,ParamFileLine);
           if i < 7 then writeln(NewFile,ParamFileLine)
           else begin
              if i = 7 then appendText := '
   ZLiquidLevel';
                              if   i   =   7   t h e n
   writeln(NewFile,NewStartZLevel:12:10,appendText)
              else writeln(NewFile,ParamFileLine);
           end;
           if   (ParamFileLine[1]   <>   '   ')   and
   (ParamFileLine[1] <> '!') and
              (ParamFileLine[1] <> '"') then inc(i);
        end;
        while not eof(paramFile) do        .
        begin
           readln(paramFile,paramFileLine);
           writeln(newFile,paramFileLine);
        end;
     end;
```

```
    ZPlungeSetPos := NewStartZLevel + 0.315;   { 8mm lower
than Start. )
    close(NewFile);
    close(ParamFile);
end;


procedure ZSurfacePosition(var ZValue : real);
const
    ZVSlow = '0.100000';   { Slow speed for setting levels
)
var
    key : char;
    dumbkey,OK : boolean;
    StopCode : integer;
    ZVSetZ  : str10;
begin
    dumbkey := false;
    ActivateWindow(TopWind);
    clrscr;
    Centertext('Use     up     and     down     arrows     for
positioning,',1);
    Centertext('space to halt,',2);
    Centertext(' S to shift to slow speed,',3);
    Centertext('  and X when at the desired level.',4);
    ZVSetZ := ZVeloc;
    repeat
       OK := false;
       repeat
          key := 'z';
          HandleKeyboardRequest(key);
          key := upcase(key);
          if dumbkey then key:=' ';
          dumbkey:=false;
          if key in [#72,#80,' ','S','X'] then OK := true;
{ up and down arrows }
       until OK;
       case key of
```

```
       #72 :   begin
                       if    not    NegZStage    then
ZFreeMove(ZAccel,ZVSetZ,'UP  ') else

ZFreeMove(ZAccel,ZVSetZ,'DOWN');
                  dumbkey := true;
              end;
         #80 :   begin
                       if    not    NegZStage    then
ZFreeMove(ZAccel,ZVSetZ,'DOWN') else

ZFreeMove(ZAccel,ZVSetZ,'UP  ');
                  dumbkey := true;
           end;
         'S':   begin
                  ZVSetZ := ZVSlow;     ( change to slow
speed )
                  Centertext('Shifted to slow speed',6);
                  Centertext(' for final positioning.',7);
              end;
         'X':   begin
{}                 ZValue := -abs(ZStagePos);
                  exit;
              end;
        end;
    until false;
end;


procedure AdjustBuildStart;
var
    instring      : string;
    valcode       : integer;
    junkStr       : string;
    NewStart      : real;
    Temp          : real;
begin
    StopKey := true;
```

```
    Temp := ZLiquidLevel;
    ActivateWindow(BottomWind);
    clrscr;
    Centertext('Moving    elevator    to    current    start
position...',1);
    GotoZPos(1);
    Centertext('Position the elevator at the desired start
position.',1);
    ZSurfacePosition(ZLiquidLevel);
    clrscr;
    ActivateWindow(BottomWind);
    clrscr;
    junkStr := concat('A new build starting level has been
entered.');
    centertext(junkStr,1);
    ActivateWindow(TopWind);
    clrscr;
    centertext('Accept this new level ?',2);
    repeat
       delay(100)
    until Keypressed;
    if temp <> ZLiquidLevel then begin
          if    upcase(readkey)='Y'    then
WriteZStartLevel(ZLiquidLevel)
       else ZLiquidLevel := temp;
    end;
    StopKey := false;
    GoToZPos(2);    { Go to Check Resin Level position. }
{}{    ZReadParms;}
end;

procedure SetNewDelay;
var
    instring      : string;
    valcode       : integer;
    junkStr       : string;
    tempReal      : real;
```

```
begin
   ActivateWindow(BottomWind);
   junkStr  :=  concat('Enter  sweeper  period  [now
',RealStr(SweepPeriod,2), ' s]: ');
   centertext(junkStr,1);
   cursoron;
   readln(instring);
   if instring <> '' then begin
      tempReal := RealVal(instring,valcode);
      if (tempReal > maxSweepPeriod) then tempReal :=
maxSweepPeriod;
      if (tempReal < minSweepPeriod) then tempReal :=
minSweepPeriod;
   end;
   cursoroff;
   if (valcode = 0) and (instring<>'') then SweepPeriod :=
tempReal;
   junkStr  :=  concat('Sweeper  period  now  set  to
',RealStr(SweepPeriod,2),' seconds');
   centertext(junkStr,1);
   delay(3000);
end;

procedure GetSelection1;
begin
   repeat
      ActivateWindow(BottomWind);
      DisplayLevel;
      ActivateWindow(TopWind);
      HandleKeyboardRequest(key);
      key := upcase(key);
      if key in ['1'..'7','X'] then exit;
   until false;
end;

(*******************************************************)
procedure DoBeep(freq,time : integer);
```

```
    begin
        sound(freq);
        delay(time);
        nosound;
    end;


{*********************************************************}
procedure doUpLiquid;
begin
    ActivateWindow(BottomWind);
    procPlungerDown(true);
    ActivateWindow(TopWind);
end;
{*********************************************************}
procedure doDownLiquid;
begin
    ActivateWindow(BottomWind);
    procPlungerUp(true);
    ActivateWindow(TopWind);
end;
{*********************************************************}
procedure Stir;
var
    wasteKey        : char;
    endPos          : longInt;
    endPosStr       : string;
    abortStir,stop  : boolean;
    accel,veloc     : string;
  {------------------------------------------------------}
    procedure ElevatorCommand( theCmd : string );
    var
        response            : string;
    begin
        if theCmd <> '' then if SendCmdToIndexer(theCmd+'
',zTimeOut) <> 0
        then begin
            beep;
```

96

```
        end
        else if ReadResponseFromIndexer(response,zTimeOut)
<> 0
        then begin
            beep;
        end;
    end;
    {----------------------------------------------------}
begin
    endPos := trunc( zStepsPerInch * (-1) * ( zLiquidLevel
- 0.5 ) );
    Str( endPos , endPosStr );
    ActivateWindow(BottomWind);
    ClrScr;
    Write(' STIR fast/medium/slow (f/m/s) : ');
    repeat delay(100) until keypressed;
    wasteKey := UpCase(ReadKey);
    abortStir := false;
    case wasteKey of
        'S' : begin
                accel := '0.5';
                veloc := '1';
            end;
        'M' : begin
                accel := '5';
                veloc := '5';
            end;
        'F' : begin
                accel := '10';
                veloc := '10';
            end;
        else abortStir := true;
    end;
    if not abortStir then begin
        ClrScr;
        Write( ' STIRRING : press any key to abort...' );
        GoToZPos(2);
```

```
      ElevatorCommand( 'E MA A' + accel + ' V' + veloc );
      stop := false;
      ElevatorCommand( 'D' + endPosStr + ' G' );
      repeat
         if KeyPressed then stop := true;
         delay(100);
         if KeyPressed then stop := true;
      until ( stop );
      ClrScr;
      Write( ' Aborting stir operation...' );
      ElevatorCommand( 'K' );
      ZGoHome;
      GoToZPos(2);
   end;
   ClrScr;
   ActivateWindow(TopWind);
end;
{***********************************************************}

begin { ReCoater }
   TextBackground(Black);
   TextColor(White);
   SaveExit := ExitProc;
   ExitProc := @ExitRecoater;
   DefaultWindow;
   ClrScr;
   DefineWindow(TopWind,Indent-1,7,80-Indent,16,1);
   DefineWindow(BottomWind,10,23,70,25,1);
   DefineWindow(IntroWind,10,7,70,11,2);
   if Simulation then OnBicell := false;
   Read3DStateFile(ZStagePos,PlungerPos,stopc);
   SweepPeriod := DefaultPeriod;
   LevelAdjusted := false;
   delaytime := trunc(SweepPeriod);
   CursorOff;
   FrameWindow(IntroWind);
   ActivateWindow(IntroWind);
```

```
ClrScr;
CenterText('Elevator   moving   to   check   resin   level
position...',2);
if not Simulation then GoToZPos(2);
key := ' ';
DefaultWindow;
clrscr;
repeat
   ShowPowerMenu;
   ActivateWindow(BottomWind);
   ActivateWindow(TopWind);
   GetSelection1;
   case key of
      '1': AddRemoveResin(stopc);
      '2': MoveBlade(SweepPeriod,stopc);
      '3': SetNewDelay;
      '4': doDownLiquid;
      '5': doUpLiquid;
      '6': AdjustBuildStart;
      '7': Stir;
      'X': Halt(0);
   end;
   key := ' ';
until false;
CursorOn;
{ We exit through abort... we never reach here.    }
end.
```

While the invention as described herein has been directed to specific embodiments, various modifications thereto can be employed. For example, while excess polymerizable liquid has been described herein as being struck off by a doctor blade, other means for such removal can obviously be employed, such as rakes and the like. As another example, a radiation source and sensor have been described herein as means to detect the level of the upper surface of the bath of polymerizable fluid, whereas a wide variety of mechanical, electronic, pneumatic, and other devices can be used to detect this level. For example, an apparatus using a float has been described. Other modifications and improvements can be used without departing from the scope of the invention. Accordingly, it is not intended that the invention be limited, except by the appended claims.

## Claims

1. A method for stereolithographically forming a three-dimensional object (40) layer by layer, comprising the steps of:

    a) applying a layer (34) of polymerizable liquid onto a surface (15) of an object support means (12) or a previous layer;

b) levelling the layer (34) of polymerizable liquid on said surface (15) to a desired thickness by striking off any excess polymerizable liquid (302) from the applied layer (34);

c) applying a curing media in a preselected pattern onto the levelled layer (34) to sufficiently cure the layer so that it supports one or more subsequent layers (38) of polymerizable liquid to be cured, characterized in that said step a) comprises the steps of:

a1) providing said polymerizable liquid as a bath (11) contained in a container (10); and

a2) submerging said surface (15) of said object support means (12) or said previous layer to a position below the surface of said bath (11).

2. The method of claim 1, wherein said step b) comprises the step of using a smoothing member (26; 300; 400; 505) for striking off said excess liquid (302).

3. The method of claim 2, wherein the application of the curing media in step c) follows the completion of step b) after a short delay.

4. The method of claim 2, wherein the step of striking the smoothing member (26; 300; 400; 505) comprises sweeping said smoothing member (26; 300; 400; 505) in a horizontal plane and additionally delaying the application of said curing media after the horizontal sweeping of said smoothing member (26; 300; 400; 505) is completed.

5. The method of any of claims 2 - 4 wherein said step b) comprises:

striking said smoothing member (26; 300; 400; 505) in an opposite direction compared to the direction of striking of a previous stroke of the smoothing member (26; 300; 400; 505).

6. The method of any of claims 2 - 5 wherein said step b) comprises:

striking said smoothing member (26; 300; 400; 505) at least twice above the previously formed layer.

7. The method of claim 6 wherein the step b) comprises:

striking said smoothing member (26; 300; 400; 505) at least once over the previously formed layer at a first velocity; and

striking said smoothing member (26; 300; 400; 505) at least a second time over the previously formed layer at a second velocity different from the first velocity.

8. The method of either of claims 6 or 7 wherein said step b) comprises:

striking said smoothing member (26; 300; 400; 505) a first time over the previously formed layer with a first clerance (303, 404) between a lower surface of the smoothing member (26; 300; 400; 505) and an upper surface of the formed layer, and;

striking said smoothing member (26; 300; 400; 505) a second time over the previously formed layer with a second clearance (303, 404) between the lower surface of the smoothing member (26; 300; 400; 505) and the upper surface of the previously formed layer, wherein the second clearance is less than the first clearance.

9. The method of any of claims 2-7 wherein said step b) comprises:

striking said smoothing member (26; 300; 400; 505) over the previously formed layer with a clearance (303, 404) between a lower surface of the smoothing member (26; 300; 400; 505) and an upper surface of the previously formed layer which is different from the layer thickness.

10. The method of claim 9 wherein said step b) comprises:

striking said smoothing member (26; 300; 400; 505) over the previously formed layer a first time with a first clearance (303, 404) between a lower surface of the smoothing member (26; 300; 400; 505) and an upper surface of the previously formed layer; and

striking said smoothing member (26; 300; 400; 505) a second time over the previously formed layer with a second clearance (303, 404) between the lower surface of the smoothing member (26; 300; 400; 505) and the upper surface of the previously formed layer, wherein the first and second clearances are different.

**11.** The method of any of claims 2-10 wherein said step b) comprises:
varying the speed of the smoothing member (26; 300; 400; 505), to be able to tailor the smoothing member speed to the geometry of the three-dimensional object (40).

**12.** The method of any of claims 2-11 wherein said step b) comprises:
moving said object support means (12) to displace said layer (34) above the upper surface (20) of the bath (11) and then striking said smoothing member (26; 300; 400; 505).

**13.** The method of any of claims 2-11 wherein said step b) comprises:
striking said smoothing member (26; 300; 400; 505) in a plane above a plane of the working surface (20).

**14.** The method of any of claims 12 and 13 wherein, after striking, the previously formed layer is relatively displaced so that its upper surface is located one layer thickness below the working surface (20) and then the prescribed pattern of synergistic stimulation is applied.

**15.** The method of any of claims 1-14 wherein said polymerizable liquid is a photopolymer.

**16.** The method of any of claims 1-15 wherein said pattern of curing media is applied as said level layer is held at a working surface (20) which is being held at a substantially fixed level.

**17.** The method of claim 16 additionally comprising the steps of:
detecting a surface level (70, 80) of the liquid; and adjusting the detected surface level (70, 80) to the desired working surface (20).

**18.** The method of any of claims 1-17 wherein said curing media is radiation selected from the group consisting of ultraviolet radiation, infrared radiation, visible light, electron beams, x-rays, and gamma rays.

**19.** The method of any of claims 1-18 wherein the liquid is transformable upon exposure to ultraviolet radiation and said curing media is ultraviolet radiation.

**20.** The method of any of claims 2-19 wherein said smoothing member (26; 300; 400; 505) strikes at a speed from about 12.7 to about 250 mm per second (about 0.5 to 10 inches per second).

**21.** An apparatus for stereolithographically forming a three-dimensional object (40) layer by layer, comprising:
a) means (10, 11, 13, 14) for applying a layer (34) of polymerizable liquid onto a surface (15) of an object support means (12) or a previous layer;
b) means (26, 27, 30 to 33; 300; 400; 505) for leveling the layer (34) of polymerizable liquid by striking off any excess polymerizable liquid (302) from the applied layer (34).
c) means (24) for applying a preselected pattern of curing media onto said level layer (34) to sufficiently cure the layer so that it supports one or more subsequent layers (38, 40) of polymerizable liquid to be cured, characterized in that
said application means (10, 11, 13, 14) comprises:
a1) a container (10) including a bath (11) of said polymerizable liquid;
a2) means (13, 14) for submerging said surface (15) of said object support means (12) or a previous layer to a position below the surface of said bath (11).

**22.** The apparatus of claim 21, wherein said means (26, 27, 30 to 33; 300; 400; 505) for leveling comprises a smoothing member (26; 300; 400; 505).

**23.** The apparatus of claim 22, further comprising means (25) for starting the application of said curing media in step c) after a short delay.

**24.** The apparatus of claim 22, wherein said means for leveling comprises means (27, 30 - 33) for sweeping said smoothing member (26; 300; 400; 505) in a horizontal plane, and means (25) for delaying the application of said curing media after the horizontal sweeping of said smoothing member (26; 300; 400; 505) is completed.

25. The apparatus of any of claims 22-24 said member (26; 300; 400; 505) is stroke at least once in an opposite direction compared to the direction of striking of a previous stroke of the smoothing member (26; 300; 400; 505).

26. The apparatus of any of claims 22-25 comprising means for alternating the direction of striking with successive sweeps.

27. The apparatus of any of claims 22-26 wherein said means for leveling (26, 27, 30 to 33; 300; 400; 505) comprises means (25) for striking said smoothing member (26; 300; 400; 505) at least twice.

28. The apparatus of any of claims 22-27 wherein said means for leveling (26, 27, 30 to 33; 300; 400; 505) comprises:
means (25) for striking said smoothing member (26; 300; 400; 505) over the previously formed layer at least once with a first member velocity;
means (25) for striking said smoothing member (26; 300; 400; 505) at least a second time with a second smoothing member velocity; and means (25) for causing the first and second smoothing member velocities to be different.

29. The apparatus of any of claims 22-28 wherein said means for leveling (26, 27, 30 to 33; 300; 400; 505) comprises:
means (25) for striking said smoothing member (26; 300; 400; 505) at least once over the previously formed layer with a first clearance (303, 404) between a lower surface of the smoothing member (26; 300; 400; 505) and an upper surface of the previously formed layer;
means (25) for striking the smoothing member (26; 300; 400; 505) at least a second time over the previously formed layer with a second clearance (303, 404) between the lower surface of the smoothing member (26; 300; 400; 505) and the upper surface of the previously formed layer;
means (25) for causing the second clearance to be less than the first clearance.

30. The apparatus of any of claims 22-28 wherein said means for leveling comprises:
means (25) for sweeping said smoothing member (26; 300; 400; 505) over the previously formed layer with a value of clearance (303, 404) between a lower surface of the member (26; 300; 400; 505) and an upper surface of the previously formed layer which is different from the layer thickness.

31. The apparatus of any of claims 22-28 wherein said means for leveling comprises:
means (25) for striking said smoothing member (26; 300; 400; 505) a first time over the previously formed layer with a first clearance (303, 404) between a lower surface of the smoothing member (26; 300; 400; 505) and an upper surface of the previously formed layer; means (25) for striking said smoothing member (26; 300; 400; 505) a second time over the previously formed layer with a second clearance (303, 404) between the lower surface of the smoothing member (26; 300; 400; 505) and the upper surface of the previously formed layer; and
means (25) for causing the first and second clearances (303, 404) to be different and one of the first and second of clearances to be different from the layer thickness.

32. The apparatus of any of claims 22-31 wherein said smoothing member (26; 300; 400; 505) is striking at least once over the previously formed layer (34) with a first member velocity, and further comprising:
means for varying the speed of the smoothing member (26; 300; 400; 505) to be able to tailor the blade member speed to the geometry of the three-dimensional object (40).

33. The apparatus of any of claims 22-32 wherein the means for leveling (26, 27, 30 to 33; 300; 400; 505) comprises:
means (13, 14) for relatively displacing the previously formed layer (40) so that said layer (34), when applied, is displaced above a working surface (20); and
means (27, 30 to 33) for striking said smoothing member (26; 300; 400; 505) above the previously formed layer when said layer (34) is displaced above said working surface (20).

102

**34.** The apparatus of any of claims 22-32 wherein the means for <u>leveling</u> comprises:
means (27, 30-33) for <u>striking said</u> smoothing member (26; 300; 400; 505) in a plane above a desired working surface (20).

**35.** The apparatus of any of claims 22-34 wherein the means for <u>leveling</u> comprises:
adjustment screws (409) attached to said smoothing member (26; 300; 400; 505) for adjusting its vertical position; and
needles (401, 402) attached to the smoothing member (26; 300; 400; 505) for adjusting a gap between a lower surface of the smoothing member (26; 300; 400; 505) and the working surface (20).

**36.** The apparatus of claim 35 wherein the needles (401, 402) are retractable.

**37.** The apparatus of any of claims 22-36 wherein the smoothing member (26; 300; 400; 505) is a doctor blade.

**38.** The apparatus of any of claims 22 and 23 further comprising means (27, 30 to 33) to move the smoothing member (26; 300; 400; 505) in a horizontal plane.

**39.** The apparatus of any of claims 21-38 additionally comprising:
means (17, 18, 21, 22, 23, 130, 100, 95, 140) for holding the working surface substantially at a fixed level.

**40.** The apparatus of any of claims 21-39 additionally comprising:
means (21, 22, 130, 140) for detecting a surface level (70, 80, 82, 84) of the <u>liquid</u>; and
means (17, 18, 23, 95) for adjusting the detected surface level (70, 80, 82, 84) to the desired working surface (20).

**41.** The apparatus of any of claims 21-40 wherein said means (24) for applying a prescribed pattern of curing media comprises:
a source of curing media which produces radiation selected from the group consisting of ultraviolet radiation, infrared radiation, visible light, electron beams, x-rays, and gamma rays.

**42.** The apparatus of claim 41 wherein the <u>liquid</u> is transformable upon exposure to ultraviolet radiation and the source of curing media produces ultraviolet radiation.

**43.** The apparatus of any of claims 21-42 comprising:
means for <u>striking</u> the smoothing member (26; 300; 400; 505) at a speed from about 12.7 to about 250 mm per second (about 0.5 to 10 inches per second).

**Patentansprüche**

**1.** Ein Verfahren, um stereolithographisch ein dreidimensionales Objekt (40) Schicht um Schicht zu bilden, das folgende Schritte umfaßt:
a) eine Schicht (34) polymerisierbarer Flüssigkeit wird auf eine Fläche (15) eines Objektträgermittels (12) oder auf eine vorangehende Schicht aufgetragen;
b) die Schicht (34) polymerisierbarer Flüssigkeit auf der Fläche (15) wird durch Abstreifen überschüssiger polymerisierbarer Flüssigkeit von der aufgetragenen Schicht (34) auf eine gewünschte Dicke nivelliert (302);
c) ein Aushärtemedium wird in einem bestimmten Muster auf die nivellierte Schicht (34) aufgebracht, um die Schicht hinreichend auszuhärten, so daß sie eine oder mehrere nachfolgende Schichten (38) polymerisierbarer, auszuhärtender Flüssigkeit trägt,
dadurch gekennzeichnet, daß der Schritt a) die folgenden Schritte umfaßt:
a1) die polymerisierbare Flüssigkeit wird in Form eines Bades (11) bereitgestellt, das in einem Behälter (10) enthalten ist; und
a2) die Fläche (15) des Objektträgermittels (12) oder die vorangehende Schicht wird bis zu einer Lage eingetaucht, die unterhalb der Oberfläche des Bades (11) liegt.

**2.** Verfahren nach Anspruch 1, in dem der Schritt b) die Benutzung eines Glättglieds (26; 300; 400; 505) zum Abstreifen der überschüssigen Flüssigkeit (302) umfaßt.

**3.** Verfahren nach Anspruch 2, in dem das Aufbringen des Aushärtemediums gemäß Schritt c) nach einer kurzen Verzögerung der Vollendung des Schrittes b) folgt.

**4.** Verfahren nach Anspruch 2, in dem der Glättglied-Abstreifschritt (26; 300; 400; 505) ein Wischen des Glättglieds (26; 300; 400; 505) in einer horizontalen Ebene und zusätzlich eine Verzögerung des Aufbringens des Aushärtemediums umfaßt, sobald das horizontale Wischen des Glättglieds (26; 300; 400; 505) vollendet ist.

**5.** Verfahren nach einem der Ansprüche 2 bis 4, in dem der Schritt b) umfaßt:
ein Abstreifen des Glättglieds (26; 300; 400; 505) in einer Richtung, die im Vergleich zu der Abstreifrichtung eines früheren Striches des Glättglieds (26; 300; 400; 505) entgegengesetzt ist.

**6.** Verfahren nach einem der Ansprüche 2 bis 5, in dem der Schritt b) umfaßt:
das Glättglied (26; 300; 400; 505) streift mindestens zweimal über die zuvor gebildete Schicht.

**7.** Verfahren nach Anspruch 6, in dem der Schritt b) umfaßt:
das Glättglied (26; 300; 400; 505) streift mindestens einmal mit einer ersten Geschwindigkeit über die zuvor gebildete Schicht; und
das Glättglied (26; 300; 400; 505) streift mindestens ein zweites Mal mit einer zweiten Geschwindigkeit, die von der ersten Geschwindigkeit verschieden ist, über die zuvor gebildete Schicht.

**8.** Verfahren nach Anspruch 6 oder 7, in dem der Schritt b) umfaßt:
das Glättglied (26; 300; 400; 505) streift ein erstes Mal über die zuvor gebildete Schicht mit einem ersten Spiel (303; 404) zwischen einer unteren Fläche des Glättglieds (26; 300; 400; 505) und einer oberen Fläche der zuvor gebildeten Schicht; und
das Glättglied (26; 300; 400; 505) streift eine zweites Mal über die zuvor gebildete Schicht mit einem zweiten Spiel (303, 404) zwischen der unteren Fläche des Glättglieds (26; 300; 400; 505) und der oberen Fläche der zuvor gebildeten Schicht, wobei das zweite Spiel Kleiner ist als das erste Spiel.

**9.** Verfahren nach einem der Ansprüche 2 bis 7, in dem der Schritt b) umfaßt:
das Glättglied (26; 300; 400; 505) streift über die zuvor gebildete Schicht mit einem Spiel (303; 404) zwischen einer unteren Fläche des Glättglieds (26; 300; 400; 505) und einer oberen Fläche der zuvor gebildeten Schicht, das sich von der Schichtdicke unterscheidet.

**10.** Verfahren nach Anspruch 9, in dem der Schritt b) umfaßt:
das Glättglied (26; 300; 400; 505) streift ein erstes Mal über die zuvor gebildete Schicht mit einem ersten Spiel (303, 404) zwischen einer unteren Fläche des Glättglieds (26; 300; 400; 505) und einer oberen Fläche der zuvor gebildeten Schicht; und
das Glättglied (26; 300; 400; 505) streift ein zweites Mal über die zuvor gebildete Schicht mit einem zweiten Spiel (303; 404) zwischen der unteren Fläche des Glättglieds (26; 300; 400; 505) und der oberen Fläche der zuvor gebildeten Schicht, wobei das erste und das zweite Spiel sich unterscheiden.

**11.** Verfahren nach einem der Ansprüche 2 bis 10, in dem der Schritt b) umfaßt:
die Geschwindigkeit des Glättglieds (26; 300; 400; 505) wird variiert, um die Glättgliedgeschwindigkeit auf die Geometrie des dreidimensionalen Objekts (40) ausrichten zu können.

**12.** Verfahren nach einem der Ansprüche 2 bis 11, in dem der Schritt b) umfaßt:
das Objektträgermittel (12) wird bewegt, um die Schicht (34) über die obere Oberfläche (20) des Bades (11) zu verschieben, und dann streift das Glättglied (26; 300; 400; 505).

**13.** Verfahren nach einem der Ansprüche 2 bis 11, in dem der Schritt b) umfaßt:
das Glättglied (26; 300; 400; 505) streift in einer Ebene oberhalb einer Ebene der Arbeitsoberfläche (20).

EP 0 361 847 B1

**14.** Verfahren nach einem der Ansprüche 12 bzw. 13, in dem die zuvor gebildete Schicht nach dem Abstreifen relativ verschoben wird, so daß ihre obere Fläche um eine Schichtdicke unter der Arbeitsoberfläche (20) liegt, woraufhin das bestimmte Muster von synergistischer Anregung aufgebracht wird.

**15.** Verfahren nach einem der Ansprüche 1 bis 14, in dem die polymerisierbare Flüssigkeit ein Photopolymer ist.

**16.** Verfahren nach einem der Ansprüche 1 bis 15, in dem das Muster des Aushärtemediums aufgebracht wird, während die nivellierte Schicht an einer Arbeitsoberfläche (20) gehalten wird, die ihrerseits auf einem im wesentlichen konstanten Niveau gehalten wird.

**17.** Verfahren nach Anspruch 16, das zusätzlich die folgenden Schritte umfaßt:
ein Oberflächenniveau (70, 80) der Flüssigkeit wird festgestellt; und das festgestellte Oberflächenniveau (70, 80) wird auf die gewünschte Arbeitsoberfläche (20) justiert.

**18.** Verfahren nach einem der Ansprüche 1 bis 17, in dem das Aushärtemedium eine Strahlung ist, die aus der Gruppe ultravioletter Strahlung, infraroter Strahlung, sichtbaren Lichts, Elektronenstrahlen, Röntgenstrahlen und Gammastrahlen ausgewählt ist.

**19.** Verfahren nach einem der Ansprüche 1 bis 18, in dem die Flüssigkeit durch Belichtung mit ultravioletter Strahlung transformierbar ist, und in dem das Aushärtemedium ultraviolette Strahlung ist.

**20.** Verfahren nach einem der Ansprüche 2 bis 19, in dem das Glättglied (26; 30; 400; 505) mit einer Geschwindigkeit von etwa 12,7 bis etwa 250 mm pro Sekunde streift (ungefähr 0,5 bis 10 Inch pro Sekunde).

**21.** Vorrichtung, um stereolithographisch ein dreidimensionales Objekt (40) Schicht um Schicht zu bilden, die umfaßt:
a) Mittel (10, 11, 13, 14) zum Auftragen einer Schicht (34) polymerisierbarer Flüssigkeit auf eine Fläche (15) eines Objektträgermittels (12) oder auf eine vorangehende Schicht;
b) ein Mittel (26, 27, 30 bis 33; 300; 400; 505) zum Nivellieren der Schicht (34) polymerisierbarer Flüssigkeit durch Abstreifen überschüssiger polymerisierbarer Flüssigkeit (302) von der aufgetragenen Schicht (34);
c) ein Mittel (24) zum Aufbringen eines bestimmten Musters eines Aushärtemediums auf die nivellierte Schicht (34), um die Schicht hinreichend auszuhärten, so daß sie eine oder mehrere nachfolgende Schichten (38, 40) polymerisierbarer, auszuhärtender Flüssigkeit trägt,
dadurch gekennzeichnet, daß das Auftragemittel (10, 11, 13, 14) umfaßt:
a1) einen Behälter (10), der ein Bad (11) der polymerisierbaren Flüssigkeit enthält;
a2) ein Mittel (13, 14) zum Eintauchen der Fläche (15) des Objektträgermittels (12) oder der vorangehenden Schicht bis zu einer Lage unterhalb der Oberfläche des Bades (11).

**22.** Vorrichtung nach Anspruch 21, in der das Mittel zum Nivellieren (26, 27, 30 bis 33; 300; 400; 505) ein Glättglied (26, 300, 400, 505) umfaßt.

**23.** Vorrichtung nach Anspruch 22, die ferner ein Mittel (25) umfaßt, um das Aufbringen des Aushärtemediums gemäß c) nach einer kurzen Verzögerung zu starten.

**24.** Vorrichtung nach Anspruch 22, in der das Mittel zum Nivellieren Mittel (27, 30 bis 33) zum Wischen mit dem Glättglied (26, 300, 400, 505) in einer horizontalen Ebene umfaßt, und Mittel (25), die nach Vollendung des horizontalen Wischens des Glättglieds (26, 300, 400, 505) das Aufbringen des Aushärtemediums verzögern.

**25.** Vorrichtung nach einem der Ansprüche 22 bis 24, in der das Glättglied (26, 300, 400, 505) zumindest einmal in einer Richtung abstreift, die im Vergleich zu der Abstreifrichtung eines früheren Striches des Glättglieds (26, 300, 400, 505) entgegengesetzt ist.

**26.** Vorrichtung nach einem der Ansprüche 22 bis 25, die bei aufeinanderfolgenden Wischvorgängen Mittel zum Wechseln der Abstreifrichtung umfaßt.

105

27. Vorrichtung nach einem der Ansprüche 22 bis 26, in der das Nivellierungsmittel (26, 27, 30 bis 33; 300; 400; 505) Mittel (25) umfaßt, um mindestens zweimal mit dem Glättglied (26, 300, 400, 505) abzustreifen.

28. Vorrichtung nach einem der Ansprüche 22 bis 27, in der das Nivellierungsmittel (26, 27, 30 bis 33; 300; 400; 505) umfaßt:
Mittel (25), um das Glättglied mindestens einmal mit einer ersten Glättgliedgeschwindigkeit über die zuvor gebildete Schicht zu streifen; Mittel (25), um das Glättglied (26, 300, 400, 505) zumindest ein zweites Mal mit einer zweiten Glättgliedgeschwindigkeit zu streifen; und
Mittel (25), um die erste und zweite Glättgliedgeschwindigkeit unterschiedlich zu machen.

29. Vorrichtung nach einem der Ansprüche 22 bis 28, in der das Nivellierungmittel (26, 27, 30 bis 33; 300, 400, 505) umfaßt:
Mittel (25), um das Glättglied (26, 300, 400, 505) mindestens einmal über die zuvor gebildete Schicht zu streifen, mit einem ersten Spiel (303, 404) zwischen einer unteren Fläche des Glättglieds (26, 300, 400, 505) und einer oberen Fläche der zuvor gebildeten Schicht; Mittel (25), um das Glättglied (26, 300, 400, 505) mindestens ein zweites Mal über die zuvor gebildete Schicht zu streifen, mit einem zweiten Spiel (303, 404) zwischen der unteren Fläche des Glättglieds (26, 300, 400, 505) und der oberen Fläche der zuvor gebildeten Schicht;
Mittel (25), um das zweite Spiel kleiner als das erste Spiel zu machen.

30. Vorrichtung nach einem der Ansprüche 22 bis 28, in der das Nivellierungsmittel umfaßt:
Mittel (25), zum Wischen mit dem Glättglied (26, 300, 400, 505) über die zuvor gebildete Schicht, wobei das Spiel (303, 404) zwischen einer unteren Fläche des Glättglieds (26, 300, 400, 505) und einer oberen Fläche der zuvor gebildeten Schicht einen Wert hat, der von der Schichtdicke abweicht.

31. Vorrichtung nach einem der Ansprüche 22 bis 28, wobei das Nivellierungsmittel umfaßt:
Mittel (25), um das Glättglied (26, 300, 400, 505) ein erstes Mal über die zuvor geformte Schicht zu streifen, mit einem ersten Spiel (303, 404) zwischen einer unteren Fläche des Glättglieds (26, 300, 400, 505) und einer oberen Fläche der zuvor gebildeten Schicht; Mittel (25), um das Glättglied (26, 300, 400, 505) ein zweites Mal über die zuvor gebildete Schicht zu streifen, mit einem zweiten Spiel (303, 404) zwischen der unteren Fläche des Glättglieds (26, 300, 400, 505) und der oberen Fläche der zuvor gebildeten Schicht; und Mittel (25), um das erste und zweite Spiel (303, 404) verschieden zu machen, wobei das erste Spiel oder das zweite Spiel sich von der Schichtdicke unterscheidet.

32. Vorrichtung nach einem der Ansprüche 22 bis 31, in der das Glättglied (26, 300, 400, 505) zumindest einmal über die zuvor gebildete Schicht (34) streift, mit einer ersten Glättgliedgeschwindigkeit, und die ferner umfaßt:
Mittel zum Variieren der Geschwindigkeit des Glättglieds (26, 300, 400, 505), um die Glättgliedgeschwindigkeit auf die Geometrie des dreidimensionalen Objektes (40) auszurichten.

33. Vorrichtung nach einem der Ansprüche 22 bis 32, in der das Nivellierungsmittel (26, 27, 30 bis 33, 300, 400, 505) umfaßt:
Mittel (13, 14) zur Relativverschiebung der zuvor gebildeten Schicht (40), so daß die Schicht (34), wenn sie aufgetragen ist, über eine Arbeitsoberfläche (20) verschoben wird; und
Mittel (27, 30 bis 33), um das Glättglied (26, 300, 400, 505) oberhalb der zuvor gebildeten Schicht zu streifen, wenn die Schicht (34) über die Arbeitsoberfläche (20) verschoben ist.

34. Vorrichtung nach einem der Ansprüche 22 bis 32, in der das Nivellierungsmittel umfaßt:
Mittel (27, 30 bis 33), um das Glättglied (26, 300, 400, 505) in einer Ebene oberhalb einer gewünschten Arbeitsoberfläche (20) zu streifen.

35. Vorrichtung nach einem der Ansprüche 22 bis 34, in der das Nivellierungsmittel umfaßt:
Stellschrauben (409), die am Glättglied (26, 300, 400, 505) angebracht sind, um dessen vertikale Lage zu justieren; und Nadeln (401, 402), die am Glättglied (26, 300, 400, 505) angebracht sind, um einen Zwischenraum zwischen einer unteren Fläche des Glättglieds (26, 300, 400, 505) und der Arbeitsoberfläche (20) zu justieren.

**36.** Vorrichtung nach Anspruch 35, in der die Nadeln (401, 402) zurückziehbar sind.

**37.** Vorrichtung nach einem der Ansprüche 22 bis 36, in der das Glättglied (26, 300, 400, 505) eine Streichrakel ist.

**38.** Vorrichtung nach einem der Ansprüche 22 bzw. 23, die ferner Mittel (27, 30 bis 33) umfaßt, um das Glättglied (26, 300, 400, 505) in einer horizontalen Ebene zu bewegen.

**39.** Vorrichtung nach einem der Ansprüche 21 bis 38, die zusätzlich Mittel (17, 18, 21, 22, 23, 130, 100, 95, 140) umfaßt, um die Arbeitsoberfläche (20) auf einem im wesentlichen konstanten Niveau zu halten.

**40.** Vorrichtung nach einem der Ansprüche 21 bis 39, die zusätzlich umfaßt:
Mittel (21, 22, 130, 140), um ein Oberflächenniveau (70, 80, 82, 84) der Flüssigkeit festzustellen; und
Mittel (17, 18, 23, 95), um das festgestellte Oberflächenniveau (70, 80, 82, 84) auf die gewünschte Arbeitsoberfläche (20) zu justieren.

**41.** Vorrichtung nach einem der Ansprüche 21 bis 40, in der das Mittel (24) zum Aufbringen eines bestimmten Musters eines Aushärtemediums umfaßt:
eine Quelle eines Aushärtemediums, die Strahlung erzeugt, welche aus der Gruppe bestehend aus ultravioletter Strahlung, infraroter Strahlung, sichtbarem Licht, Elektronenstrahlung, Röntgenstrahlung und Gammastrahlung ausgewählt ist.

**42.** Vorrichtung nach Anspruch 41, in der die Flüssigkeit durch Belichtung mit ultravioletter Strahlung transformierbar ist, und in der die Quelle des Aushärtemediums ultraviolette Strahlung erzeugt.

**43.** Vorrichtung nach einem der Ansprüche 21 bis 42, die Mittel umfaßt, um das Glättglied (26, 300, 400, 505) mit einer Geschwindigkeit zwischen etwa 12,7 und etwa 250 mm pro Sekunde zu streifen (ungefähr 0,5 bis 10 Inch pro Sekunde).

**Revendications**

**1.** Un procédé pour former couche par couche un objet tridimensionnel (40) par stéréolithographie, comprenant les étapes suivantes :
a) application d'une couche (34) de liquide polymérisable sur une surface (15) d'un moyen support d'objet (12) ou une couche précédente ;
b) mise à niveau de la couche (34) de liquide polymérisable sur cette surface (15) à une épaisseur souhaitée en arasant tout liquide polymérisable (302) en excès de la couche appliquée (34) ;
c) application selon un motif prédéterminé d'un agent de durcissement sur la couche mise à niveau (34) pour durcir suffisamment la couche afin qu'elle supporte une ou plusieurs couches ultérieures (38) de liquide polymérisable à durcir, caractérisé en ce que
ladite étape a) comprend les étapes consistant à :
a1) disposer le liquide polymérisable en un bain (11) contenu dans un conteneur (10) ; et
a2) submerger ladite surface (15) du moyen support d'objet (12) ou de la couche précédente jusqu'à une position située au-dessous de la surface du bain (11).

**2.** Le procédé de la revendication 1, dans lequel l'étape b) comprend l'étape d'utilisation d'un organe d'égalisation (26 ; 300 ; 400 ; 505) pour araser le liquide en excès (302).

**3.** Le procédé de la revendication 2, dans lequel l'application de l'agent de durcissement à l'étape c) suit l'achèvement de l'étape b) après un bref délai.

**4.** Le procédé de la revendication 2, dans lequel l'étape d'arasage de l'organe d'égalisation (26 ; 300 ; 400 ; 505) comprend le balayage par cet organe d'égalisation (26 ; 300; 400 ; 505) dans un plan horizontal et, en outre, l'application différée de l'agent de durcissement après achèvement du balayage horizontal de l'organe d'égalisation (26 ; 300 ; 400 ; 505).

**5.** Le procédé de l'une des revendications 2 à 4, dans lequel l'étape b) comprend :
l'arasage par l'organe d'égalisation (26 ; 300 ; 400 ; 505) dans un sens contraire au sens d'arasage d'un arasage précédent de l'organe d'égalisation (26 ; 300 ; 400 ; 505).

6. Le procédé de l'une des revendications 2 à 5, dans lequel l'étape b) comprend :
l'arasage par l'organe d'égalisation (26 ; 300 ; 400 ; 505) au moins deux fois au-dessus de la couche précédemment formée.

7. Le procédé de la revendication 6, dans lequel l'étape b) comprend :
l'arasage par l'organe d'égalisation (26 ; 300 ; 400 ; 505) au moins une fois au-dessus de la couche précédemment formée, à une première vitesse ; et
l'arasage par l'organe d'égalisation (26 ; 300 ; 400 ; 505) au moins une seconde fois au-dessus de la couche précédemment formée, à une seconde vitesse différente de la première vitesse.

8. Le procédé de l'une des revendications 6 ou 7, dans lequel l'étape b) comprend :
l'arasage par l'organe d'égalisation (26 ; 300 ; 400 ; 505) une première fois au-dessus de la couche précédemment formée, avec un premier jeu (303, 404) entre une surface inférieure de l'organe d'égalisation (26 ; 300 ; 400 ; 505) et une surface supérieure de la couche formée, et
l'arasage par l'organe d'égalisation (26 ; 300 ; 400 ; 505) une seconde fois au-dessus de la couche précédemment formée, avec un second jeu (303, 404) entre la surface inférieure de l'organe d'égalisation (26 ; 300 ; 400 ; 505) et la surface supérieure de la couche précédemment formée, le second jeu étant inférieur au premier jeu.

9. Le procédé de l'une des revendications 2 à 7, dans lequel l'étape b) comprend :
l'arasage par l'organe d'égalisation (26 ; 300 ; 400 ; 505) au-dessus de la couche précédemment formée, avec un jeu (303, 404) entre une surface inférieure de l'organe d'égalisation (26 ; 300 ; 400 ; 505) et une surface supérieure de la couche précédemment formée, jeu différent de l'épaisseur de la couche.

10. Le procédé de la revendication 9, dans lequel l'étape b) comprend :
l'arasage par l'organe d'égalisation (26 ; 300 ; 400 ; 505) une première fois au-dessus de la couche précédemment formée avec un premier jeu (303 ; 404) entre une surface inférieure de l'organe d'égalisation (26 ; 300 ; 400 ; 505) et une surface supérieure de la couche précédemment formée ; et
l'arasage par l'organe d'égalisation (26 ; 300 ; 400 ; 505) une seconde fois au-dessus de la couche précédemment formée avec un second jeu (303, 404) entre la surface inférieure de l'organe d'égalisation (26 ; 300 ; 400 ; 505) et la surface supérieure de la couche précédemment formée, le premier et le second jeu étant différents.

11. Le procédé de l'une des revendications 2 à 10, dans lequel l'étape b) comprend :
la variation de la vitesse de l'organe d'égalisation (26 ; 300 ; 400 ; 505) afin de pouvoir ajuster la vitesse de l'organe d'égalisation (26 ; 300 ; 400 ; 505) à la géométrie de l'objet tridimensionnel (40).

12. Le procédé de l'une des revendications 2 à 11, dans lequel l'étape b) comprend :
le déplacement du moyen support d'objet (12) pour déplacer la couche (34) au-dessus de la surface supérieure (20) du bain (11) puis l'arasage par l'organe d'égalisation (26 ; 300 ; 400 ; 505).

13. Le procédé de l'une des revendications 2 à 11, dans lequel l'étape b) comprend :
l'arasage par l'organe d'égalisation (26 ; 300 ; 400 ; 505) dans un plan situé au-dessus d'un plan de la surface de travail (20).

14. Le procédé de l'une des revendications 12 et 13 dans lequel, après l'arasage, la couche précédemment formée est déplacée relativement de manière que sa surface supérieure se situe une épaisseur de couche au-dessous de la surface de travail (20), puis le motif prescrit de stimulation synergique est appliqué.

15. Le procédé de l'une des revendications 1 à 14, dans lequel le liquide polymérisable est un photopolymère.

16. Le procédé de l'une des revendications 1 à 15, dans lequel le motif de l'agent de durcissement est appliqué lorsque la couche mise à niveau est maintenue à l'endroit d'une surface de travail (20) qui est maintenue à un niveau pratiquement fixe.

17. Le procédé de la revendication 16, comprenant en outre les étapes suivantes :
détection d'un niveau de surface (70, 80) du liquide ; et
ajustement du niveau de surface détecté (70, 80) à la surface de travail souhaitée (20).

18. Le procédé de l'une des revendications 1 à 17, dans lequel l'agent de durcissement est un rayonnement choisi dans le groupe formé par le rayonnement ultraviolet, le rayonnement infrarouge, la lumière visible, les faisceaux d'électrons, les rayons X et les rayons gamma.

19. Le procédé de l'une des revendications 1 à 18, dans lequel le liquide peut être transformé par exposition à un rayonnement ultraviolet, et l'agent de durcissement est un rayonnement ultraviolet.

20. Le procédé de l'une des revendications 2 à 19, dans lequel l'organe d'égalisation (26 ; 300 ; 400 ; 505) arase à une vitesse comprise entre environ 12,7 et environ 250 mm par seconde (environ 0,5 à 10 pouces par seconde).

21. Un dispositif pour former couche par couche un objet tridimensionnel (40) par stéréolithographie, comprenant :
a) des moyens (10, 11, 13, 14) d'application d'une couche (34) de liquide polymérisable sur une surface (15) d'un moyen support d'objet (12) ou une couche précédente ;
b) des moyens (26, 27, 30 à 33 ; 300 ; 400 ; 505) de mise à niveau de la couche (34) de liquide polymérisable sur cette surface (15) à une épaisseur souhaitée en arasant tout liquide polymérisable (302) en excès de la couche appliquée (34) ;
c) des moyens (24) d'application d'un motif prédéterminé d'un agent de durcissement sur la couche mise à niveau (34) pour durcir suffisamment la couche afin qu'elle supporte une ou plusieurs couches ultérieures (38) de liquide polymérisable à durcir, caractérisé en ce que
les moyens d'application (10, 11, 13, 14) comprennent :
a1) un conteneur (10) comprenant un bain (11) du liquide polymérisable ;
a2) des moyens (13, 14) pour submerger ladite surface (15) du moyen support d'objet (12) ou une couche précédente jusqu'à une position située au-dessous de la surface du bain (11).

22. Le dispositif de la revendication 21, dans lequel les moyens (26, 27, 30 à 33 ; 300 ; 400 ; 505) pour la mise à niveau comprennent un organe d'égalisation (26 ; 300 ; 400 ; 505).

23. Le dispositif de la revendication 22, comprenant en outre des moyens (25) pour démarrer l'application de l'agent durcissant à l'étape c) après un bref délai.

24. Le dispositif de la revendication 22, dans lequel les moyens de mise à niveau comprennent des moyens (27, 30 à 33) pour faire balayer cet organe d'égalisation (26 ; 300 ; 400 ; 505) dans un plan horizontal et des moyens (25) pour différer l'application de l'agent de durcissement après achèvement du balayage horizontal de l'organe d'égalisation (26 ; 300 ; 400 ; 505).

25. Le dispositif de l'une des revendications 22 à 24, où l'on fait araser l'organe d'égalisation (26 ; 300 ; 400 ; 505) au moins une fois dans un sens contraire au sens d'arasage d'un arasage précédent de l'organe d'égalisation (26 ; 300 ; 400 ; 505).

26. Le dispositif de l'une des revendications 22 à 25, comprenant des moyens pour faire alterner le sens d'arasage lors des balayages successifs.

27. Le dispositif de l'une des revendications 22 à 26, dans lequel les moyens de mise à niveau (26, 27, 30 à 33 ; 300 ; 400 ; 505) comprennent des moyens (25) pour faire araser l'organe d'égalisation (26 ; 300 ; 400 ; 505) au moins deux fois.

28. Le dispositif de l'une des revendications 22 à 27, dans lequel les moyens de mise à niveau (26, 27, 30 à 33 ; 300 ; 400 ; 505) comprennent :
des moyens (25) pour faire araser l'organe d'égalisation (26 ; 300 ;
400 ; 505) au-dessus de la couche précédemment formée au moins une fois avec une première vitesse d'organe ;

des moyens (25) pour faire araser l'organe d'égalisation (26 ; 300 ; 400 ; 505) au moins une seconde fois avec une seconde vitesse d'organe d'égalisation (26 ; 300 ; 400 ; 505) ; et

des moyens (25) pour rendre différente la première et la seconde vitesse de l'organe d'égalisation (26 ; 300 ; 400 ; 505).

29. Le dispositif de l'une des revendications 22 à 28 dans lequel les moyens de mise à niveau (26, 27, 30 à 33 ; 300 ; 400 ; 505) comprennent :

des moyens (25) pour faire araser l'organe d'égalisation (26 ; 300 ; 400 ; 505) au moins une première fois au-dessus de la couche précédemment formée, avec un premier jeu (303, 404) entre une surface inférieure de l'organe d'égalisation (26 ; 300 ; 400 ; 505) et une surface supérieure de la couche formée ;

des moyens (25) pour faire araser l'organe d'égalisation (26 ; 300 ; 400 ; 505) au moins une seconde fois au-dessus de la couche précédemment formée, avec un second jeu (303, 404) entre la surface inférieure de l'organe d'égalisation (26 ; 300 ; 400 ; 505) et la surface supérieure de la couche précédemment formée ;

des moyens (25) pour rendre le second jeu inférieur au premier jeu.

30. Le dispositif de l'une des revendications 22 à 28, dans lequel les moyens de mise à niveau comprennent :

des moyens (25) pour faire balayer l'organe d'égalisation (26 ; 300 ; 400 ; 505) au-dessus de la couche précédemment formée, avec une valeur de jeu (303, 404) entre une surface inférieure de l'organe d'égalisation (26 ; 300 ; 400 ; 505) et une surface supérieure de la couche précédemment formée, jeu différent de l'épaisseur de la couche.

31. Le dispositif de l'une des revendications 22 à 28, dans lequel les moyens de mise à niveau comprennent :

des moyens (25) pour faire araser l'organe d'égalisation (26 ; 300 ; 400 ; 505) une première fois au-dessus de la couche précédemment formée avec un premier jeu (303 ; 404) entre une surface inférieure de l'organe d'égalisation (26 ; 300 ; 400 ; 505) et une surface supérieure de la couche précédemment formée ; et

des moyens (25) pour faire araser l'organe d'égalisation (26 ; 300 ; 400 ; 505) une seconde fois au-dessus de la couche précédemment formée avec un second jeu (303, 404) entre la surface inférieure de l'organe d'égalisation (26 ; 300 ; 400 ; 505) et la surface supérieure de la couche précédemment formée ;

des moyens (25) pour rendre différents le premier et le second jeu (303, 404) et rendre l'un des premier et second jeux différents de l'épaisseur de couche.

32. Le dispositif de l'une des revendications 22 à 31, dans lequel l'organe d'égalisation (26 ; 300 ; 400 ; 505) arase au moins une fois au-dessus de la couche précédemment formée (34) avec une première vitesse d'organe d'égalisation (26 ; 300 ; 400 ; 505), et comprenant en outre :

des moyens pour faire varier la vitesse de l'organe d'égalisation (26 ; 300 ; 400 ; 505) afin de pouvoir ajuster la vitesse de l'organe d'égalisation (26 ; 300 ; 400 ; 505) à la géométrie de l'objet tridimensionnel (40).

33. Le dispositif de l'une des revendications 22 à 32, dans lequel les moyens de mise à niveau (26, 27, 30 à 33 ; 300 ; 400 ; 505) comprennent :

des moyens (13, 14) pour déplacer relativement la couche précédemment formée (40) de manière que ladite couche (34), lorsqu'elle est appliquée, soit déplacée au-dessus d'une surface de travail (20) ; et

des moyens (27, 30 à 33) pour faire araser l'organe d'égalisation (26 ; 300 ; 400 ; 505) au-dessus de la couche précédemment formée lorsque cette couche (34) est déplacée au-dessus de la surface de travail (20).

34. Le dispositif de l'une des revendications 22 à 32, dans lequel les moyens de mise à niveau comprennent :

des moyens (27, 30 à 33) pour faire araser l'organe d'égalisation (26 ; 300 ; 400 ; 505) dans un plan situé au-dessus d'une surface de travail souhaitée (20).

35. Le dispositif de l'une des revendications 22 à 34, dans lequel les moyens de mise à niveau comprennent :

des vis de réglage (409) fixées à l'organe d'égalisation (26 ; 300 ; 400 ; 505) pour régler sa position verticale ; et

des aiguilles (401, 402) reliées à l'organe d'égalisation (26 ; 300 ; 400 ; 505) pour régler un intervalle entre une surface inférieure de l'organe d'égalisation (26 ; 300 ; 400 ; 505) et la surface de travail (20).

36. Le dispositif de la revendication 35, dans lequel les aiguilles (401, 402) sont rétractables.

37. Le dispositif de l'une des revendications 22 à 36, dans lequel l'organe d'égalisation (26 ; 300 ; 400 ; 505) est une raclette.

38. Le dispositif de l'une des revendications 22 et 23, comprenant en outre des moyens (27, 30 à 33) pour déplacer l'organe d'égalisation (26 ; 300 ; 400 ; 505) dans un plan horizontal.

39. Le dispositif de l'une des revendications 21 à 38, comprenant en outre :

des moyens (17, 18, 21, 22, 23, 130, 100, 95, 140) pour maintenir la surface de travail pratiquement à un niveau fixe.

40. Le dispositif de l'une des revendications 21 à 39, comprenant en outre :

des moyens (21, 22, 130, 140) pour détecter un niveau de surface (70, 80, 82, 84) du liquide ; et des moyens (17, 18, 23, 95) pour ajuster le niveau de surface détecté (70, 80, 82, 84) à la surface de travail souhaitée (20).

41. Le dispositif de l'une des revendications 21 à 40, dans lequel les moyens (24) pour appliquer un motif prescrit d'agent de durcissement comprennent :

une source d'agent de durcissement qui produit un rayonnement choisi dans le groupe formé par le rayonnement ultraviolet, le rayonnement infrarouge, la lumière visible, les faisceaux d'électrons, les rayons X et les rayons gamma.

42. Le dispositif de la revendication 41, dans lequel le liquide est transformable par exposition à un rayonnement ultraviolet et la source d'agent de durcissement produit un rayonnement ultraviolet.

43. Le dispositif de l'une des revendications 21 à 42, comprenant :

des moyens pour faire araser l'organe d'égalisation (26 ; 300 ; 400 ; 505) à une vitesse allant d'environ 12,7 à environ 250 mm par seconde (environ 0,5 à 10 pouces par seconde).

FIG. 1.

FIG. 2.

FIG. 3.

FIG. 4.

FIG. 5.

FIG. 6.

FIG_2_

FIG.8.

FIG.9.

FIG. 10.

FIG. 11.

FIG. 12.

BLADE MOVEMENT →

*FIG_13_*

300

302

303

305

304

*FIG_14_*

400

401

402

*FIG_15_*

409

405

406

407

408

403

404

117

BLADE
MOVEMENT

506

α2

505

507

α1

*FIG_16_*

*FIG_17_*

*FIG_18_*

*FIG_19_*

*FIG_20_*

118

FIG_21_

FIG_22_

FIG. 23a.

EP 0 361 847 B1

741 — N ◇ BLVAL-BIAS <LOWLIM ◇ — Y (LEVEL HAS FALLEN)

Y (PLUNGER AT UPPER LIMIT)

728 — ◇ PLUNGPOS =Ø ◇

N (PLUNGER NOT AT LOWER LIMIT)

DISPLAY MESSAGE # 3-1 — 742

SEND PULSE TO RAISE PLUNGER — 729

◇ KEY PRESSED ◇ — 743
N
Y

UPDATE PLUNGPOS AND DISPLAY POSITION — 730

SET ADD/FRAME LIQUID FLAG — 744

IMPLEMENT AUTO PLUNG PERIOD DELAY — 731

◇ BLVAL-BIAS <LOWLIM ◇ — 745
N
Y

DISPLAY MESSAGE # 3-2 — 746

FIG. 23b

FIG. 23c

FIG_23d

EP 0 361 847 B1

714 → LIMIT SWITCH ACTIVATED — N → 715 SWEEP RECOATER TO REAR W VELOCITY .5 IN/SEC → 716 LIMIT SWITCH ACTIVATED WITHIN 2 SEC — N → 720 LIMIT SWITCH ACTIVATED WITHIN 2 SEC

LIMIT SWITCH ACTIVATED → Y

LIMIT SWITCH ACTIVATED WITHIN 2 SEC → Y

720 → N
721

722 SWEEP=SN
N
Y

DISPLAY MESSAGE #3-5 AND ABORT

747 DE-ENERGIZE SWEEPER STEPPER MOTOR → 748 LOWER PLATFORM TO SUBMERGE TOP LAYER BY 25 LAYER (N+1)

749 IMPLEMENT SETTLING DELAY USING ZW

750 PROCESS LAYER N+1 VECTORS

751 DRAW LAYER N+1 → ETC

FIG. 23e